# EUROPEAN PATENT APPLICATION

(11) **EP 1 623 956 A1**
(43) Date of publication of application: **08.02.2006**
(21) Application number: 04728037.5
(22) Date of filing: 16.04.2004
(51) Int. Cl.: C01B 3/02, C01B 13/02, H01M 8/02, H01M 8/06, C25B 1/02

(54) **FUEL FOR FUEL BATTERY, FUEL BATTERY, AND POWER GENERATING METHOD USING SAME**

(30) Priority: 18.04.2003 JP 2003114695; 06.10.2003 JP 2003347649
(71) Applicant: Japan Techno Co., Ltd, Ota-ku, Tokyo 146-0085 (JP)
(72) Inventor: OMASA, Ryushin, Fujisawa-shi, Kanagawa 2510033 (JP); TANIOKA, Akihiko, Ota-ku, Tokyo 1450061 (JP); MINAGAWA, Mie, Minato-ku, Tokyo 1080074 (JP)
(74) Representative: Gervasi, Gemma
(86) International application number: PCT/JP2004/005497
(87) International publication number: WO 2004/092059

(57) **Abstract**

A single cell comprising a fuel electrode, an air electrode, and an electrolytic layer or hollow layer interposed between those electrodes, or a fuel cell comprised of a stack of these single cells, wherein a supply port is formed on the fuel electrode side for supplying a hydrogen-based/oxygen-based mixed gas obtained by electrolyzing an electrolyte fluid by agitating and stirring and collecting the resulting gas; moreover the fuel electrode to which the hydrogen-based/oxygen-based mixed gas is supplied is gas-permeable. The hydrogen-based/oxygen-based mixed gas contains H, H₂, H₃, and/or HD, OH, ¹⁶O, and O₂.

## Description

### Field of the Invention

The present invention relates to fuel for a fuel cell, a fuel cell and a generating method for that fuel and fuel cell made from a novel hydrogen-based/oxygen-based mixed gas obtained by vibrating and stirring and electrolyzing an electrolyte fluid.

### Background of the Invention

To generate electricity from fuel cells of the related art, hydrogen is supplied to the fuel electrode (usually the negative electrode), and oxygen or air is supplied to the air electrode (usually the positive electrode). The reason for this method is that if only hydrogen is supplied to the fuel electrode, then the

2H₂ → 4H⁺ + 4e⁻

chemical reaction does not develop. Also if a gas containing oxygen or air is not supplied to the air electrode then the chemical reaction

O₂ + 4H⁺ +4e⁻ → 2H₂O

does not occur.

A related technology disclosed in JP-A No. 348694/2002 utilized Brown's gas as a fuel for fuel cells. However in the case of this technology, a separator was required to separate the hydrogen and oxygen. This separator was a large factor in raising the unit price of the fuel. Separating the oxygen and hydrogen was of course assumed indispensable for the above chemical reactions.

Moreover forming an electrolytic layer within the fuel cell is indispensable in fuel cells up to now. The type of fuel cell also determined the type of electrolytic material for forming the electrolytic layer. For example, potassium hydroxide is the electrolytic material in alkali (soluble) fuel cells (AFC), phosphoric acid is the electrolytic material in phosphoric acid fuel cells (PAFC), lithium carbonate or potassium carbonate is the electrolytic material in molten carbonate fuel cells (MCFC), stabilized zirconium is the electrolytic material in solid oxygen fuel cells (SOFC), and ion exchange film is the electrolytic material in polymer electrolyte fuel cells (PEFC), so that the use of electrolytic materials is indispensable and these electrolytic layers prove an obstacle toward making the fuel cell more compact and inexpensive.

### Summary of the Invention

A first object of the present invention is to provide a fuel cell comprised of a novel hydrogen-based/oxygen-based mixed gas or hydrogen-based gas capable of being utilized in fuel cells.

A second object of the present invention is to provide a fuel for fuel cells comprised of a novel hydrogen-based/oxygen-based mixed gas or hydrogen-based gas.

A third object of the present invention is to provide a novel fuel cell not containing electrolytic layers.

A fourth object of the present invention is to provide a fuel cell and method for generating electricity utilizing a novel hydrogen-based/oxygen-based mixed gas or hydrogen-based gas as the fuel.

In other words, in order to achieve the above objects, the present invention provides a hydrogen-based/oxygen-based mixed gas characterized in containing H and, H₂ and, H₃ and/or HD and, OH and, ¹⁶O, and O₂. According to an aspect of the present invention, the hydrogen-based/oxygen-based mixed gas contains:
H₂: 55 to 70 mole%
H: 0.12 to 0.45 mole%
H₃ and HD totaling: 0.03 to 0.14 mole%
OH: 0.3 to 1.2 mole%
¹⁶O: 1.0 to 4.2 mole%
O₂: 5 to 27 mole%.

In another aspect of the present invention, the hydrogen-based/oxygen-based mixed gas is obtained by utilizing a hydrogen-based/oxygen-based mixed gas generating means including:
(A) an electrolysis tank for storing the electrolyte fluid;
(B) an electrolyzing means including a pair of electrodes made from a negative electrode material and a positive electrode material installed so as to make contact with the electrolyte fluid stored inside the electrolysis tank:
(C) a vibro-stirring means for vibration-stirring of the electrolyte fluid stored inside the electrolysis tank: and
(D) a gas trapping means for trapping hydrogen-based gas and oxygen gas generated by the electrolyzing means for electrolyzing the electrolyte fluid stored inside the electrolysis tank.

To further achieve the above objects, the present invention provides a material for fuel cells made from hydrogen-based/oxygen-based mixed gas.

To still further achieve the above objects, the present invention provides a hydrogen-based gas characterized in containing H and, H₂ and, H₃ and/or HD and, OH. In this aspect of the present invention, the hydrogen-based gas is obtained by a hydrogen-based gas generating means including:
(A) an electrolysis tank for storing the electrolyte fluid;
(B) an electrolyzing means including a pair of electrodes made from a negative electrode material and a positive electrode material installed so as to make contact with the electrolyte fluid stored inside the electrolysis tank, and a power supply for applying a voltage across the negative electrode material and the positive electrode material;
(C) a vibro-stirring means for vibration-stirring of the electrolyte fluid stored inside the electrolysis tank: and
(D) a gas trapping means for trapping hydrogen-based gas generated by the electrolyzing means for electrolyzing the electrolyte fluid stored inside the electrolysis tank.

To further achieve the above objects, the present invention provides fuel for a fuel cell comprised of hydrogen-based gas.

To achieve the above objects, the present invention provides a fuel cell characterized in including a single cell or a stack of single cells containing a fuel electrode, an air electrode, and a hollow layer or electrolytic layer interposed between them, wherein, a supply port is formed on the fuel electrode side for supplying hydrogen-based gas obtained by a hydrogen-based gas generating means including:
(A) an electrolysis tank for storing the electrolyte fluid;
(B) an electrolyzing means including a pair of electrodes made from a negative electrode member and a positive electrode member installed so as to make contact with the electrolyte fluid stored inside the electrolysis tank, and a power supply for applying a voltage across the negative electrode member and the positive electrode member;
(C) a vibro-stirring means for vibration-stirring of the electrolyte fluid stored inside the electrolysis tank; and
(D) a gas trapping means for trapping hydrogen-based gas generated by the electrolyzing means for electrolyzing the electrolyte fluid stored inside the electrolysis tank; moreover
the fuel electrode to which the hydrogen-based gas is supplied is gas-permeable.

To further achieve the above objects, the present invention provides a fuel cell characterized in including a single cell or a stack of single cells containing a fuel electrode, an air electrode, and a hollow layer or electrolytic layer interposed between them,
wherein, a supply port is formed on the fuel electrode side or on both the fuel electrode side and the air electrode side for supplying hydrogen-based/oxygen-based mixed gas obtained by utilizing a hydrogen-based/oxygen-based mixed gas generating means including:
(A) an electrolysis tank for storing the electrolyte fluid;
(B) an electrolyzing means including a pair of electrodes made from a negative electrode member and a positive electrode member installed so as to make contact with the electrolyte fluid stored inside the electrolysis tank, and a power supply for applying a voltage across the negative electrode member and the positive electrode member;
(C) a vibro-stirring means for vibration-stirring of the electrolyte fluid stored inside the electrolysis tank; and
(D) a gas trapping means for trapping hydrogen-based gas and oxygen-based gas generated by the electrolyzing means for electrolyzing the electrolyte fluid stored inside the electrolysis tank,
and the electrode on the side supplied with the hydrogen-based/oxygen-based mixed gas is gas-permeable.

In another aspect of the present invention, the vibro-stirring means is comprised of at least one vibration generating means, and a vibration-stirring member made up of at least one vibrating rod linked to the vibration generating means and at least one vibrating blade installed on the vibrating rod.

To further achieve the above objects, the present invention provides an electrical generating method utilizing a fuel cell, and characterized by oscillating a vibrating motor at 10 to 500 Hz by utilizing an inverter, and transmitting that oscillation to a vibration adaptive absorbing means via a vibrating rod, and by oscillating the vibrating blades in one or multiple stages on the vibrating rod at an amplitude of 0.01 to 30.0 millimeters as well as a frequency of 500 to 30,000 revolutions per minute, supplies a hydrogen-based gas obtained by electrolysis during vibration-stirring of the electrolyte fluid, to the fuel cell.

To still further achieve the above objects, the present invention provides an electrical generating method utilizing a fuel cell, and characterized in that by oscillating a vibrating motor at 10 to 500 Hz by utilizing an inverter, and transmitting that oscillation to a vibration adaptive absorbing means via a vibrating rod, and by oscillating the vibrating blades in one or multiple stages on the vibrating rod at an amplitude of 0.01 to 30.0 millimeters as well as a frequency of 500 to 30,000 revolutions per minute, a hydrogen-based/oxygen-based mixed gas obtained by electrolysis during vibration-stirring of the electrolyte fluid is supplied to the fuel cell.

To yet further achieve the above objects, the present invention provides an electrical generating method for supplying electricity utilizing a fuel cell, and characterized in that by oscillating a vibrating motor at 10 to 500 Hz by utilizing an inverter, and transmitting that oscillation to a vibration adaptive absorbing means via a vibrating rod, and by oscillating the vibrating blades in one or multiple stages on the vibrating rod at an amplitude of 0.01 to 30.0 millimeters as well as a frequency of 500 to 30,000 revolutions per minute, supplies a hydrogen-based/oxygen-based mixed gas obtained by electrolysis during vibration-stirring of the electrolyte fluid, as a fuel to the gas permeable fuel electrode side or both the gas permeable fuel electrode side and the gas-permeable air electrode side of a single cell or a stack of laminated single cells containing a fuel electrode, and an air electrode, and a hollow layer interposed between the fuel electrode and the air electrode; for generating electricity.

The invention as described above, renders the following effects.
(1) The hydrogen-based/oxygen-based mixed gas or hydrogen-based gas of this invention exhibits amazingly high energy efficiency (capable of generating 2 to 3.5 times the electrical power) as a fuel for fuel cells compared to when conventional hydrogen gas is utilized. This effect is assumed to stem from the OH among the fuel elements, and further due to the H, H₃ and/or HD.
(2) The hydrogen-based/oxygen-based mixed gas or hydrogen-based gas of this invention is extremely safe compared to Brown's gas and moreover is capable of being stored. The gas elements amazingly showed no changed after one to two months, and consequently maintained the electrical generating capacity as immediately after production.
(3) Conventional Brown's gas is very hazardous and cannot be compressed. However, the hydrogen-based/oxygen-based mixed gas or hydrogen-based gas of this invention is capable of being safely compressed up to approximately 100 to 300 kg/cm2 and maintains the same electrical generating capacity.
(4) The hydrogen-based/oxygen-based mixed gas or hydrogen-based gas of this invention is capable of generating 2 to 3.5 times the electrical power compared to conventional hydrogen gas when used as a fuel in conventional fuel cells.
(5) The hydrogen-based/oxygen-based mixed gas or hydrogen-based gas of this invention does not require forming an electrolytic layer which is a required condition conventional fuel cells. Instead, only a hollow layer need be installed to prevent the fuel electrode and the air electrode from shorting. The cost can therefore be reduced since no electrolytic layer is required.
(6) The fuel cell of this invention not requiring an electrolytic layer is simple to manufacture, with a low manufacturing cost, and along with lower repair costs, the probability of an equipment breakdown is also reduced.
(7) In the fuel cell utilizing conventional hydrogen gas, the gas being supplied must be heated to approximately 80°C in order to accelerate the reaction between the hydrogen and oxygen. The temperature must also be maintained at 80°C in order to prevent condensation. However, the hydrogen-based/oxygen-based mixed gas or hydrogen-based gas of this invention does not require heating.

### Brief Description of the Drawings

FIG. 1 is a cross sectional view showing one example of the hydrogen-based/oxygen-based mixed gas generating means of this invention;
FIG. 2 is a plan (flat) view showing the hydrogen-based/oxygen-based mixed gas generating means of FIG. 1;
FIG. 3 is a side view of the gas generating means of FIG. 1;
FIG. 4 is a cross sectional view showing one example of another hydrogen-based/oxygen-based mixed gas generating means of this invention;
FIG. 5 is a plan (flat) view showing the hydrogen-based/oxygen-based mixed gas generating means of FIG. 4;
FIG. 6 is a cross sectional view showing the hydrogen-based/oxygen-based mixed gas generating means of FIG. 4;
FIG. 7 is an enlarged cross sectional view of a fragment of the gas generating means of FIG. 1 or FIG. 4;
FIG. 8A is a perspective view showing the structure of the electrode group;
FIG. 8B is a frontal view showing the structure of the electrode group;
FIG. 9A is a frontal view showing the insulation frame comprising the electrode group;
FIG. 9B is a frontal view showing the electrode comprising the electrode group;
FIG. 10 is an enlarged cross sectional view of a fragment of the gas generating means of FIG. 4;
FIG. 11 is an enlarged cross sectional view of the section for installing the vibrating rod onto the vibration member of the gas generating means of FIG. 1 or FIG. 4;
FIG. 12 is an enlarged cross sectional view of a variation of the section for installing the vibrating rod onto the vibration member;
FIG. 13 is an enlarged cross sectional view of the section for installing the vibrating blade onto vibrating rod of the gas generating means of FIG. 1 or FIG. 4;
FIG. 14 is a graph showing the relation between the extent of flutter and the length of the vibrating blade;
FIG. 15 is a cross sectional view showing a variation of the vibro-stirring means;
FIG. 16 is a cross sectional view showing a variation of the vibro-stirring means;
FIG. 17 is a cross sectional view showing a variation of the vibro-stirring means;
FIG. 18 is a cross sectional view showing a variation of the vibro-stirring means;
FIG. 19 is a cross sectional view showing a variation of the vibro-stirring means;
FIG. 20 is a cross sectional view showing the vibro-stirring means installed on the electrolysis tank to comprise the hydrogen-based/oxygen-based mixed gas generating means of this invention;
FIG. 21 is a cross sectional view of the vibro-stirring means shown in FIG. 20;
FIG. 22 is a flat view of the vibro-stirring means shown in FIG. 20;
FIG. 23A is a flat view of the laminated piece;
FIG. 23B is a flat view of the laminated piece;
FIG. 23C is a flat view of the laminated piece;
FIG. 24A is a cross sectional view showing the sealed state of the electrolysis tank per the laminated piece;
FIG. 24B is a cross sectional view showing the sealed state of the electrolysis tank per the laminated piece;
FIG. 25A is a cross sectional view of the laminated piece;
FIG. 25B is a cross sectional view of the laminated piece;
FIG. 25C is a cross sectional view of the laminated piece;
FIG. 25D is a cross sectional view of the laminated piece;
FIG. 25E is a cross sectional view of the laminated piece;
FIG. 26 is a cross sectional view showing a variation of the vibro-stirring means;
FIG. 27 is a cross sectional view showing one example of the hydrogen-based/oxygen-based mixed gas generating means of this invention;
FIG. 28 is a cross sectional view of the gas generating means of FIG. 27;
FIG. 29 is a cross sectional view of the gas generating means of FIG. 27;
FIG. 30 is an enlarged cross sectional view of the section showing the vicinity of the electrical insulation region of the vibrating rod;
FIG. 31 is a perspective view of the electrical insulation region of the vibrating rod;
FIG. 32 is a flat view of the electrical insulation region of the vibrating rod;
FIG. 33 is a side view of the insulated type vibro-stirring means;
FIG. 34 is a cross sectional view of the insulated type vibro-stirring means;
FIG. 35 is a cross sectional view of the insulated type vibro-stirring means;
FIG. 36 is a cross sectional view showing the insulated type vibro-stirring means;
FIG. 37 is a drawing showing the electrode support blade;
FIG. 38 is a cross sectional view of the insulated type vibro-stirring means;
FIG. 39 is a cross sectional view of the insulated type vibro-stirring means;
FIG. 40 is a cross sectional view showing one example of the hydrogen-based/oxygen-based mixed gas generating means of this invention;
FIG. 41 is a cross sectional view of the gas generating means of FIG. 40;
FIG. 42 is a cross sectional view of the gas generating means of FIG. 40;
FIG. 43 is a fragmentary cross sectional view showing one example of the hydrogen-based/oxygen-based mixed gas generating means of this invention;
FIG. 44 is a cross sectional view of the gas generating means of FIG. 43;
FIG. 45 is a concept view showing one example of the insulated type vibro-stirring means;
FIG. 46 is a concept view showing one example of the insulated type vibro-stirring means;
FIG. 47 is a concept view showing one example of the insulated type vibro-stirring means;
FIG. 48 is a fragmentary cross sectional view showing one example of the insulated type vibro-stirring means;
FIG. 49 is a side view showing a section of the vibro-stirring means of FIG. 48;
FIG. 50 is a side view showing a section of the insulated type vibro-stirring means;
FIG. 51 is a cross sectional view showing one example of the hydrogen-based/oxygen-based mixed gas generating means of this invention;
FIG. 52 is a cross sectional view showing one example of the hydrogen-based/oxygen-based mixed gas generating means of this invention;
FIG. 53 is a cross sectional view of the gas generating means of FIG. 52;
FIG. 54 is a cross sectional view showing one example of the hydrogen-based/oxygen-based mixed gas generating means of this invention;
FIG. 55 is a cross sectional view of the gas generating means of FIG. 54;
FIG. 56 is a perspective view of the cylindrical titanium web case making up the electrode member;
FIG. 57 is a frontal view of the electrode member;
FIG. 58A is a concept view showing the connection of the vibration generating means to the vibration stirring member;
FIG. 58B is a concept view showing the connection of the vibration generating means to the vibration stirring member;
FIG. 58C is a concept view showing the connection of the vibration generating means to the vibration stirring member;
FIG. 58D is a concept view showing the connection of the vibration generating means to the vibration stirring member;
FIG. 58E is a concept view showing the connection of the vibration generating means to the vibration stirring member;
FIG. 59 is a drawing showing the gas trapping means of the hydrogen-based/oxygen-based mixed gas generating means of this invention;
FIG. 60 is a pictorial diagram showing one example of the safety device when feeding hydrogen-based/oxygen-based mixed gas to the fuel electrode of the fuel cell from the hydrogen-based/oxygen-based mixed gas generating means of this invention;
FIG. 61 is a perspective view showing a variation of the lid member;
FIG. 62 is a pictorial diagram of the fuel cell for implementing the electrical generating method of this invention;
FIG. 63 is a graph showing a portion of data obtained by quantitative analysis of the hydrogen-oxygen mixed gas (raw gas);
FIG. 64 is a graph showing a portion of data obtained by quantitative analysis of the hydrogen-oxygen mixed gas (processed gas);
FIG. 65 is a cross sectional view showing one example of another hydrogen-based/oxygen-based mixed gas generating means of this invention;
FIG. 66 is a cross sectional view of the gas generating means of FIG. 65;
FIG. 67 is an enlarged fragmentary view of the gas generating means of FIG. 65;
FIG. 68 is a cross sectional view showing one example of the sealing means of the vibrating rod section;
FIG. 69 is an exploded view of the structure of the compact, polymer electrolyte fuel cell;
FIG. 70 is a drawing showing the external appearance of the assembled fuel cell with the structure of FIG. 69;
FIG. 71 is a spectrograph of the flame obtained by combusting the hydrogen-based/oxygen-based mixed gas of this invention;
FIG. 72 is a drawing showing an example of the safety device utilizing the hydrogen-based/oxygen-based mixed gas of this invention;
FIG. 73 is a drawing showing one example of the structure of the solid polymer electrolyte fuel cell;
FIG. 74 is a drawing showing a model of the structure of the fuel cell;
FIG. 75 is concept drawing of a methanol fuel cell;
FIG. 76 is a concept drawing of a single solid oxygen fuel cell; and
FIG. 77 is an enlarged perspective view of a section of the fuel cell of FIG. 76.

### Detailed Description of the Preferred Embodiments

The embodiments are hereafter described in detail while referring to the drawings. Members or sections in the drawings possessing identical functions are assigned the same reference numerals.

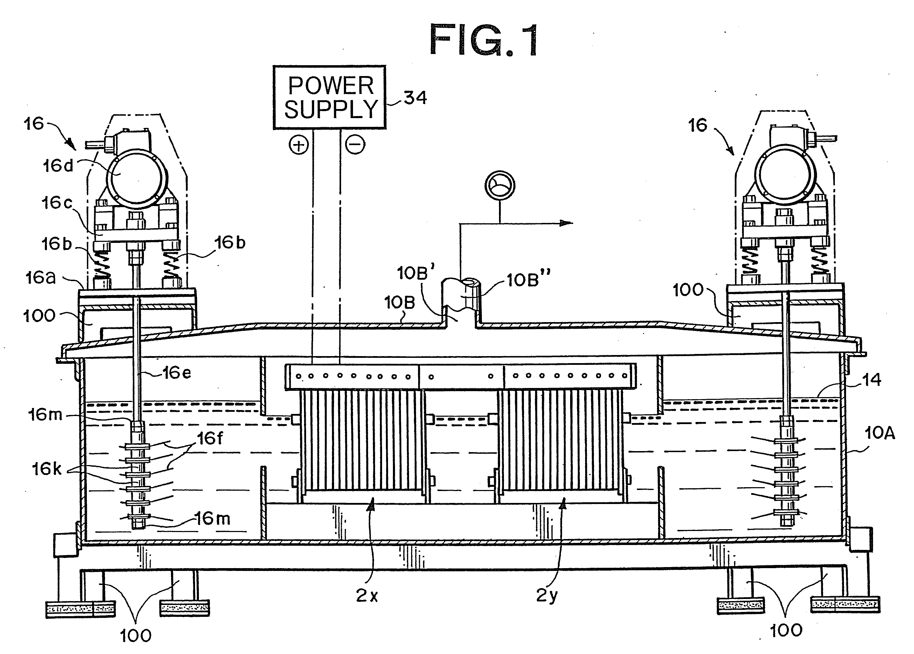

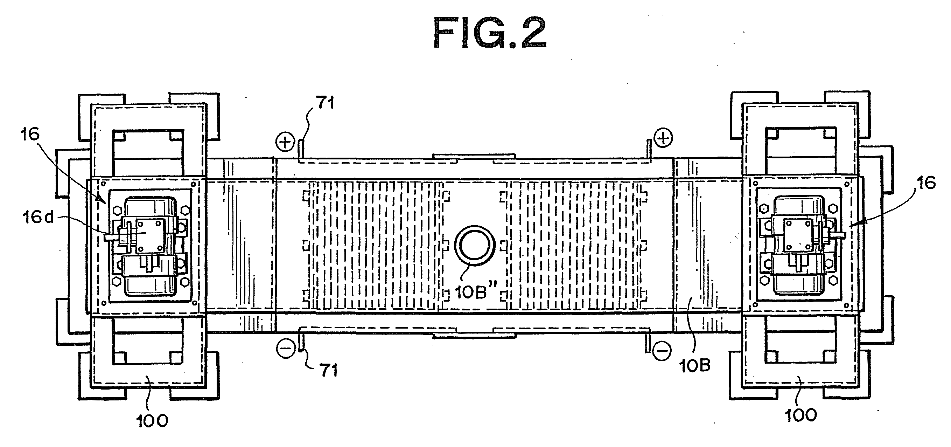

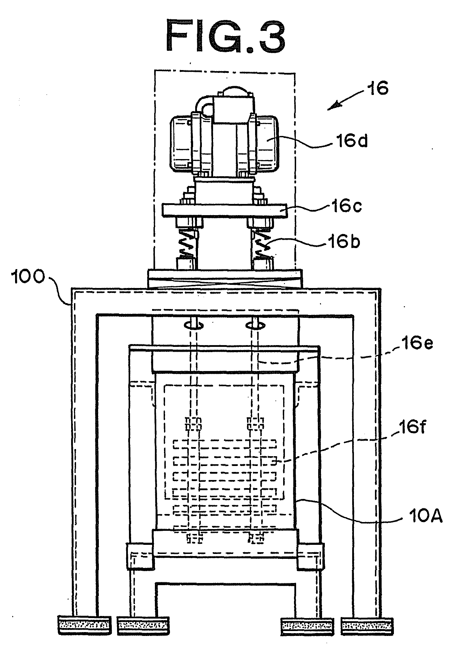

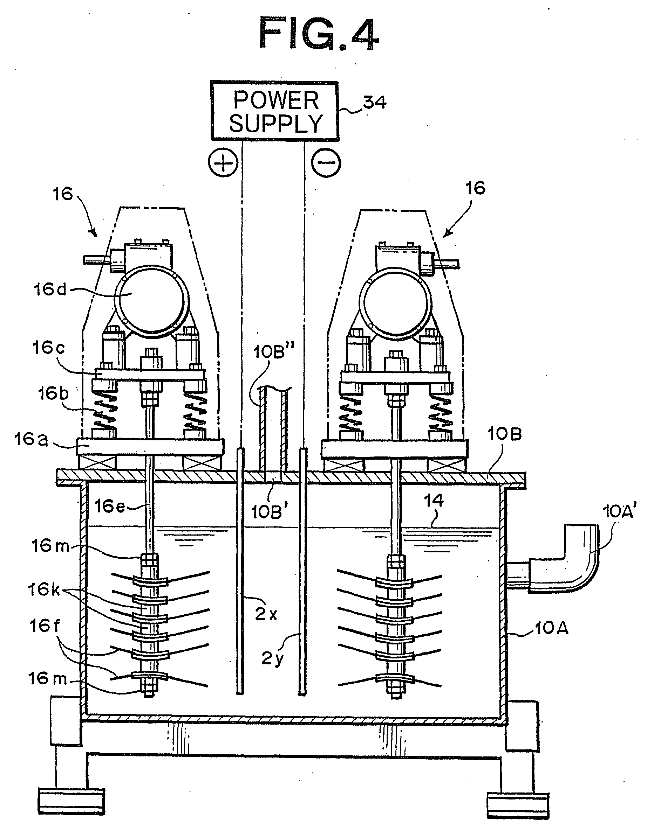

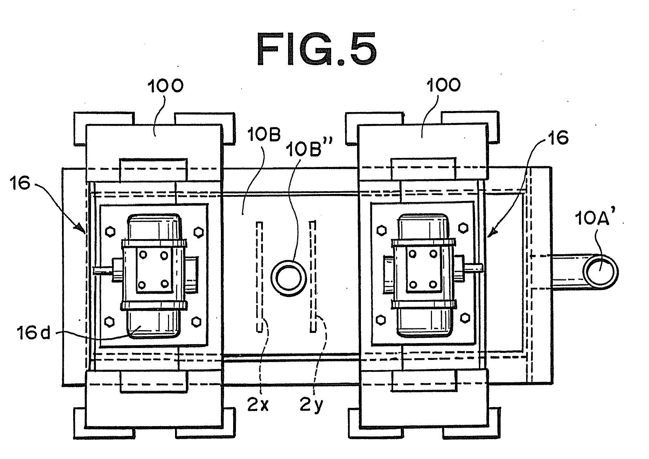

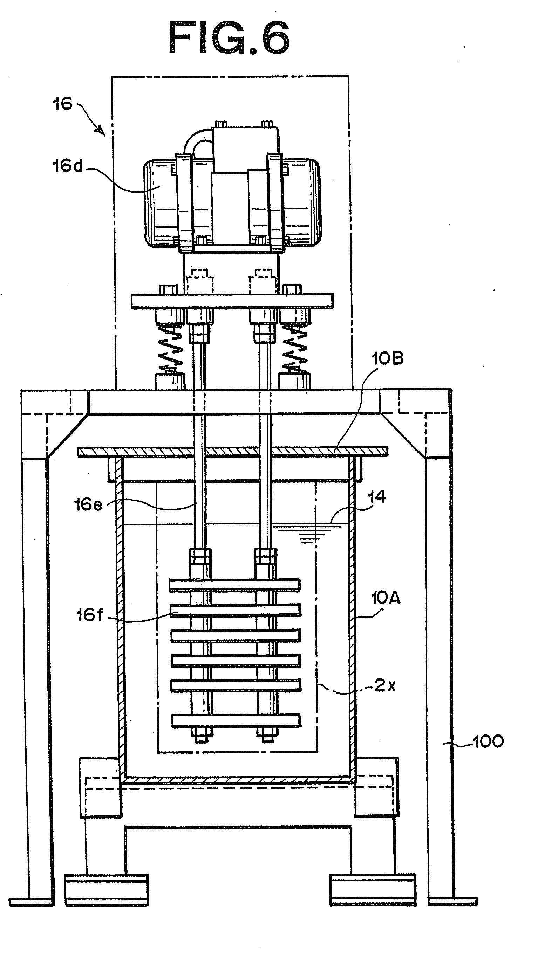

FIG. 1 through FIG. 3 are drawings showing in detail the embodiment of the hydrogen-based/oxygen-based mixed gas generating means this invention. Here, FIG 1 is a cross sectional view; FIG. 2 is a plan (flat) view; and FIG. 3 is a side view. FIG. 4 through FIG. 6 are drawings showing in detail other hydrogen-based/oxygen-based mixed gas generating means of this invention. The examples in FIG. 4 through FIG. 6 possess essentially the same functions as the examples in FIG. 1 through FIG. 3. The following description refers mainly to FIG. 1 through FIG. 3, however it may also apply in the same way to FIG. 4 through FIG. 6.

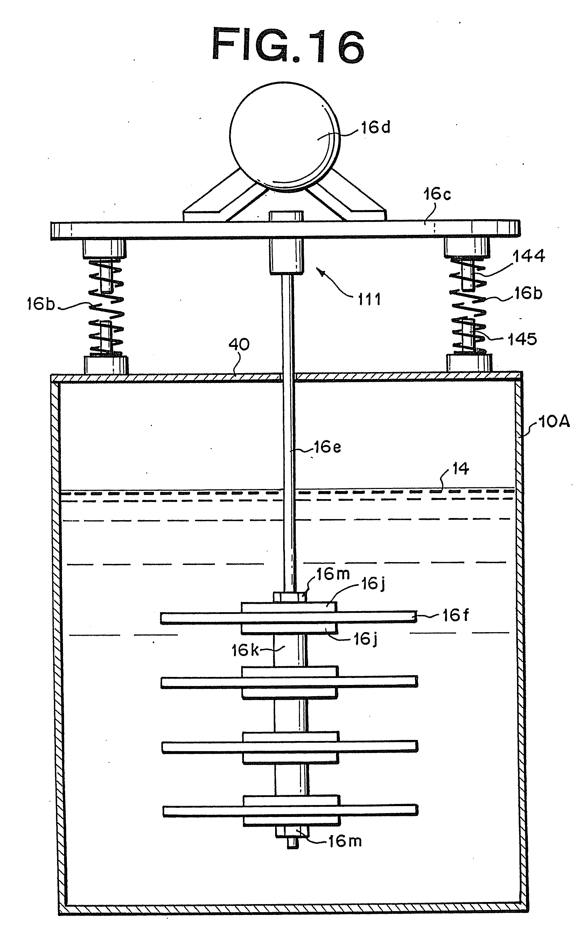

In these drawings, the reference numeral 10A denotes the electrolysis tank. An electrolyte fluid 14 is stored inside this electrolysis tank 10A. The reference numeral 16 is the vibro-stirring means. The vibro-stirring means 16 contains a base 16a installed via anti-vibration rubber on a support bed 100 installed separately from the electrolysis tank 10a; a coil spring 16b as a vibration absorbing material clamped to the bottom edge of the base, a vibration member 16c clamped to the top edge of that coil spring, a vibration motor 16d installed on that vibration member, a vibrating rod (vibration transmission rod) 16e installed on the top edge of the vibration member 16c, and a vibrating blade 16f unable to rotate and installed at multiple levels at a position immersed in the electrolyte fluid 14 on the lower half of the vibrating rod. The vibration generating means includes the vibration motor 16d, and a vibration member 16c and that vibration generating means is linked to the vibrating rod 16e. The vibration-stirring member is comprised of the vibrating rod 16e and the vibrating blade 16f, and the vibro-stirring means includes the vibration-stirring member and a vibration-generating member. The coil spring 16b may contain a rod-shaped guide member as shown later on in FIG.16.

Besides general-purpose mechanical vibration motors, the vibration generating means for the vibro-stirring means of the present invention may also utilize magnetic oscillating motors and air vibration motors, etc.

The vibration motors 16d vibrate at 10 to 500 Hertz controlled by the inverter 35 and more preferably vibrate at 20 to 200 Hertz and still more preferably vibrate at 20 to 60 Hertz. The vibration generated by the vibration motors 16d is transmitted to the vibrating blade 16f by way of the vibrating member 16c and the vibrating rods. The leading edge of the vibrating blade 16f vibrates at the required frequency in the electrolyte fluid 14. This vibration causes the vibrating blade 16f to generate a ripple or "flutter" from the attachment piece on the vibrating rod 16e towards the edges of the blade. The amplitude and frequency of this vibration will vary according to the motor 16d. However the amplitude and frequency are basically determined according to the interaction between the electrolyte fluid 14 and the force dynamics of the vibration transmission path. In this invention, the amplitude (vibration width) is 0.1 to 30 millimeters, and preferably 1 to 10 millimeters, and the frequency is 600 to 30,000 times per minute, and more preferably is 600 to 12,000 times per minute, and still more preferably is 600 to 7,200 times per minute, and a frequency of 1200 to 3600 times per minute is especially preferable.

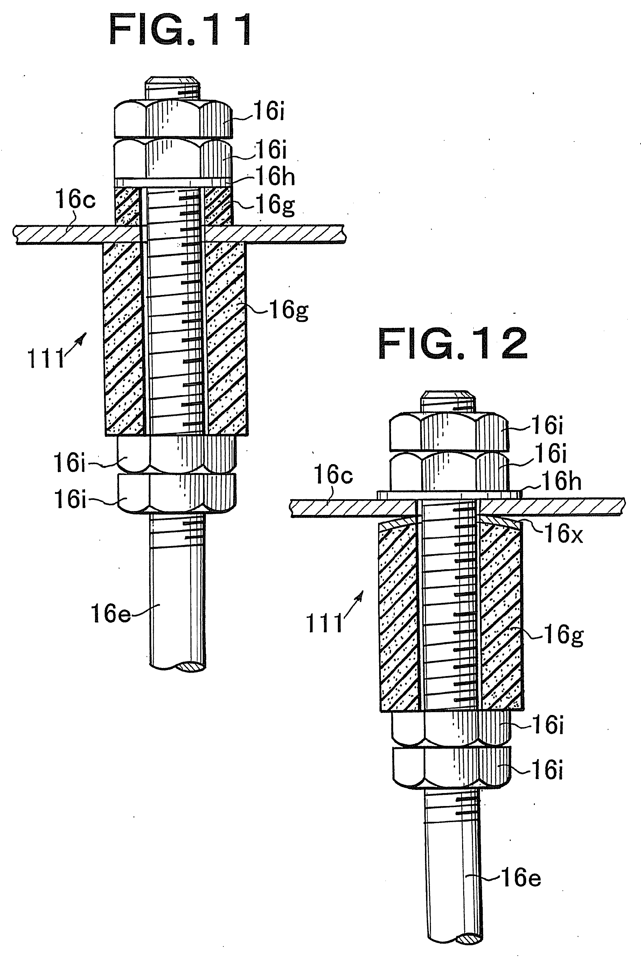

FIG. 11 is an enlarged cross sectional view of the attachment piece 111 for mounting the vibrating rod 16e onto the vibrating member 16c. The nut 16i is fit from the upper side of the vibration member 16c by way of the vibration adaptive absorbing member 16g and washer 16h onto the male screw section formed at the top end of vibrating rod 16e. The nut 16i is fit by way of the vibration adaptive absorbing member 16g from the lower side of the vibration member 16c. The vibration adaptive absorbing member 16g utilized as the vibration adaptive absorbing means is made for example from rubber. The vibration adaptive absorbing member 16g can be made from a hard resilient piece for example of natural rubber, hard synthetic rubber, or plastic with a Shore A hardness of 80 to 120 and preferably from 90 to 100.Hard urethane rubber with a Shore A hardness of 90 to 100 is particularly preferably in view of its durability and resistance to chemicals. Utilizing the vibration stress adaptive absorbing means prevents vibration stress from tending to concentrate on the side nearer the junction of vibrating member 16c and the vibrating rod 16e and makes it more difficult for the vibrating rod 16e to break. Raising the vibration frequency of the vibrating motor 16d to 150 Hertz or higher is particularly effective in preventing breakage of the vibrating rod 16e.

FIG. 12 is an enlarged cross sectional view showing a variation of the attachment piece 111 for mounting the vibrating rod 16e onto the vibrating member 16c. This variation differs from the attachment piece of FIG. 11 only in that the vibration adaptive absorbing member 16g is not installed on the upper side of the vibration member 16c, and also in that there is a spherical spacer 16x between the vibration member 16c and the vibration adaptive absorbing member 16g. In all other respects this variation is identical (attachment piece of FIG. 11).

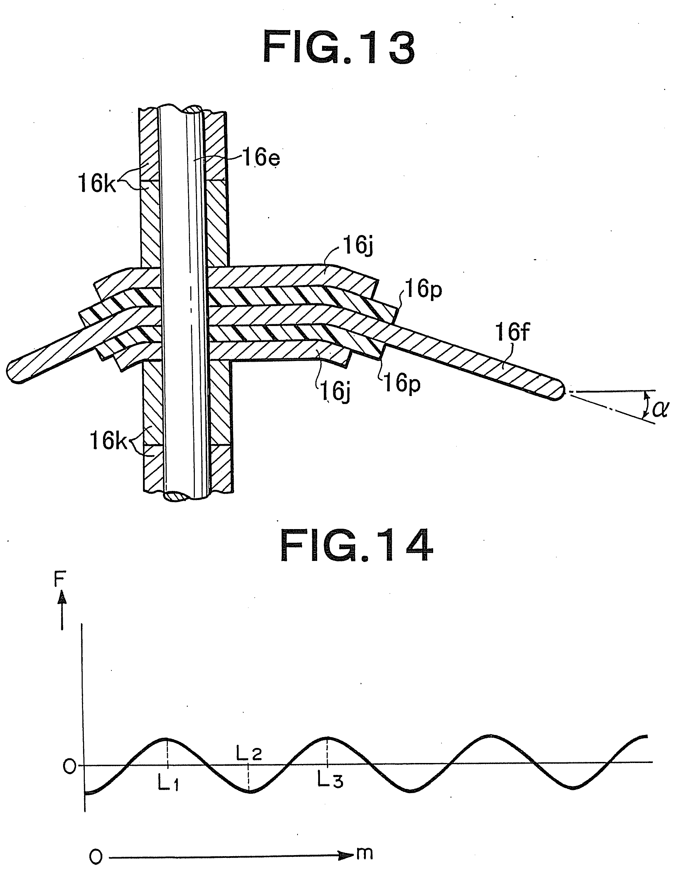

FIG. 13 is an enlarged cross sectional view of the section for installing the vibrating blade 16f onto the vibrating rod 16e. Here, the vibrating blade clamp members 16j are installed on both the upper and lower sides of each of the vibrating blades 16f. The spacer rings 16k are installed at intervals on the adjacent vibrating blades 16f by way of the vibrating blade clamp members 16j for setting the spacing. A nut 16m is screwed on to the vibrating rod 16e formed as a male screw (with or without spacer rings 16k) on the upper side of the topmost section of vibrating blade 16f, and the lower side of the bottom-most section of the vibrating blade 16f as shown in FIG. 1.As shown in FIG. 13, breakage of the vibrating blade 16f can be prevented by interposing a resilient member sheet 16p as the vibration absorbing means made from fluorine plastic or fluorine rubber between each vibrating blade 16f and clamping member 16j.The resilient member sheet 16p is preferably installed to protrude outwards somewhat from the clamping member 16j in order to further enhance the breakage prevention effect for the vibrating blade 16f.As shown in the figure, the lower surface (press-contact surface) of the upper side of clamping member 16j is formed with a protruding surface, and the upper surface (press contact surface) of the lower side clamping member 16j is formed with a recessed (or concave) surface. The section of the vibrating blade 16f compressed from above and below by the clamping member 16j is in this way forced into a curved shape, and the tip of the vibrating blade 16f forms an angle α relative to the horizontal surface. This *α* angle can be set to -30 degrees or more and 30 degrees or less, and preferably is set -20 degrees or more and 20 degrees or less. The *α* angle in particular, is -30 degrees or more and -5 degrees or less, or is 5 degrees or more and 30 degrees or less, and preferably is set to -20 degrees or more and -10 degrees or less, or to 10 degrees or more and 20 degrees or less. The *α* angle is 0 if the clamping member 16j (press contact) surface is flat. The *α* angle need not be the same for all the vibrating blades 16f. For example, the lower one to two blades on vibrating blade 16f may be set to a minus value (in other words, facing downwards: facing as shown in FIG. 13) and all other blades on vibrating blade 16f set to a plus value (in other words facing upwards: the reverse of the value shown in FIG. 13). Making the vibrating blades face downwards is preferably because it makes it more difficult for the active gas generated by electrolysis to escape, and is effective in liquefying and maintaining the gas in a liquid state in the fluid.

The vibrating blade 16f may be made from resilient metal or plastic plate. The satisfactory thickness range for the vibrating blade 16f differs according to the vibration conditions and viscosity of the electrolyte fluid 14. However, during operation of the vibro-stirring means 16, the vibrating blades should be set to a vibration level where the tips of the vibrating blades 16f provide an oscillation (flutter phenomenon) for increasing the stirring (or agitating) efficiency without breaking the vibrating blade. If the vibrating blade 16f is made from metal plate such as stainless steel plate, then the thickness can be set from 0.2 to 2 millimeters. If the vibrating blade 16f is made from plastic plate then the thickness can be set from 0.5 to 10 millimeters. The vibrating blade 16f and clamping member 16j can be used in a state where integrated into one piece. Integrating them into one piece avoids the problem of having to wash away the electrolyte fluid 14 that penetrates into and hardens in the junction between the vibrating blade 16f and clamp member 16j.

The material for the metallic vibrating blade 16f may be titanium, aluminum, copper, steel, stainless steel, a ferromagnetic metal such as ferromagnetic steel, or an alloy of these metals. The material for the plastic vibrating blade 16f may be polycarbonate, vinyl chloride resin, or polyprophylene, etc. The plastic material on the vibrating blade may be surface-treated by electrical conduction process such as plating.

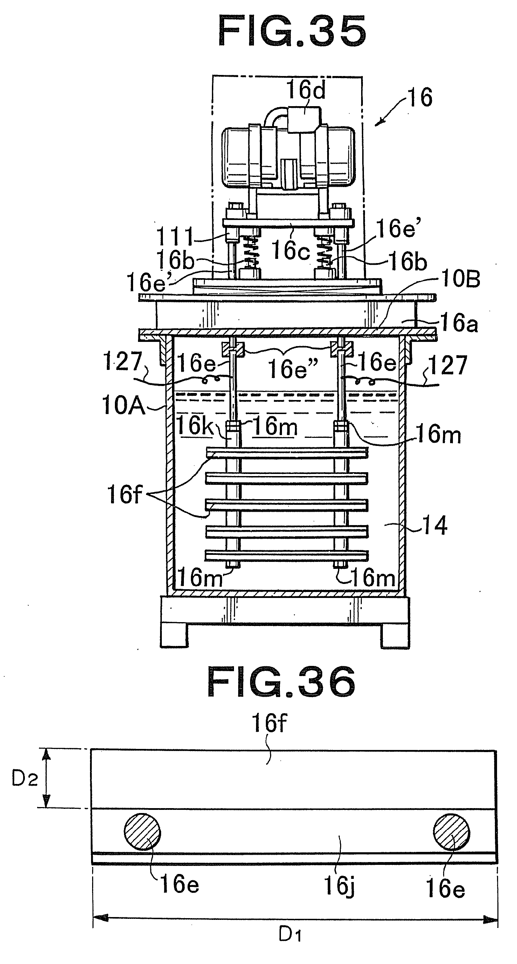

The extent of the "flutter phenomenon" generated by the vibrating blade that accompanies the vibration of vibrating blade 16f within the electrolyte fluid 14 will vary depending on the vibration frequency of the vibration motors 16d, the length of the vibrating blade 16f (dimension from the tip of clamping member 16j to the tip of vibrating blade 16f: D₂ in FIG. 36 described later on.), and the thickness, viscosity and specific gravity of the electrolyte fluid 14, etc. The length and thickness of the "fluttering" vibrating blade 16f can be best selected based on the applied frequency. The extent of vibrating blade flutter can be made to match that shown in FIG. 14 by establishing fixed values for the vibration frequency of vibrating motor 16d and thickness of vibrating blade 16f, and then varying the length of vibrating blade 16f. In other words, the flutter will increase up to a certain stage as the length m of vibrating blade 16f is increased, but when that point is exceeded, the extent F of the flutter will become smaller. At a certain length the flutter will become almost zero and if the blade is further lengthened the flutter increases and this relation continuously repeats itself.

Preferably a length L₁ shown as the first peak or a length L₂ shown as the second peak is selected for the length of the vibrating blade. Here, L₁ or L₂ can be selected as needed, according to whether one wants to boost the path vibration or the flow.

The following results were obtained when finding L₁ and L₂ for vibrating blades of various thickness made of stainless steel (SUS304) and using a 75 kilowatt motor with a vibration frequency of 37 to 60 Hertz.

| Thickness | L₁ | L₂ |
|---|---|---|
| 0.10 millimeters | Approximately 15 millimeters | --- |
| 0.20 millimeters | Approximately 25 millimeters | Approximately 70 millimeters |
| 0.30 millimeters | Approximately 45 millimeters | 110 to 120 millimeters |
| 0.40 millimeters | Approximately 50 millimeters | 140 to 150 millimeters |
| 0.50 millimeters | Approximately 55 millimeters | Approximately 170 millimeters |

In this experiment, the distance from the center of the vibrating blade 16e to the tip of the clamping member is 27 millimeters. The tilt angle α on the vibrating blade 16f was made to face 15 degrees upward (+15°).

The vibro-stirring means 16 described above can be utilized in the following literature (relating to patent applications for inventions contrived by the present inventors) and vibration stirring apparatus (vibration stirring devices) as disclosed in patent documents JP-B No. 135528/2001, JP-B. No. 338422/2001 in patent applications for inventions by the present inventors
JP-A No. 275130/1991 (Patent No. 1941498)
JP-A No. 220697/1994 (Patent No. 2707530)
JP-A No. 312124/1994 (Patent No. 2762388)
JP-A No. 281272/1996 (Patent No. 2767771)
JP-A No. 173785/1996 (Patent No. 2852878)
JP-A No. 126896/1995 (Patent No. 2911350)
JP-A No. 40482/1997 (Patent No. 2911393)
JP-A No. 189880/1999 (Patent No. 2988624)
JP-A No. 54192/1995 (Patent No. 2989440)
JP-A No. 330395/1994 (Patent No. 2992177)
JP-A No. 287799/1994 (Patent No. 3035114)
JP-A No. 280035/1994 (Patent No. 3244334)
JP-A No. 304461/1994 (Patent No. 3142417)
JP-A No. 43569/1998 (Patent No. 3320984)
JP-A No. 309453/1998
JP-A No. 253782/1999 (Patent No. 3196890)
JP-A No. 282293/2000 (Patent No. 3046594)
JP-A No. 317295/2000
JP-A No. 053999/2002
TP-A No. 121699/2002
JP-A No. 146597/2002
WO01/090003A1
WO02/090621A1
WO03/000395A1
WO03/048424A1

In this invention, the vibro-stirring means 16 may be installed on both ends of the electrolysis tank as shown in FIG. 1, or may be installed on just one end. If the object utilized as the vibrating blade is installed to extend bilaterally on both sides, then the vibro-stirring means 16 may be installed in the center of the electrolysis tank, and an electrode group described later on can be installed on both sides of that vibro-stirring means 16.

Using a vibro-stirring means with the vibrating blades in the bottom of the electrolysis tank as described in JP-A 304461/1994, allows a wider installation space for the electrode group within the electrolytic cell. Other advantages are that a larger quantity of gas is emitted from the electrolysis tank (volume) and if the electrodes are installed in the upward and downward directions, then there is no need to use many holes as described later on.

The description now returns to FIG. 1 through FIG. 3. In a working example of the hydrogen-based/oxygen-based mixed gas generating means of this invention, a vibro-stirring means 16 as described above is installed on both ends of the electrolytic tank 10A. A plate-shaped positive electrode member 2x and a plate-shape negative electrode member 2y are installed in the electrolytic tank 10A. One of the vibro-stirring means 16 is installed to face the surface (main surface) of the positive electrode member 2x and the other vibro-stirring means 16 is installed to face the surface (main surface) of the negative electrode member 2y.

The usual material utilized for hydroelectrolysis may be utilized as the electrode material. Materials such as lead dioxide (lead peroxide), magnetite, ferrite, graphite, platinum, Pt-Ir alloy, titanium alloy, titanium with rare-earth sheath (for example platinum-sheathed titanium) may be used as the anode positive electrode member. Rare earth metals such as rhodium, nickel, nickel alloy, (Ni-Mo₂, Ni-Co, Ni-Fe, Ni-Mo-Cd, Ni-Sₓ, Raney nickel, etc.), titanium alloy may be used as the negative electrode member. The gap between the positive electrode and negative electrode may for example be 5 to 400 millimeters.

Since the negative electrode member 2y and the positive electrode member 2x are shaped as plates as shown in FIG. 1, the electrolyte fluid 14 can smoothly pass through the small holes even when the electrodes are installed at nearly a right angle to the direction the vibrating blades 16f are facing to cut off the flow of electrolyte fluid 14 generated by the vibration (or agitation) of the vibrating blade 16f of the vibro-stirring means. These holes can be a circular shape or a polygonal shape and there are no particular restrictions on the shape. Also, the size and number of the small holes are preferably set to achieve a balance between both the basic purpose of the electrode and the goal of porosity. The small holes on the electrode preferably have a surface area of 50 percent or more of the electrode surface in terms of effective surface area (in other words, the surface area in contact with the electrolyte fluid 14). The porous (multi-hole) electrodes may also possess a net shape.

The negative electrode member 2y and the positive electrode member 2x are respectively connected to an anode main bus-bar and a cathode main bus bar as shown in FIG. 1. This anode main bus-bar and cathode main bus bar are connected to the power supply 34 (for example, a rectifier) as shown in FIG. 1. The electrolyzing means is made up of the power supply 34, the positive electrode member 2x, and the negative electrode member 2y.

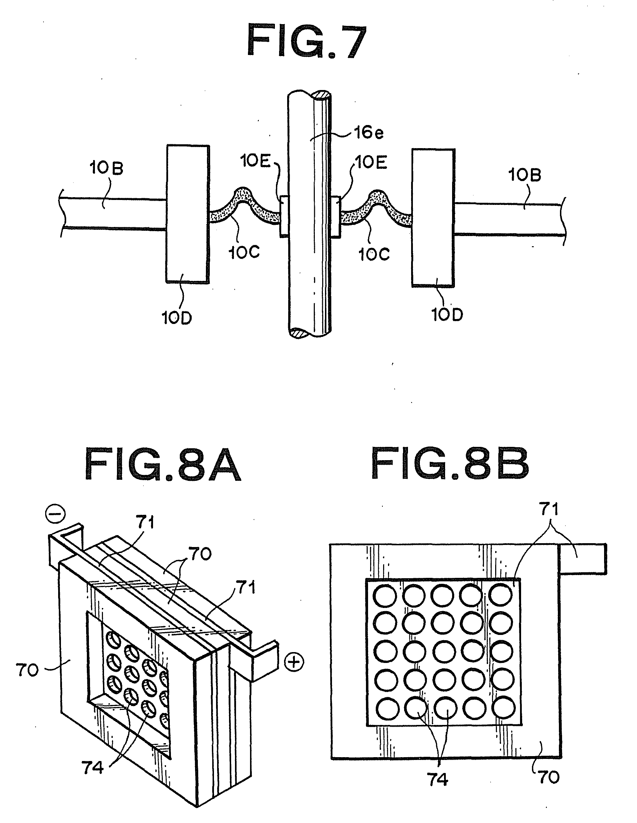

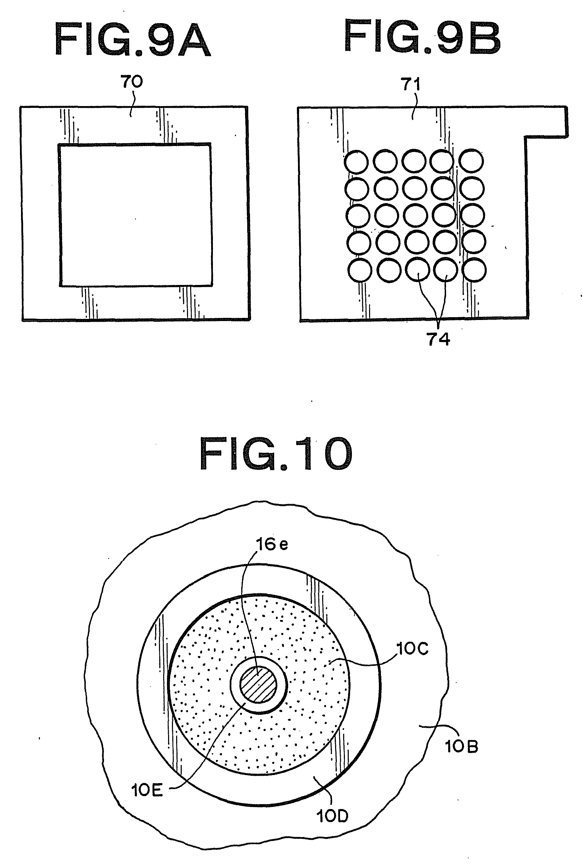

In order to set the multiple blade negative electrode member 2y and the positive electrode member 2x within the electrolysis tank at fixed gaps, the electrode group is preferably assembled in the order of insulation frame/electrodes/insulation frame----electrode/insulation frame. The basic combination of insulation frame 70 and electrode 71 is shown in FIG. 8A. FIG.9A is a flat view of the insulation frame. FIG.9B is a flat view of the electrodes. FIG.8B is a flat view showing when the electrode of FIG. 9B is overlapped on the insulation frame 70 of FIG. 9A. Since the electrode is the flat plate type, multiple holes (multi-porous) must be formed in the electrode plate when for example installing the electrode plate perpendicular to the direction facing the vibro-stirring means shown in FIG. 1 or FIG. 2. The electrode plate can in this case be installed facing either vertically or horizontally. The insulator piece forming the insulation frame may utilize natural rubber, hard synthetic rubber, or plastic, etc.

The power supply 34 may supply direct current and preferably supplies normal low-ripple direct current. However, other power supplies with different waveforms may also be utilized. These types of electrolysis current waveforms are described for example, in "Electrochemistry" (Society of Japan) Vol. 24, P. 398 - 403, and pages 449 - 456 of same volume, the "Electroplating Guide" by the Federation of Electro Plating Industry Association, Japan" issued April 15, 1996, P. 378 - 385, the "Surface Technology Compilation" issued by Koshinsha (Corp.) June 15, 1983, P. 301 - 302, same volume P. 517 - 527, same volume P. 1050 - 1053, the Nikkan Kogyo Shinbun "Electroplating Technology Compilation" P 365 - 369 July 25, 1971, same volume P. 618 - 622, etc.

In the present invention, among the various pulse waveforms, a rectangular waveform pulse is preferable, particularly in view of the improved energy efficiency. This type of power supply (power supply apparatus) can create voltages with rectangular waveforms from an AC (alternating current) voltage. This type of power supply further has a rectifier circuit utilizing for example transistors and is known as a pulse power supply. The rectifier for these type of power supplies may be a transistor regulated power supply, a dropper type power supply, a switching power supply, a silicon rectifier, an SCR type rectifier, a high-frequency (RF) rectifier, an inverter digital-controller rectifier, (for example, the Power Master [registered trademark] made by Chuo Seisakusho (Corp.)), the KTS Series made by Sansha Denki (Corp.), the RCV power supply made by Shikoku Denki Co., a means for supplying rectangular pulses by switching transistors on and off and comprised of a switching regulator power supply and transistor switch, a high frequency (RF) switching power supply (using diodes to change the alternating current into direct current, apply a 20 to 30 KHz high frequency waveform, and with power transistors add a transformer effect, once again rectify the voltage, and extract a smooth (low-ripple) output), a PR type rectifier, a high-frequency control type high-speed pulse PR power supply (for example, a HiPR Series (Chiyoda Corp.), etc.

The voltage applied across the positive electrode member and the negative electrode member is the same as during normal hydroelectrolysis.

The electrolyte fluid 14 is water containing electrolytic material. Here, a soluble alkali metal hydroxide (KOH, NaOH, etc.) or an alkali rare-earth metal hydroxide (for example, Ba (OH)₂, Mg(OH)₂, Ca(OH)₂, etc.) or a ammonium alkyl 4 (tetra-alkylammonium), and materials of the known related art may be used as the electrolytic material. Among these KOH is preferable. The content of electrolytic material in the electrolyte fluid is preferably 5 to 30 percent. The pH of the electrolyte fluid is preferably 7 to 10 percent. Materials such as NaCl and HCl that generate halogen gas by electrolysis may make exhaust gas processing necessary to prevent environmental pollution when used in large quantities due to requirements such as chemically protecting the device, etc.

The lid member 10b is installed on the upper section of the electrolytic tank 10A as shown in FIG. 1 through FIG. 3. A hydrogen-based/oxygen-based mixed gas extraction outlet 10B' is formed for collecting the hydrogen-based/oxygen-based mixed gas generated by that lid member. A hydrogen-based/oxygen-based mixed gas extraction tube 10B" is connected to that extraction outlet 10B'. The hydrogen-based/oxygen-based mixed gas trapping means is comprised of this lid member 10B and the hydrogen-based/oxygen-based mixed gas extraction tube 10B".

In this embodiment, the hydrogen gas and the oxygen gas are recovered as a hydrogen-based/oxygen-based mixed gas when the oxygen gas and hydrogen gas are present in equal proportions. Unlike the hydrogen-oxygen gas obtained by electrolysis not utilizing a vibration-flow stirring means, detonations do not occur in this hydrogen-based/oxygen-based mixed gas even if pressurized, and this hydrogen-based/oxygen-based mixed gas can be stored in a pressurized state, a depressurized state or a normal pressure state. Moreover, a separator wall can be formed as a partition to separate the upper space into a positive electrode member side space and a negative electrode member side space; and the oxygen-based gas and hydrogen-gas can each be separated out and recovered by installing a hydrogen gas extraction tube and an oxygen gas extraction tube.

The material for the electrolytic tank 10A and lid member 10B may for example be stainless steel, or plastic (synthetic resin) such as polycarbonate. A pipe 10A' is connected to the electrolytic tank 10A for adjusting the level of the electrolyte fluid 14.

The vibrating rod 16e of the vibro-stirring means 16 extends upwards and downwards through the lid member 10B. As shown in FIG. 7 and FIG. 10, the opening formed in the lid member 10B section for the vibrating rod 16e may be an airtight seal. This airtight seal comprises a flexible member 10C made for example from rubber plate and installed between the clamp member attached to the inner edge of the opening formed in the lid member 10B, and the clamp member attached to the outer surface of the vibrating rod 16e. The means for forming an airtight seal may also be an inner ring of a support bearing attached to the vibrating rod 16e, an outer ring of that support bearing attached to the inner edge of the opening in lid member 10B, and with the inner ring movable up and down along the stroke (rod) versus the outer ring. The airtight sealing means may be a rubber plate installed only in the opening in the lid member 10B so that the vibrating rod 16e passes through it, or may be a laminated piece, etc. Rubber and in particular, soft rubber with good shape forming capability may for example be utilized as this sealing means. The vibration width of the vertically oscillating vibrating rod is usually 20 millimeters or less, and preferably is 10 millimeters or less, and a width of 5 millimeters or less is particularly preferable. That (vibration width) lower limit is 0.1 millimeters or more and preferably is about 0.5 millimeters or more. By using a suitable material such as rubber as the sealing member, follow-up motion can be achieved, so that little friction heat is generated, and a satisfactory airtight state obtained.

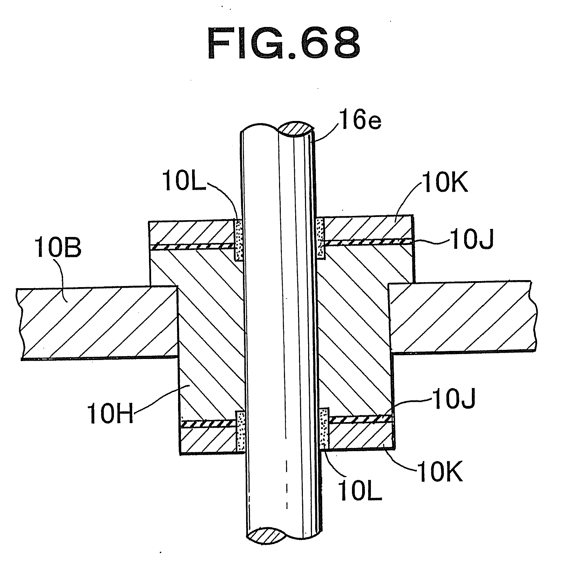

A means to attain even more complete sealing is the type shown in FIG. 68. The seal between the packing and the vibrating rod in this case for example contains a silicon-resin type lubricated sealing liquid to make the seal even more safe and secure. More specifically, the sealing means installed on the section of the lid member 10B that the vibrating rod 16e runs through, contains a synthetic resin sheet member 10K formed between the axial support boss 10H installed on the lid member 10B, and a synthetic rubber packing 10J above and below that support boss 10H. A silicon resin 10L is filled in between the vibrating rod section and the sheet member section. Extremely excellent sealing can be obtained in this way.

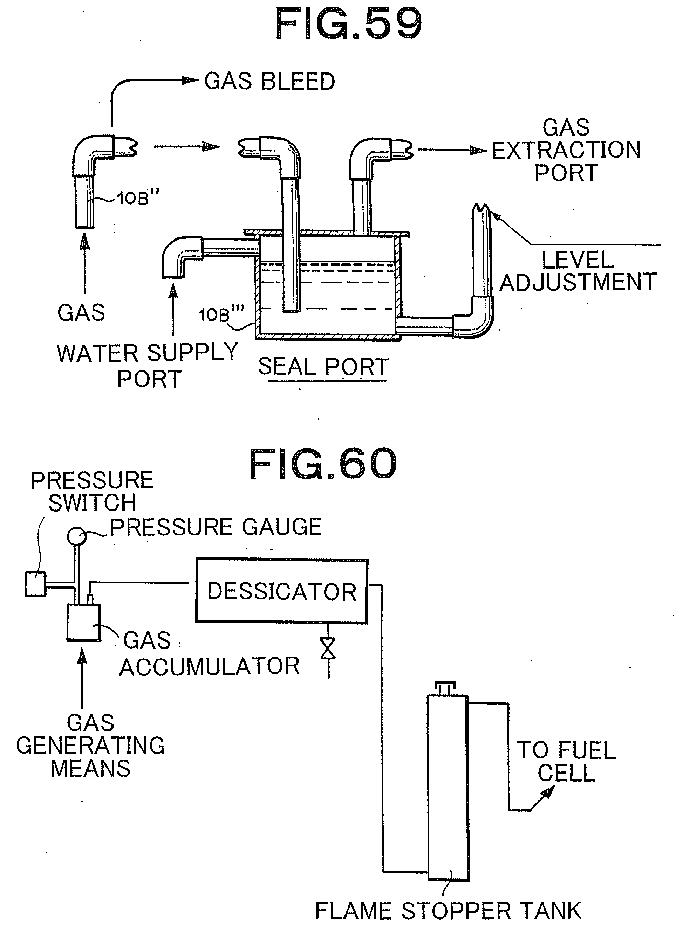

The electrolysis is preferably performed at a fluid temperature of 20 to 100°C and an electrical current density of 7 to 40 A/dm². As shown by FIG. 59, hydrogen-based/oxygen-based mixed gas generated by electrolysis is extracted by way of a seal port 10B"' connected to the gas extraction tube 10B". The seal port 10B"' also comprises the gas trapping means. FIG. 60 shows an example of a safety device utilized in the path for supplying the hydrogen-based/oxygen-based mixed gas manufactured by the gas generating means, to the fuel cell. The hydrogen-based/oxygen-based mixed gas accumulates in the specified capacity (volume), and is supplied to the hydrogen-based/oxygen-based mixed gas supply port of the fuel cell via dessicator equipment and a flame stopper tank.

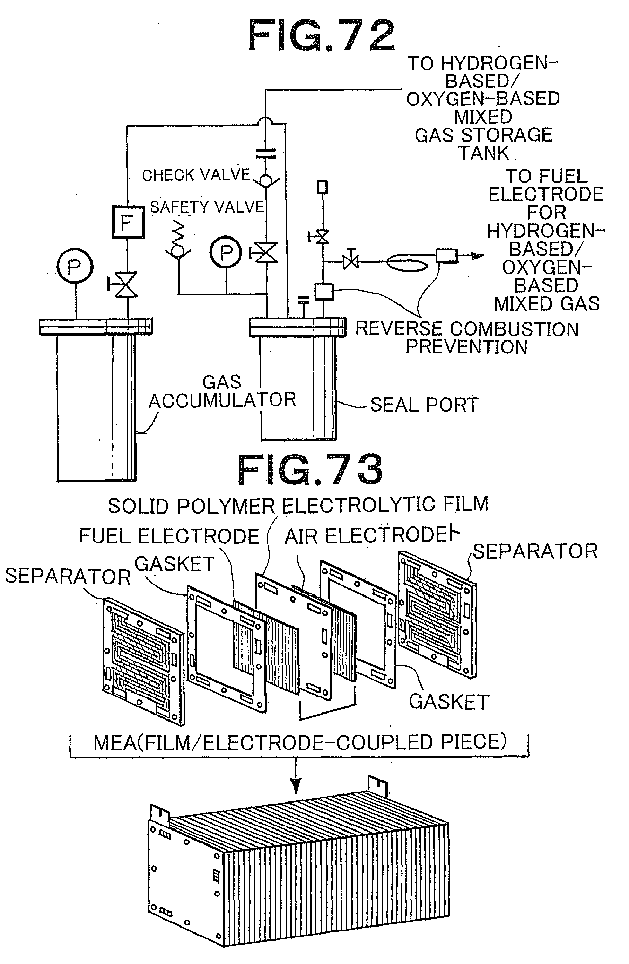

The devices in FIG.59 and FIG.60 can be integrated and utilized as the safety device of FIG.72. The gas accumulator is here connected to the electrolysis tank making up the hydrogen-based/oxygen-based mixed gas generating means. The hydrogen-based/oxygen-based mixed gas can be supplied for example to the fuel electrode of the fuel cell after passing through the seal port, and can be stored in a storage tank.

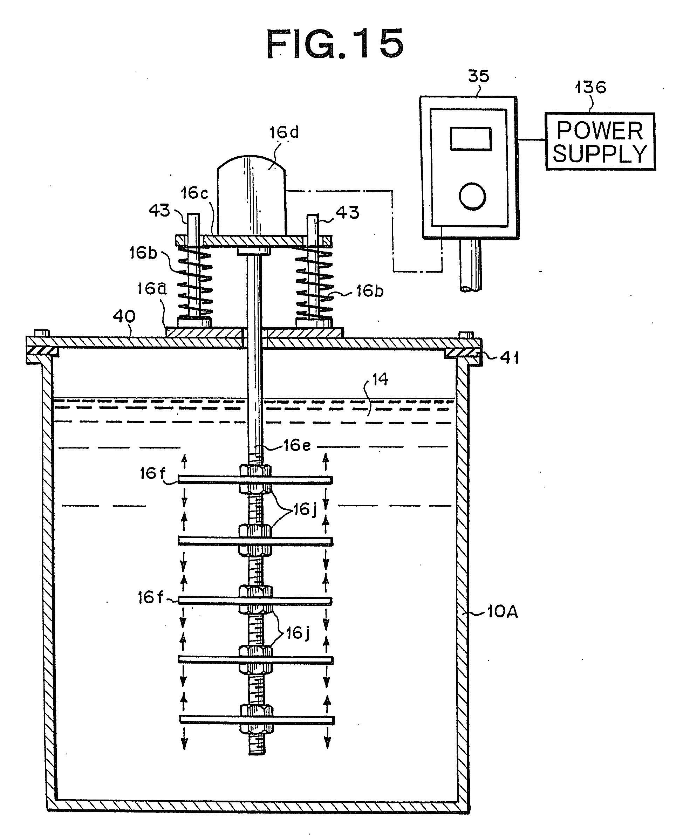

FIG. 15 is a cross sectional view showing a variation of the vibro-stirring means. In this example, the base 16a is clamped to the installation bed 40 on the upper part of the electrolytic tank 10A by way of the vibration absorbing member 41. A rod-shaped guide member 43 is clamped to the installation bed 40 to extend perpendicularly upwards. This guide member 43 is installed (positioned) within the coil spring 16b. A transistor inverter 35 for controlling the frequency of the vibration motor 16d is installed between the vibration motor 16d and the power supply 136 for driving that motor 16d. The power supply 136 is for example 200 volts. The drive means for this vibration motor 16d can also be used in the other embodiments of the present invention.

FIG. 16 is a cross sectional view showing a variation of the vibro-stirring means. In this example, a rod-shaped upper guide member 144 clamped to a vibrating member 16c, extends downwards in a direction perpendicular to the vibrating member 16c. A rod-shaped lower guide member 145 clamped to the installation bed 40 extends upwards in a direction perpendicular to the installation bed 40. These guide members 144, 145 are installed (positioned) within the coil spring 16b. A suitable space is formed between the bottom edge of the upper side guide member 144, and the upper edge of the lower side guide member 145 to allow vibration of the vibrating member 16c.

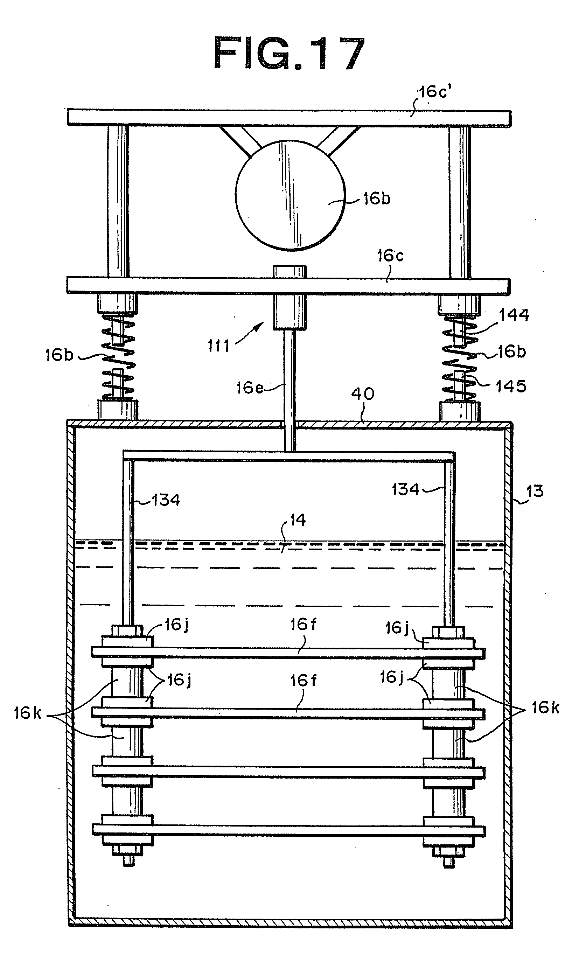

FIG. 17 is a cross sectional view showing a variation of the vibro-stirring means. In this example, the vibration motor 16d is installed on the lower side of a vibration member 16c' attached to the upper side of the vibration member 16. The vibration rod 16e branches into two sections 134 inside the electrolytic tank 10A. The vibrating blades 16f are installed spanning across these two rod sections 134.

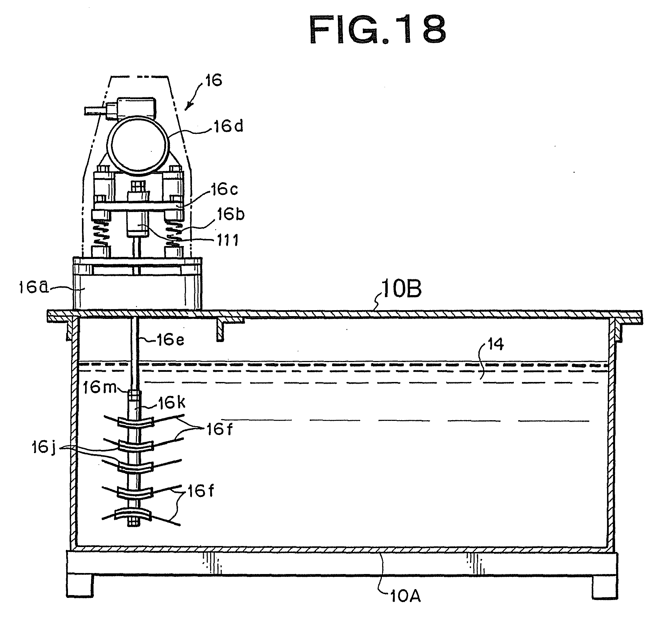

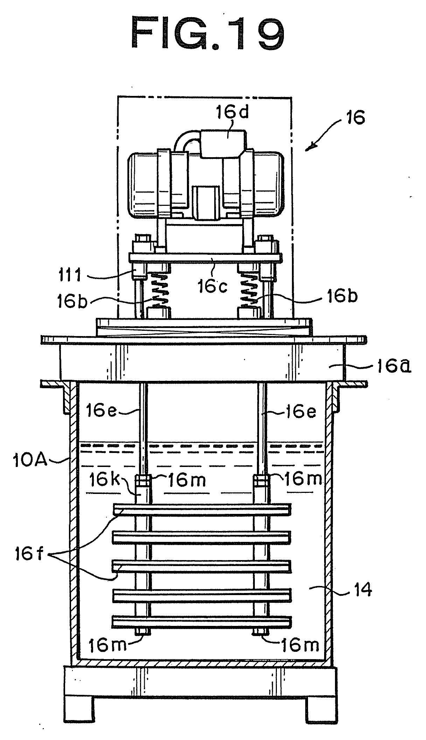

FIG. 18 and FIG. 19 are cross sectional views showing a variation of the vibro-stirring means. In this example (FIG. 18), the lowest vibrating blade 16f is facing obliquely downwards. The other vibrating blades 16f are facing obliquely upwards. The electrolyte fluid 14 nearest the bottom of the electrolytic tank 10A can in this way be adequately vibrated and stirred and the accumulation of fluid in the bottom of the electrolytic cell can be prevented. The vibrating blades 16f may also all be set facing obliquely downwards.

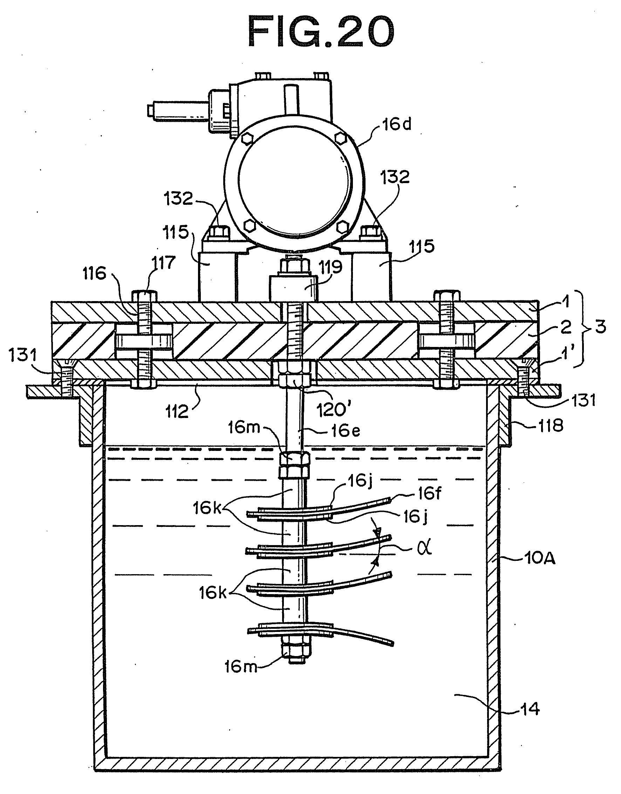

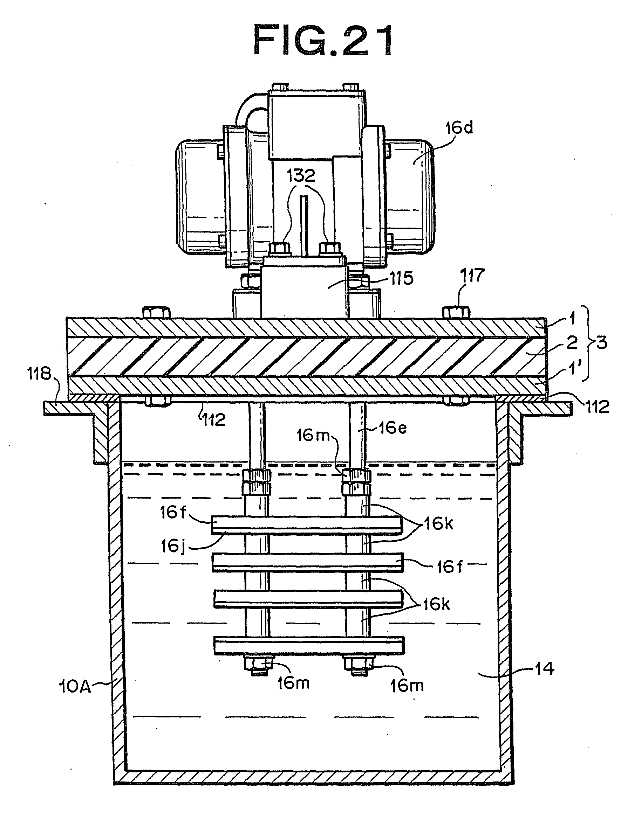

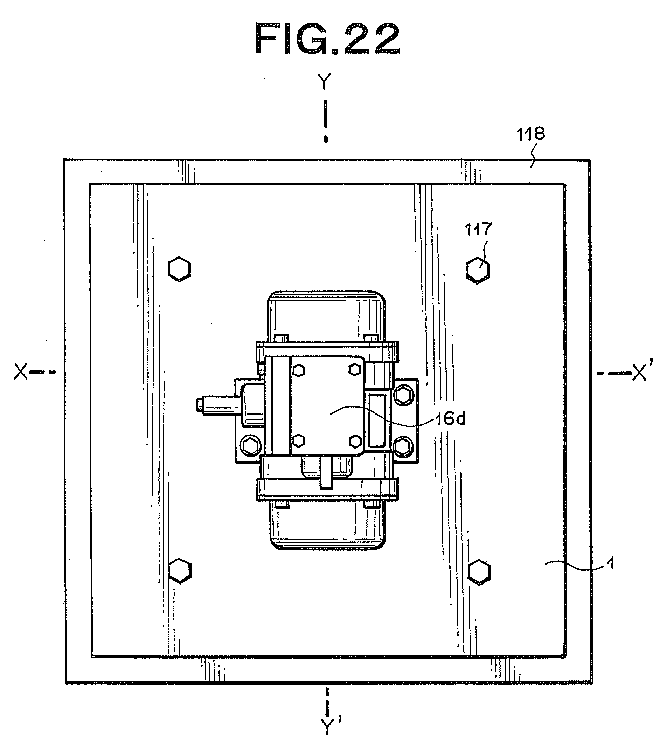

FIG. 20 and FIG. 21 are cross sectional views showing another state where the vibro-stirring means is installed onto the electrolytic tank of the present invention. FIG. 22 is a flat view of that installation state. FIG. 20 and FIG. 21 are views taken respectively along lines X - X' and lines Y - Y' of a cross section of FIG. 22.

In this state, a laminated piece 3 comprised of a rubber plate 2 and the metal plates 1, 1' is utilized as the vibration absorbing member instead of the coil spring 16b. In other words, the laminated piece 3 is clamped by way of an anti-vibration rubber 112 to a bracket member 118 affixed to an upper edge of electrolytic tank 10A by the metal plate 1' and bolt 131. The rubber plate 2 is installed on that metal plate 1', and the metal plate 1 installed on top of that rubber plate 2. This assembly is then assembled into one piece by using the bolts 116 and the nuts 117.

The vibration motor 16d is clamped by a bolt 132 and a vibration support member 115 to a metal plate 1. The upper edge of the vibrating rod 16e is installed by way of a rubber ring 119 to the laminated piece 3 with the metal plate 1 and rubber plate 2. In other words, the upper metal plate 1 renders the functions of the vibration member 16c described in FIG. 1, FIG. 4 and the other embodiments. The lower metal plate 1' renders the functions of the base 16a described in FIG. 1, FIG. 4 and the other embodiments. The laminated piece 3 (mainly the rubber plate 2) containing those metal plates 1, 1' renders the vibration absorbing functions identical to the coil spring 16b described in FIG. 1, FIG. 4 and the other embodiments.

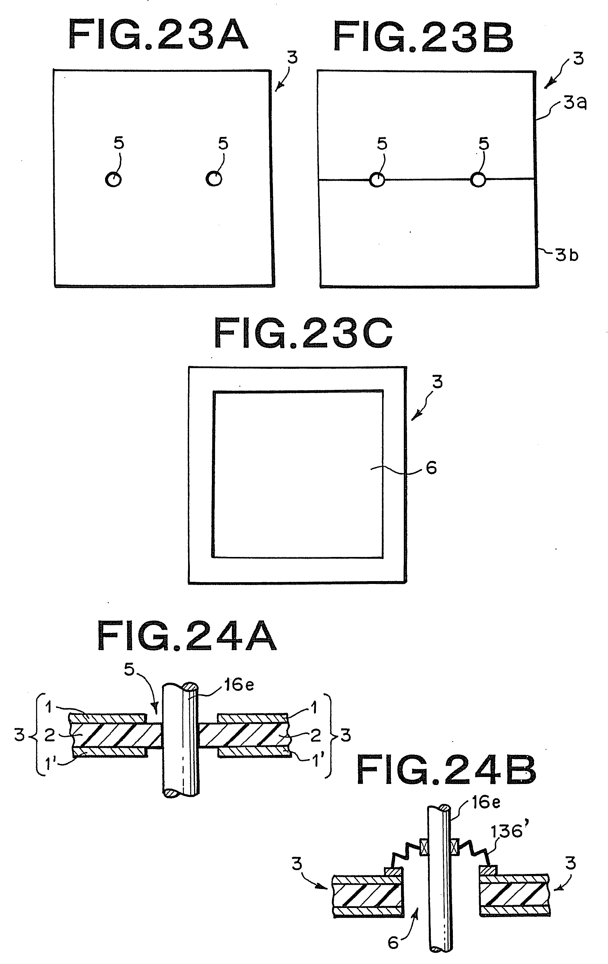

FIG. 23A through 23C are flat views of the laminated piece 3. In the example in FIG. 23A corresponding to the states in FIG. 20 through FIG. 22, a (through) hole 5 is formed in the laminated piece 3 to allow passage of the vibrating rod 16e. In the example in FIG. 23B, the holes 5 on the laminated piece 3 are separated by a dividing line into two sections 3a and 3b to allow easy passage of the vibrating rod 16e when assembling the device. In the example in FIG. 23C, the laminated piece 3 forms a ring-shape corresponding to the upper edge of the electrolytic tank 10A and an opening 6 is formed in the center section.

In the examples in FIG. 23A and FIG. 23B, the upper edge of the electrolytic tank 10A is sealed by the laminated piece 3. The laminated piece 3 in this way functions the same as the lid member 10B.

FIG. 24A and FIG. 24B are cross sectional views showing the state of the electrolytic cell sealed by the laminated piece 3. In the state in FIG. 24A, the rubber plate 2 makes direct contact with the vibrating rod 16e in (through) holes 5 to form a seal. In FIG. 24B, a flexible seal member 136' is installed between the vibrating rod 16e and the laminated piece 3 to seal the opening 6.

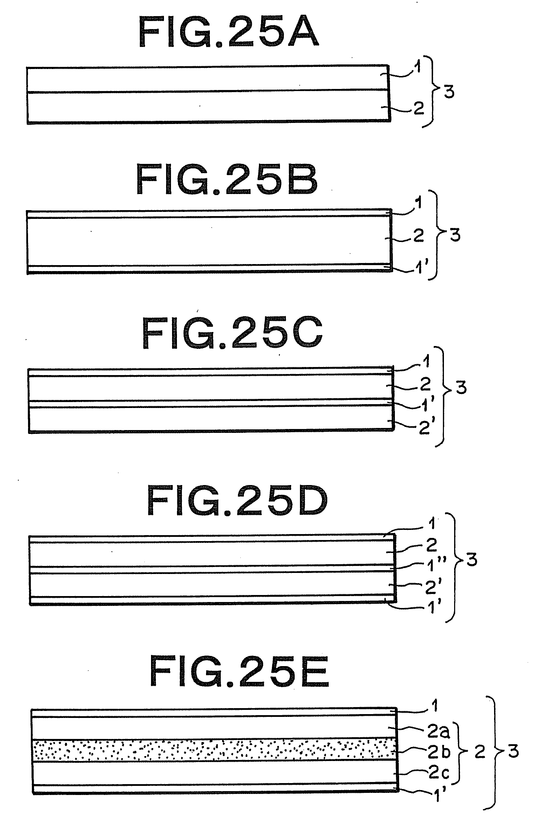

In FIG. 25A through FIG. 25E, a laminated piece 3 serves as the vibration absorbing material. The example in FIG. 25B is the working example for FIG. 20 through 22. In the example in FIG. 25A, the laminated piece is made up of the metal plate 1 and the rubber plate 2. In the example in FIG. 25C, the laminated piece 3 is made up of an upper metal plate 1 and an upper rubber plate 2 and a lower metal plate 1' and a lower rubber plate 2'. In the example in FIG. 25D, the laminated piece 3 is made up of an upper metal plate 1, an upper rubber plate 2, an intermediate metal plate 1", a lower rubber plate 2' and a lower metal plate 1'. The number of metal plates and rubber plates in the laminated piece 3 can for example be from 1 to 5 pieces. In the present invention, the vibration absorbing member can also be comprised of just the rubber plate.

Stainless steel, titanium, steel, copper, aluminum and other suitable alloys may be used as the metal plates 1, 1' and 1". The thickness of the metal plate may for example be from 10 to 40 millimeters. However, metal plate (for example, the intermediate metal plate 1') not directly clamped to members other than the laminated piece can be thin with a dimension from 0.3 to 10 millimeters.

Synthetic rubber or vulcanized natural rubber may be used as the material for the rubber plates 2 and 2'. The rubber plates 2 and 2' are preferably anti-vibration rubber as specified in JIS K6386. The rubber plate in particular has a static shearing resilience of 4 to 22 kgf/cm² and preferably of 5 to 10 kgf/cm² and preferably has an elongation of 250 percent or more. Rubber specified for use as synthetic rubber may include : chlorophene rubber, nitrile rubber, nitrile-chlorophene rubber, styrene-chlorophene rubber, acrylonitrile butadiene rubber, isophrene rubber, ethylene propylene diene copolymer rubber, epichlorylhydrine rubber, alkylene oxide rubber, fluorine rubber, silicon rubber, urethane rubber, polysulfide rubber, phosphorbine rubber. The rubber thickness is for example 5 to 60 millimeters.

In the example in FIG. 25E, the laminated piece 3 is made up an upper metal plate 1, a rubber plate 2 and a lower metal plate 1' The rubber plate 2 is made up of an upper solid rubber layer 2a and sponge rubber layer 2b and lower solid rubber layer 2c. One of either the lower solid rubber layer 2a and 2c may be eliminated. A stack or lamination comprised of multiple solid rubber layers and multiple sponge rubber layers may also be used.

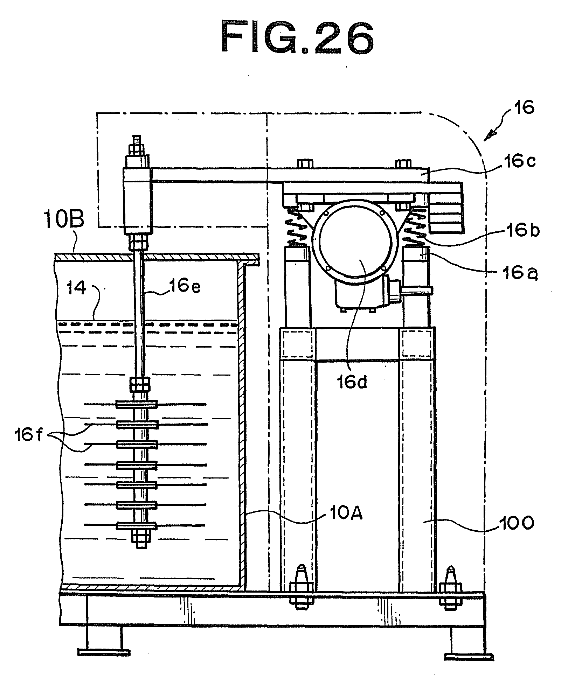

FIG. 26 is a cross sectional view showing a variation of the vibro-stirring means 16. In this example, the vibration motor 16d is installed on the side of the electrolytic tank 10A. The vibration member 16c extends horizontally above the electrolytic tank 10A, The vibration member 16c is installed onto the vibrating rod 16e. A structure of this type allows the lid member 10B to be easily attached or detached from the electrolytic tank 10A.The height is lowered in order to increase the stability, and to prevent side sway of the spring due to vibration during transport. The vibro-stirring means 16 is only shown on one side of the electrolytic tank 10A in FIG.26. However, the vibro-stirring means 16 may be installed on both sides of the electrolytic tank 10A.

In the above embodiments, the vibration stirring member for the vibro-stirring means is installed to face at least one of the surfaces of the positive electrode (anode) member and the negative electrode (cathode) member, so that a high gas generation efficiency can be obtained per each device (or apparatus) based on this high gas generation efficiency even if there is just one positive electrode (anode) member and the negative electrode (cathode) member.

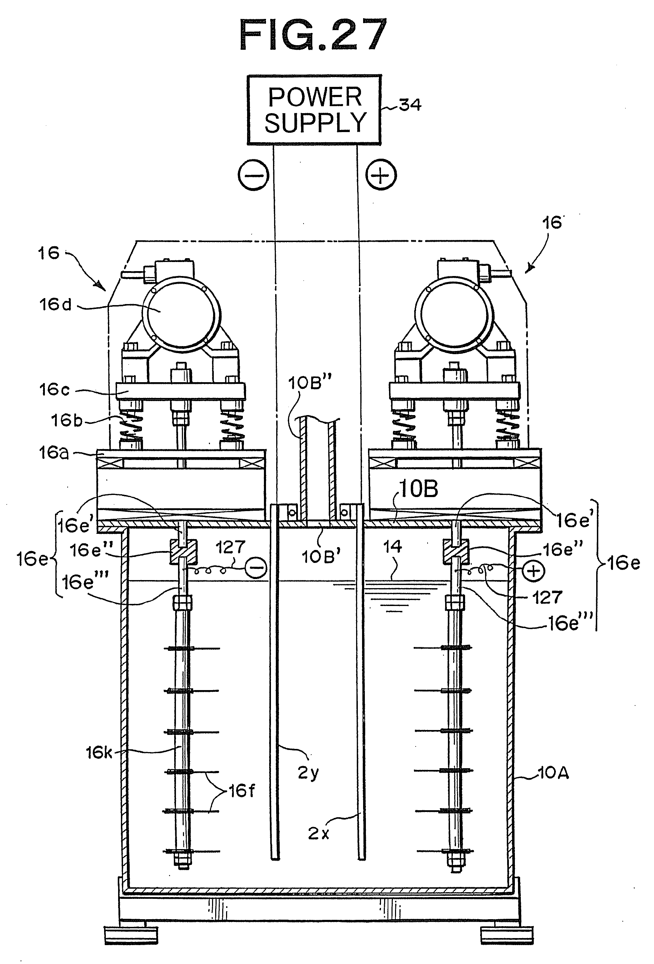

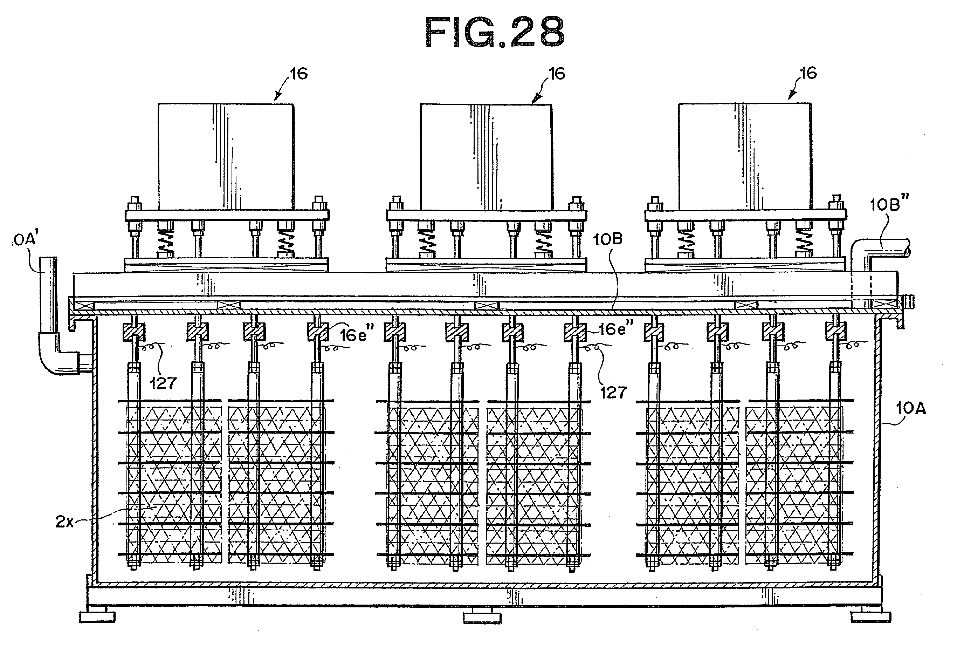

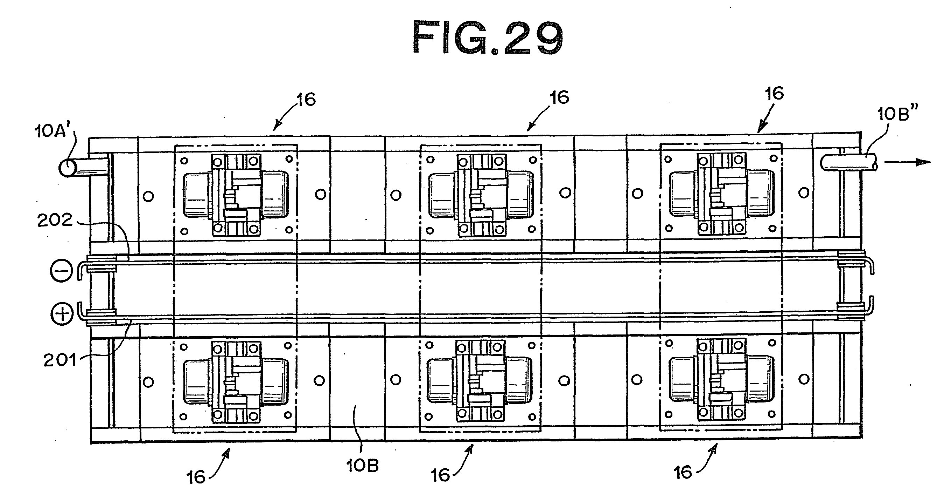

FIG. 27 through FIG. 29 shows views of the embodiment of the hydrogen-based/oxygen-based mixed gas generating means of this invention. FIG. 27 through FIG. 28 are side views, and FIG. 29 is a flat (plan) view.

The vibro-stirring means in this embodiment is the insulated type. In other words, the insulated type vibration stirring member is comprised of: a vibrating rod 16e including a vibrating rod upper section 16e' installed on the upper edge of the vibrating member 16c and, a vibrating rod lower section 16e"' installed on the vibrating blade and, an insulation region 16e" interposed between the upper end of the vibrating rod lower section 16e"' and the lower edge of the vibrating rod upper section 16e'.

A transistor inverter 35 for controlling the frequency of the vibration motor 16d is installed between the vibration motor 16d and the power supply (for example 200 volts) not shown in the drawing for driving that vibration motor 16d. The drive means for this vibration motor 16d can also be used in the other embodiments of the present invention. The vibration motors 16d vibrate at 10 to 500 Hertz under control of the inverter 35. The vibration generated by the vibration motors 16d is transmitted to the vibrating blade 16f by way of the vibrating member 16c and the vibrating rods 16e.

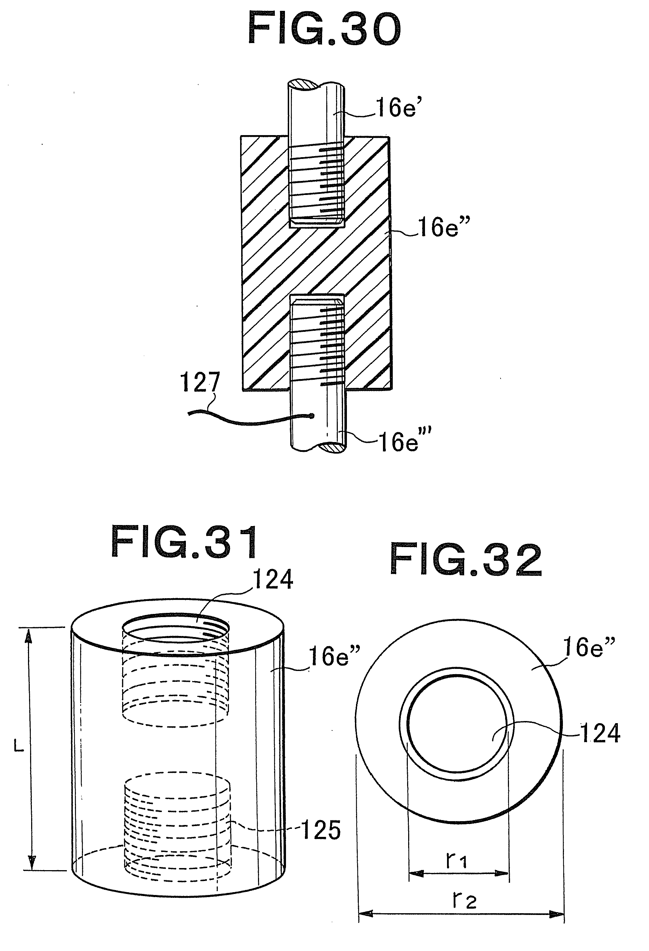

FIG. 30 is an enlarged fragmentary cross sectional view showing the vicinity of the electrical insulation area 16e" on the vibrating rod. FIG. 31 is a perspective view showing the electrical insulation area 16e". FIG. 32 is a flat view of that electrical insulation area.

The electrical insulation area 16e" can be formed for example from plastic or rubber. The electrical insulation area 16e" is a structural part on the vibrating rod so preferably material should be selected that is able to sufficiently transmit the vibration of the vibrating motor without breaking due to the vibration and also have good insulating properties. In view of these conditions hard rubber is most preferable. One potential material is hard polyurethane rubber. If the member comprised only of insulation material has insufficient strength then a member made only of insulating material can for example be augmented with metal to obtain the required mechanical strength.

The electrical insulation area 16e" more specifically may be made from a cylindrical insulating member (optional shape such as a polygon) manufactured from hard rubber as shown in the drawing. Insertion holes 124, 125 are formed in the center upper and lower sections to allow insertion respectively of the vibrating rod upper section 16e' and a vibrating rod lower section 16e"'. These holes do not allow passage all the way through above and below so that the blocked section of the hole therefore functions as an insulating section.

If these upper and lower insertion holes are formed to allow passage all the way through, then insulation material can be filled into the hole spaces where the rod is not inserted or a space allowing sufficient insulation can be established so that the vibrating rod upper section 16e' and a vibrating rod lower section 16e"' do not make contact. The cylindrical insulation material for the insertion holes 124, 125 serves to couple the vibrating rod upper section 16e' and vibrating rod lower section 16e"'. This coupling may be made with a setscrew (For example, cutting the male screws on the top edge of vibrating rod lower section 16e"' and the bottom edge of vibrating rod upper section 16e', cutting the female screws in insertion holes 124, 125, and joining both of them, and if necessary, applying a washer on the joint if further needed, and clamping with a machine screw.) or even joining them with adhesive is acceptable. Any other kind of structure may be used for this section as long as it achieves the desired object.

When the vibrating rod for example has a diameter of 13 millimeters, the insulation area 16e" has a length (height) L for example of 100 millimeters, the outer diameter r₂ for example is 40 millimeters, and the inner diameter r₂ of the insertion holes 124, 125 is 13 millimeters.

As shown in FIG. 30 and in FIG. 27 through FIG. 28, an electrical line 127 connects to the upper section of vibrating rod lower section 16e"' from directly below the electrical insulation area 16e". This electrical line 127 is connected to a power supply 34. Here, as shown in FIG. 27, one electrical line 127 (side connecting close to the positive electrode member 2x) of insulation vibro-stirring means 16 connects to the positive terminal, and the other electrical line 127 (side close to negative electrode member 2y) connected to the negative terminal of the insulation vibro-stirring means 16. The positive electrode member 2x and the negative electrode member 2y connect via the positive electrode main bus bar 201 and the negative electrode main bus bar 202, to the power supply 34 as shown respectively in FIG. 29.

The vibrating rod lower section 16e"', vibrating blade clamp member 16j and vibrating blade 16f are made from an electrically conductive member such as metal, then the vibrating rod lower section 16e"', vibrating blade clamp member 16j and vibrating blade 16f of one of the insulation vibro-stirring means can also be utilized as the positive electrode (or anode) member; and the vibrating rod lower section 16e"', vibrating blade clamp member 16j and vibrating blade 16f of the other insulation vibro-stirring means can be utilized as the negative electrode (cathode) member and electrolysis then performed.

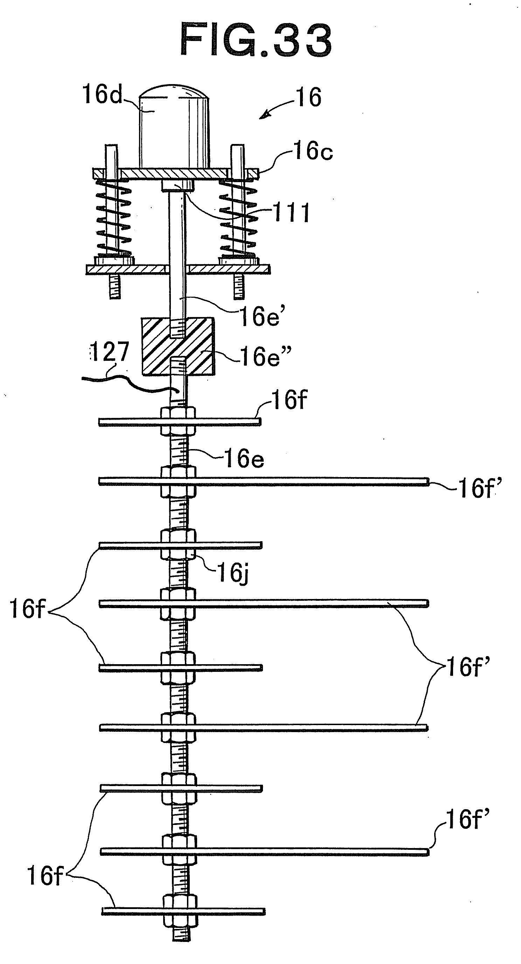

When using the vibrating blade 16f as the positive electrode member or the negative electrode member, increasing the surface area of the vibrating blade is preferable, especially when the electrode surface area is inadequate such as when not using a positive and negative electrode member different from that described above. To accomplish this, a length L2 showing a second peak, or a length L3 showing a third peak as shown in FIG.4 are selected as the length of the vibrating blade. The vibrating blade for stirring and agitating, and the electrode support blades for electrical current flow can be attached to the same shaft (described later on in FIG.33, 40, 43, etc.).

In this embodiment, utilizing the vibrating blade as the positive electrode member or the negative electrode member allows making the hydrogen-based/oxygen-based mixed gas compact. Moreover, the present embodiment vibrates and stirs the electrolyte fluid 14 with the insulated vibro-stirring means while electrolyzing so that electrolysis can be performed for example with a gap from 20 to 400 millimeters between the positive electrode member and the negative electrode member without electrical shorts occurring, the same as when utilizing the non-insulated vibro-stirring means.

In the present embodiment, the vibrating rod upper section 16e' is electrically insulated from the vibrating rod lower section 16e"' by the insulation area 16e" so there is no effect on the vibrating motors 16d from electrical conduction by way of the vibrating rod lower section 16e"'. Also in this embodiment, the insulation area 16e" has heat insulating properties so the vibrating rod lower section 16e"' is also heat-insulated from the vibrating rod upper section 16e', so there is little effect from the temperature of the electrolyte fluid 14 on the vibrating motors 16d.

Moreover, in the present embodiment, an insulation area 16e" is present even when electrolyzing without utilizing the vibrating blade of the insulated vibro-stirring means as the positive electrode member or the negative electrode member and therefore renders the advantage that the effect of conducting electricity within the electrolyte fluid does not affect the vibrating motor 16d.

FIG. 33 is a side view showing another embodiment of the insulated vibro-stirring means of the present invention. This embodiment only differs from the examples in FIG. 27 through FIG. 29 in that the electrode support blades 16f' are installed on the vibrating rod lower section 16e'" at mutually alternate positions versus the vibrating blade 16f. The electrode support blade 16f' is electrically conductive and is electrically connected to the to the vibrating rod lower section 16e"' and functions as a power supply when applying power to the electrolyte fluid 14 and therefore does not require a vibro-stirring function. The purpose of the electrode support blade 16f' is to increase the electrode surface area and to decrease the gap between that electrode and the electrode on the opposite side so that the size (surface area) of the electrode support blade 16f' is preferably larger than the vibrating blade 16f. Also, as shown in the drawing, the tip (right edge) of the electrode support blade 16f'' preferably protrudes farther to the right than the tip (right edge) of the vibrating blade 16f.

The electrode support blade 16f" is preferably installed at a position midway between a vibrating blade and a vibrating blade on the vibrating rod. However the installation position is not limited to this position and may be installed at a position in proximity to a vibrating blade from above or below as long as there is not drastic reduction in the vibration-stirring effect. The electrode support blade 16f" can be installed on the vibrating rod lower section 16e"' in the same way as the vibrating blade 16f was installed.

The material of the electrode support blade 16f'' may be any material allowing use as an electrode. However since it must vibrate along the vibrating rod it must be sufficiently tough to withstand vibration. A conductive piece capable of usage as a vibrating blade made may for example of titanium (platinum plating can be deposited on its surface) or stainless steel (platinum plating can be deposited on its surface). The vibrating blade 16f need not always be an electrically conductive material when using the electrode support blade 16f", and may be made of plastic (synthetic resin).To make the angle of the vibrating blade 16f uniform, the vibrating blade 16e can be assembled at a certain angle into one piece with the vibrating blade clamp member 16j.

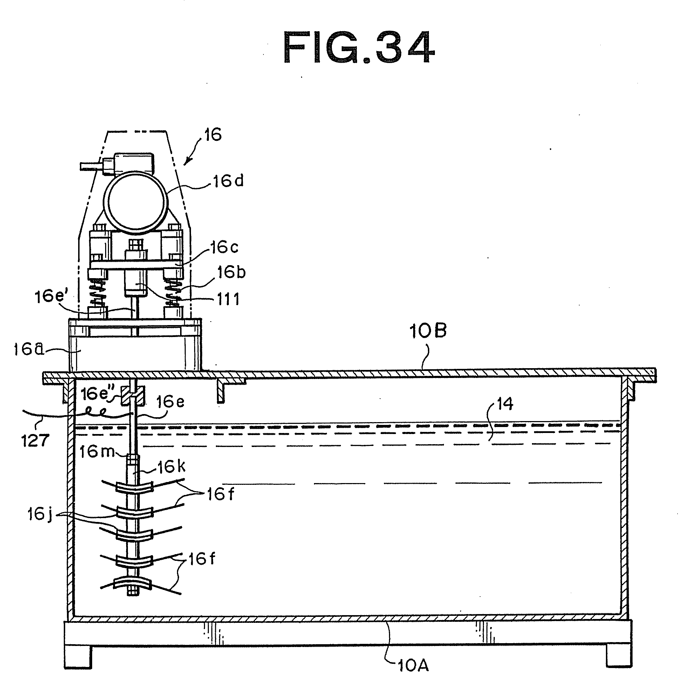

FIG. 34 and FIG. 35 are cross sectional views showing a specific example of the insulated vibro-stirring means of the present invention. In this embodiment, the vibrating blades are installed spanning the two vibrating rods.

FIG. 36 is a cross sectional view showing the vicinity of the vibrating blade 16f. The section of the vibrating blade 16f protruding out from the clamping member 16j contributes to generating a vibrating flow motion. This protruding section has a width D1 and length of D2. In this embodiment, the vibrating blades are installed across (spanning) the multiple vibrating rods. The vibration surface area of the vibration blades can therefore be made sufficiently large. Moreover large vibrating motion can be achieved. A large surface area utilized for the electrodes can also be obtained.

Though not shown in the drawing, the present embodiment utilizes a power supply 34 as the electrolyzing means described in FIG. 27 through FIG. 29. This embodiment also utilizes electrode support blades the same way as in the example in for FIG. 33.

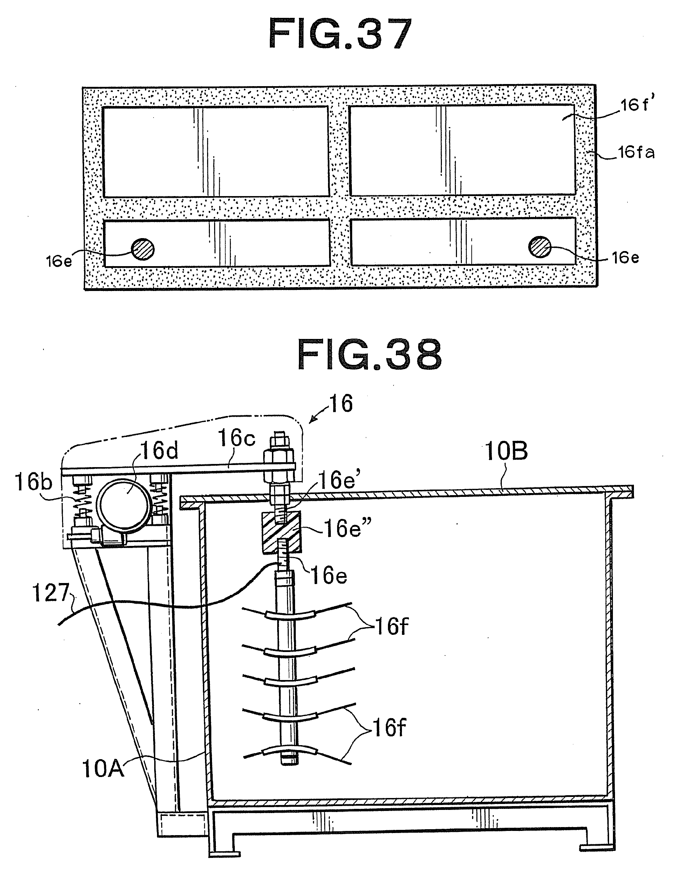

FIG. 38 is a cross sectional view one embodiment of the insulated vibro-stirring means. In this embodiment of the vibro-stirring means 16, the vibration motor 16d is installed outside the electrolysis tank 10A, and the vibration member 16c extends towards the electrolysis tank 10A. Though not shown in the drawing, the present embodiment also utilizes a power supply 34 for the electrolyzing means the same as described in FIG. 27 through FIG. 29. The present embodiment also utilizes electrode support blades the same as in the example in FIG. 33. In the figure, the insulated vibro-stirring means is installed on one side of the electrolysis tank however the same vibro-stirring means can also be installed on the other side of the electrolysis tank.

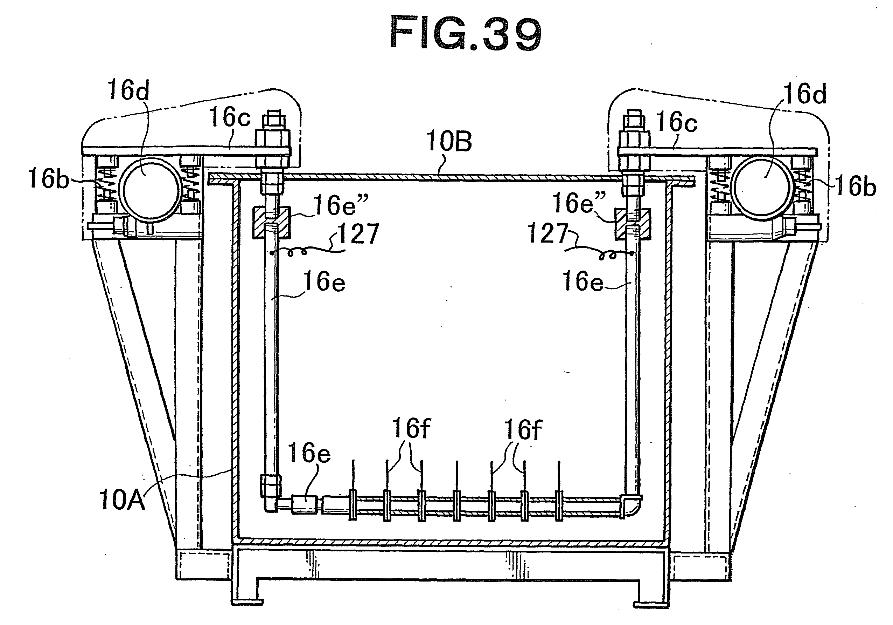

FIG. 39 is a cross sectional view of another embodiment of the insulated vibro-stirring means. In this embodiment, the same vibration motor 16d, vibration member 16c, vibrating rod upper section 16e', and the electrical insulation area 16e" are installed as a set on both sides of the processing tank 14. The vibrating rod lower section 16e"' is formed in the shape of a square open on the left side, and the two perpendicular sections are respectively installed on the two corresponding insulation areas 16e". The top edges of these two perpendicular sections of 16e are respectively connected by way of the electrical insulation areas 16e" to the two vibrating rods 16e. The vibrating blade 16f is installed nearly perpendicular to the horizontal sections of the vibrating rod 16e. The vibrating blades 16f in the figure protrude upwards however they may be made to protrude downwards. The vibrating blades 16f may be installed tilted relative to the perpendicular direction, the same as previously described.

Electrolysis can be performed with the insulated vibro-stirring means as shown in the figure by using an upward protruding blade as the positive electrode member, and using the downward protruding vibrating blade of the other insulated vibro-stirring means as the negative electrode member. In this case, the vibrating blades of both insulated vibro-stirring means can be set in a mutually inter-assembled state.

Moreover in theses embodiments, the vibrating blades need not always be installed facing upwards and downwards but may be used in an appropriate shape and installation according to the shape of the electrolysis tank, etc.

In this embodiment also, a power supply 34 is utilized for the electrolyzing means described in FIG. 27 through FIG. 29. In this embodiment also, the electrode support blade can be utilized the same as in the example in FIG. 33.

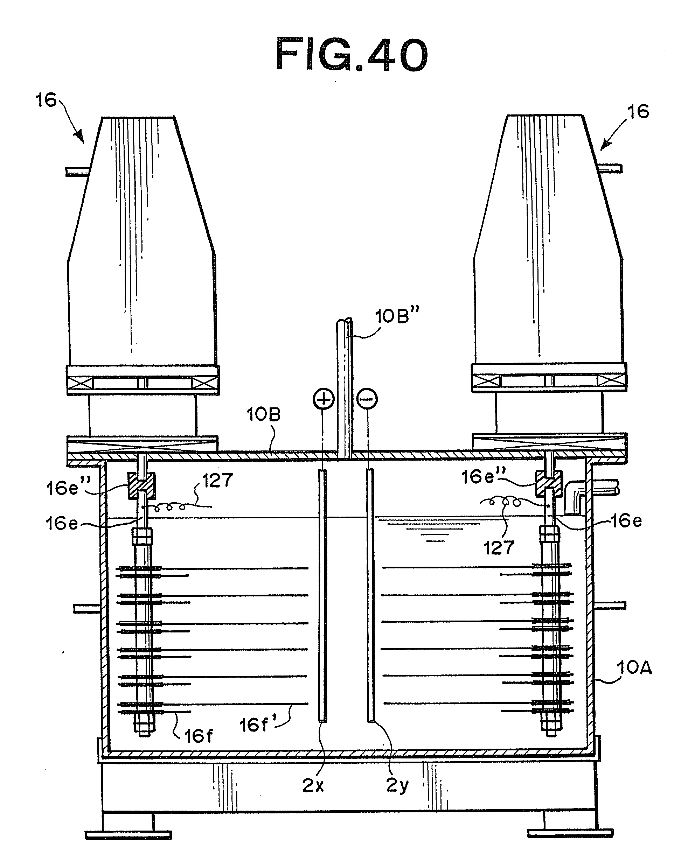

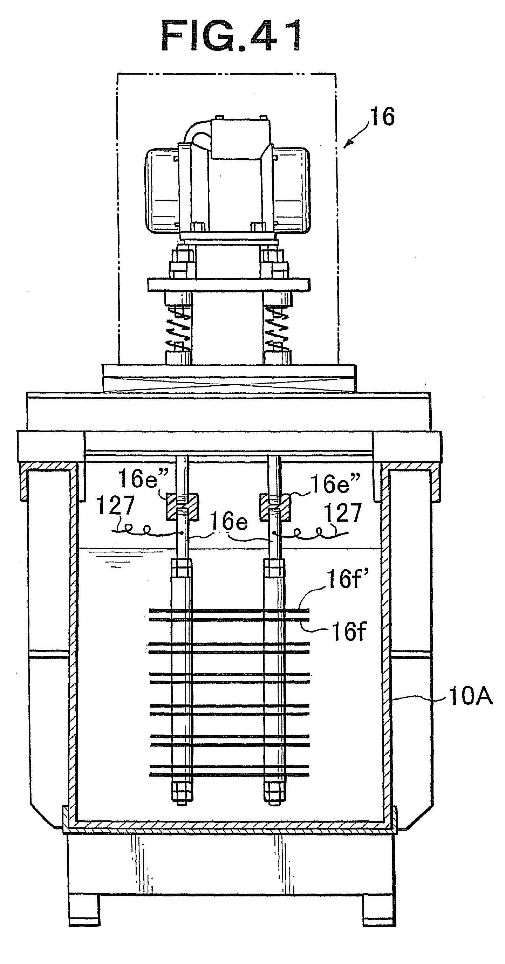

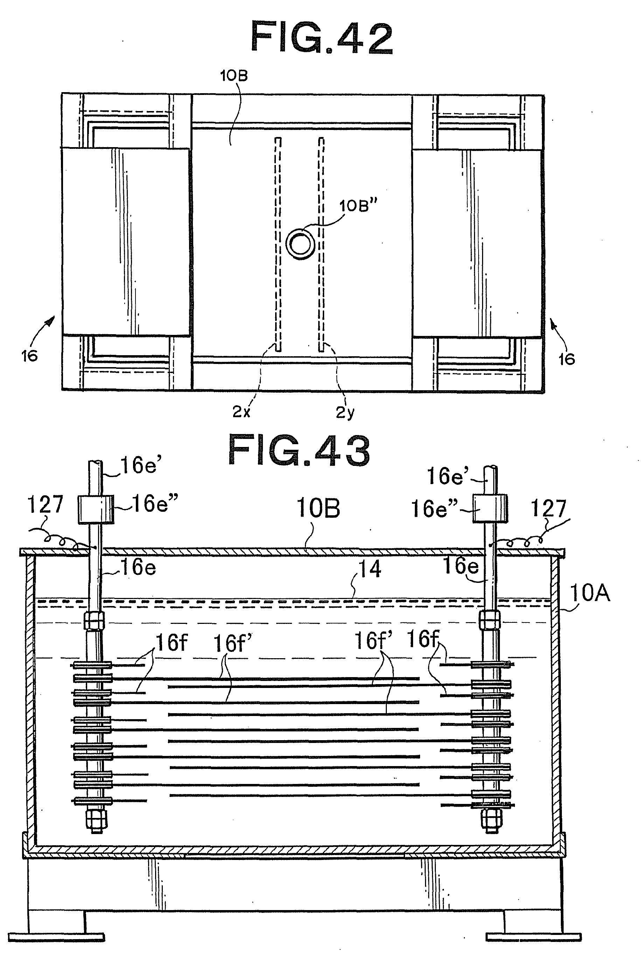

A specific example of the hydrogen-based/oxygen-based mixed gas generating means is shown in FIG. 40 through FIG. 42. Here, FIG. 40 and FIG. 41 are cross sectional views. FIG. 42 is a flat (plan) view. The present embodiment, is the example shown in FIG. 27 through FIG. 29 added with an electrode support blade 16f'.

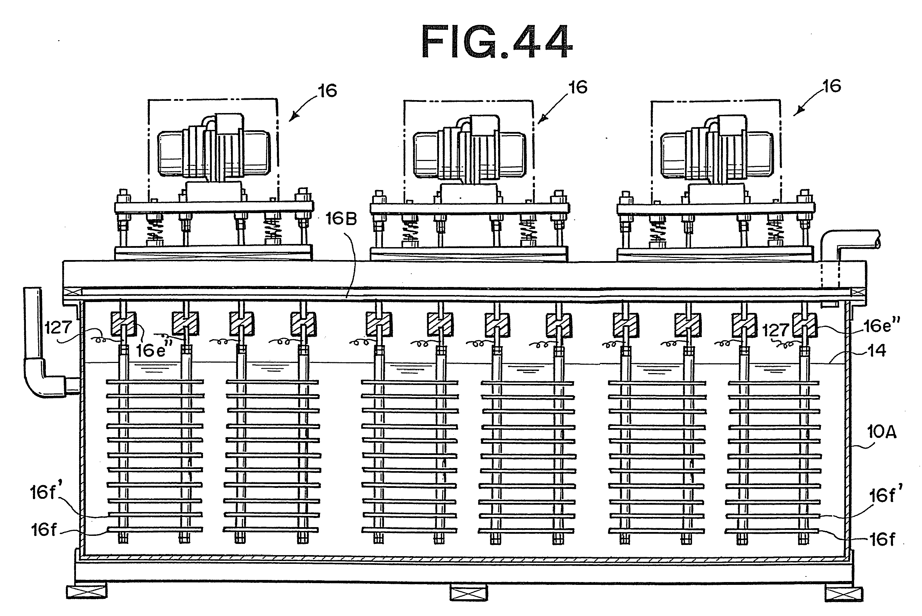

A specific example of the hydrogen-based/oxygen-based mixed gas generating means is shown in FIG. 43 through FIG. 44. Here, FIG. 43 is a cross sectional views. FIG. 44 is a flat (plan) view.

In the present embodiment, two insulated vibro-stirring means are installed within the electrolysis tank 10A. The electrode support blades 16f' of one insulated vibro-stirring means are positioned between the electrode support blades 16f' of the other adjacent insulated vibro-stirring means. In this way, one of the two insulated vibro-stirring means can be used as the positive electrode member (anode) and the other used as the negative electrode member (cathode) so that a positive electrode member and negative electrode member with a large surface area can be installed in close mutual proximity to each other to make a drastic improvement in the electrical current density. Installing a positive electrode member and negative electrode member in a mutually inter-assembled state without making contact in this way, can be performed in the same way with mutual vibrating blades of the two insulated vibro-stirring means.

In the present embodiment, the distance between the positive electrode member (vibrating blade or electrode support blade) and negative electrode member (vibrating blade or electrode support blade) installed in close mutual proximity upwards and downwards may for example be 5 to 50 millimeters. In this embodiment, insulating tape 16fa is preferably affixed to the outer circumferential surfaces on both sides of the electrode support blades 16f' as shown in FIG. 37 or an insulation coating is applied to prevent electrical shorts from occurring due to contact between the electrode support blades 16f' of the two insulated vibro-stirring means. Different installations or the same installation for the vibrating blades 16f used as the electrode member and the same insulating section can be formed. As another alternative, plastic insulating plates possessing the same shape may be installed in order to obtain the same insulating effect.

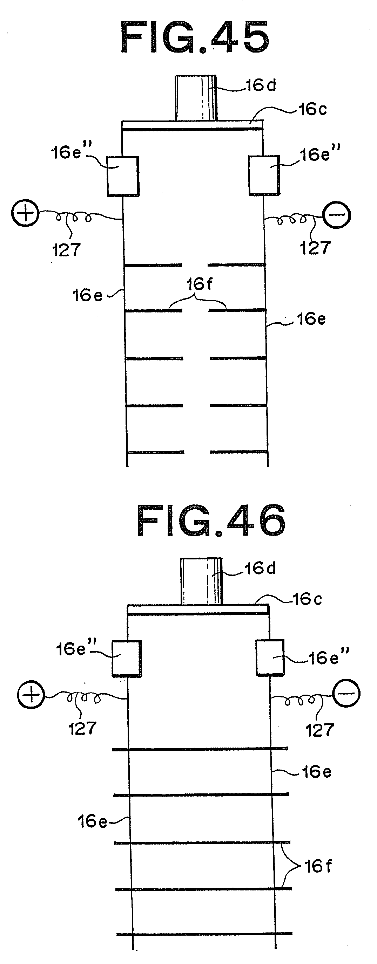

FIG. 45 through FIG. 47 are illustrated drawings showing one example of an insulated vibro-stirring means. In these examples, multiple vibrating rods are jointly connected to the vibrating rod member 16c. The electrical line 127 connected to each of the vibrating rod lower sections 16e, connects to the respective power supplies not shown in the drawing however there is no particular restriction and these may be changed as needed.

By utilizing the negative electrode member or the positive electrode member as a section (for example, the vibrating blade or electrode support blade) of the insulated vibration stirring member in the above examples, based on this highly efficient gas generation, each apparatus can deliver highly efficient gas generation even if there is no positive electrode member or negative electrode member other than the insulated vibration stirring member.

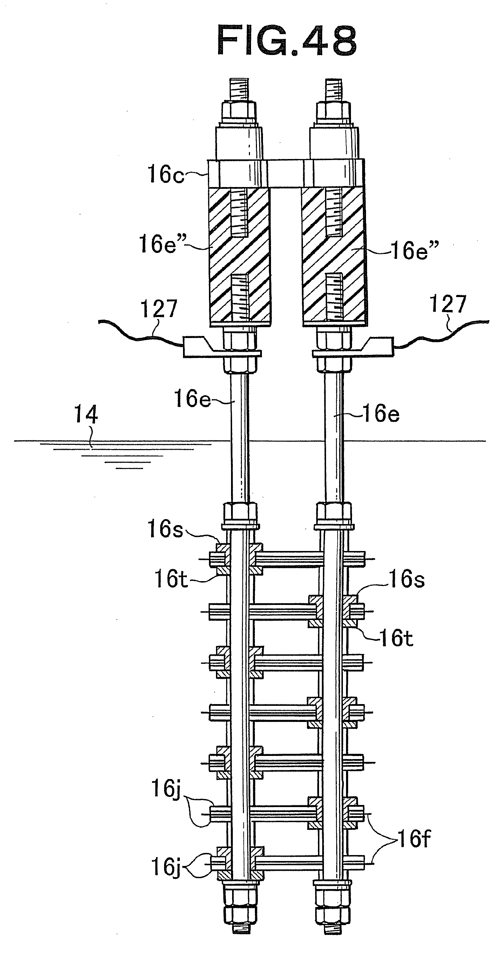

FIG.48 is a fragmentary cross sectional view of another embodiment of the insulated vibro-stirring means. In this embodiment, the vibrating blade 16e and clamp member 16j mechanically connecting the two vibrating rod lower sections 16e are grouped into two sets. A first set is electrically connected to the vibrating rod 16e' and the second set is electrically connected to the other vibrating rod 16e'. Voltage is applied across these two sets to conduct electrical power to the electrolyte fluid 14 and for electrolysis.

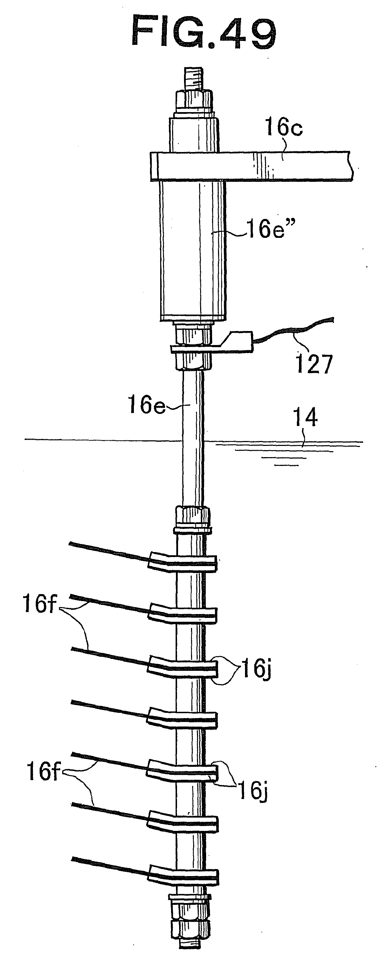

In other words, in FIG. 48, the odd-numbered vibrating blades 16f and clamp members 16j are electrically connected from the upper side with the vibrating rod 16e on the right side. However, the vibrating rod lower section 16e"' on the left side is electrically insulated by the insulation bushing 16s and insulation washer 16t. However, the even-numbered vibrating blades 16f and clamp members 16j are electrically connected from the upper side to the left side vibrating rod 16' but are electrically insulated from the right side vibrating rod 16e by the insulation bushing 16s and the insulation washer 16t. Further, the odd-numbered vibrating blades 16f and clamp members 16j from the upper side are made the first set; and the even-numbered vibrating blades 16f and clamp members 16j from the upper side are made the second set. The electrical wire 127 connecting to the left side of vibrating rod 16e, and the electrical wire 127 connecting to the right side of vibrating rod 16e, apply the necessary power from the power supply not shown in the drawing. Power can in this way be supplied across the first set (positive electrode member) and second set (negative electrode member) to the electrolyte fluid 14. The insulation bushing 16s and insulation washer 16t are omitted from the drawing in FIG. 49.

In this embodiment, the electrical insulation area 16e" is installed between the vibration rod 16e and the vibration member 16c comprising the vibration generating means. In other words, the electrical insulation area 16e" in this embodiment also functions as the attachment piece 111 for installing the vibrating rod 16e onto the vibration member 16c.

In this embodiment, the vibrating blade 16f forming the positive electrode member preferably has a surface of titanium coated with platinum. The negative electrode side is preferably coated with titanium.

In this embodiment, power is only supplied to the insulated vibro-stirring means for electrolysis so the apparatus can be made compact. Also the vibrating blades 16f can incorporate the functions of two types of electrodes and so from that viewpoint the device can also be made more compact.

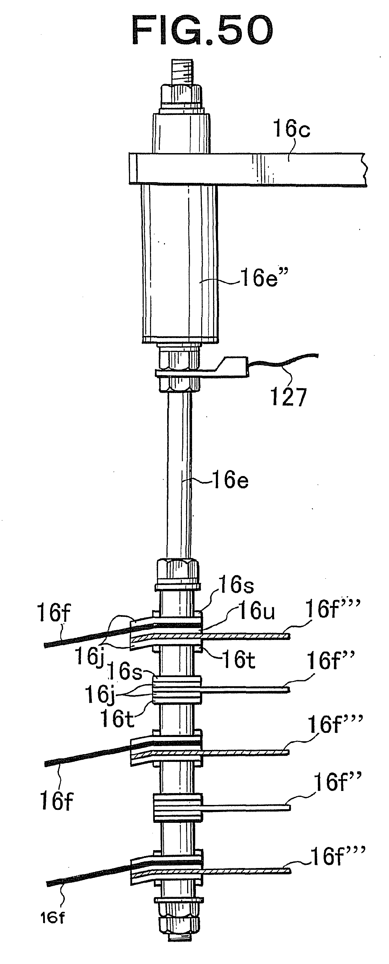

FIG. 50 is a fragmentary side view showing the structure of another embodiment of the insulated vibro-stirring means. In this embodiment, a positive electrode member (electrode support blade) 16f" is used instead of the upper side even-numbered blades 16f in the embodiments of FIG. 48 and FIG. 49. This positive electrode member 16f" does not contribute to the vibration stirring and extends only to the right side of the drawing. The positive electrode member 16f" preferably utilizes lath-webbed titanium (platinum plating on surface). On the other hand, a negative electrode member 16f" is added by way of the spacers 16u as the upper side odd-numbered blades 16f. This negative electrode member 16f"' also does not contribute to the vibro-stirring function and extends only to the right side of the drawing. Preferably, titanium plate for example is used as the negative electrode member 16f". The positive electrode member may be attached to the vibrating blade the same as the negative electrode member. In this embodiment, the positive electrode member 16f" and negative electrode member 16f" are utilized separately from the vibrating blade 16f so there is more freedom in selecting the electrode material. As shown in FIG. 50, the positive electrode member and the negative electrode member extend in a direction opposite the vibrating blade so there is no concern about these members making contact with the vibrating blade and therefore the gap between the positive electrode member and the negative electrode member as well as the gap between the positive electrode member and the vibrating blade or the gap between the negative electrode member and the vibrating blade can be made even smaller.

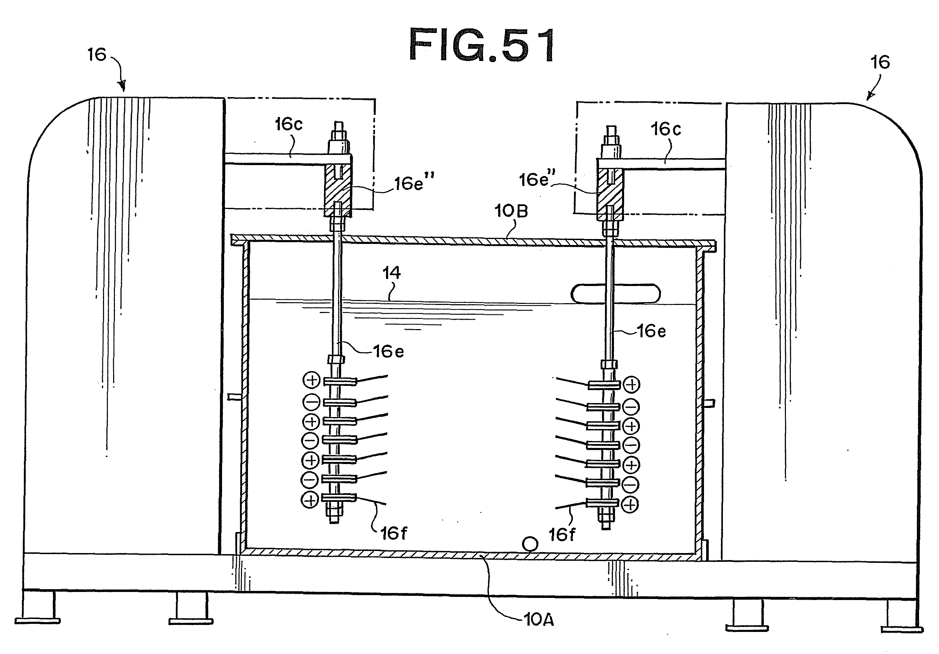

FIG. 51 is a cross sectional view showing the structure of another embodiment of the hydrogen-based/oxygen-based mixed gas means. FIG. 48 through FIG. 49 are embodiments utilizing two insulated vibro-stirring means.

In the above embodiments, both a positive electrode (anode) member and the negative electrode (cathode) member are attached to the insulated vibro-stirring means so electrolysis can be performed by supplying power via the electrolyte fluid 14 to these electrodes so that the apparatus can be made compact. Moreover, a high gas generation efficiency can be obtained per each device (or apparatus) based on this high gas generation efficiency.

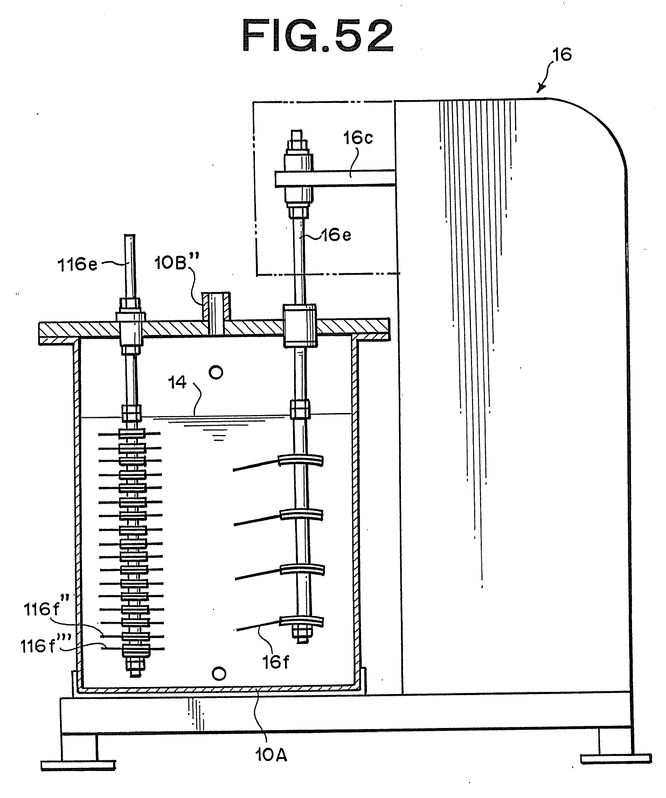

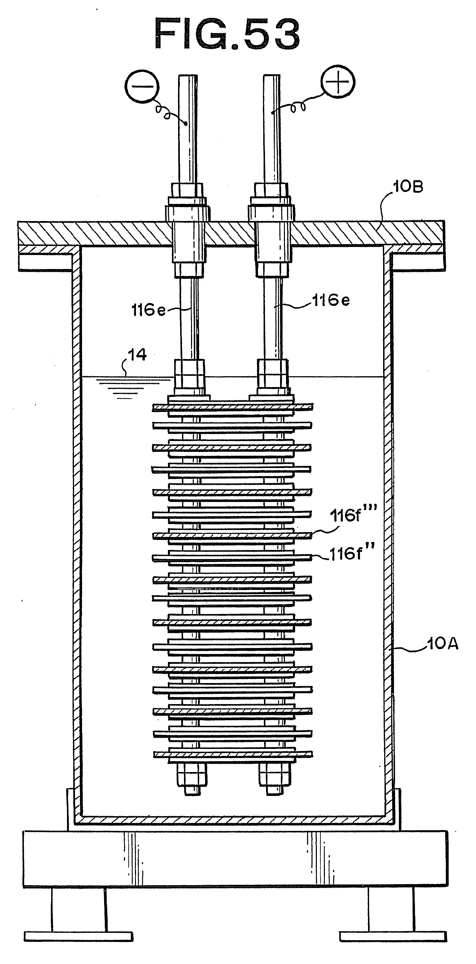

FIG. 52 through FIG. 53 are cross sectional views showing an example of the hydrogen-based/oxygen-based mixed gas generating means. In this embodiment, the vibro-stirring means is a non-insulated means; and the electrode pair including the positive electrode member and the negative electrode member utilizes structural elements similar to the insulated vibro-stirring means of FIG. 48 through FIG. 49. In other words, the positive electrode member 116f" and the negative electrode member 116f"' are attached to the two conductive rods 116e mutually arrayed upward and downward in parallel, the same as the case of the first group vibrating blade and the second group vibrating blade of the insulated vibro-stirring means of FIG. 48 through FIG. 49, and each of the conductive rods 116e is connected to the required positive electrode or negative electrode of the power supply.

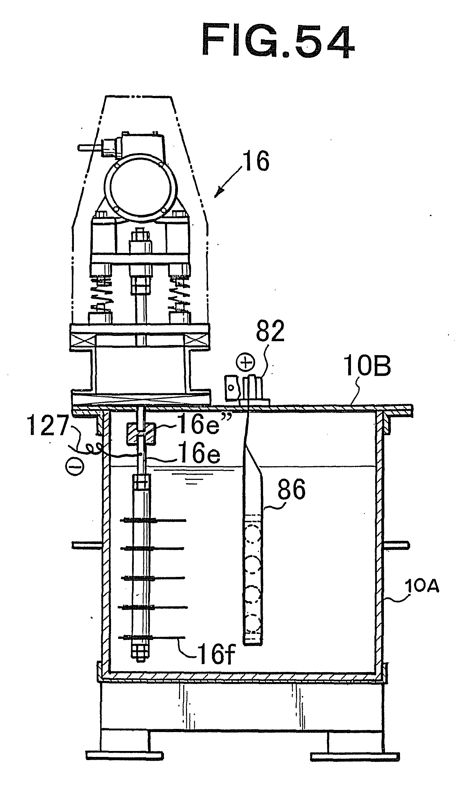

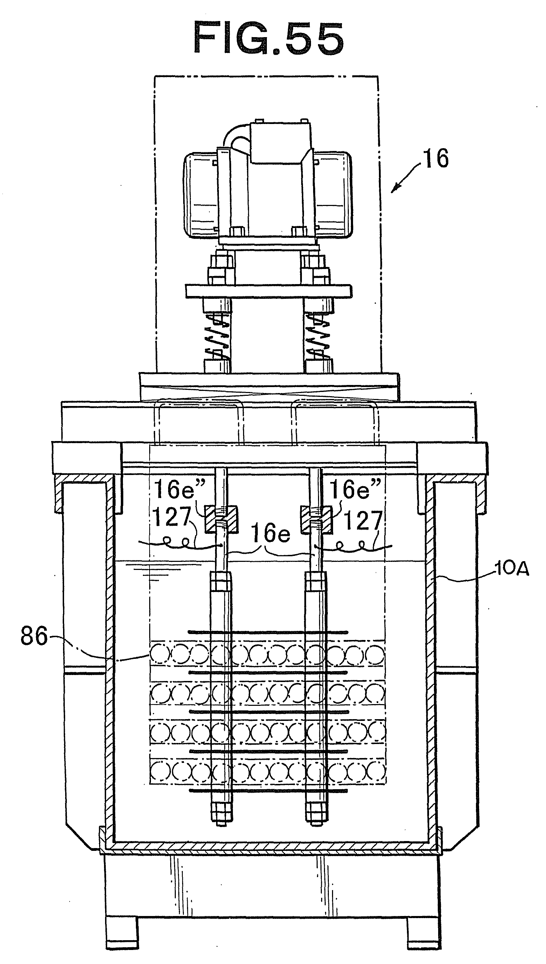

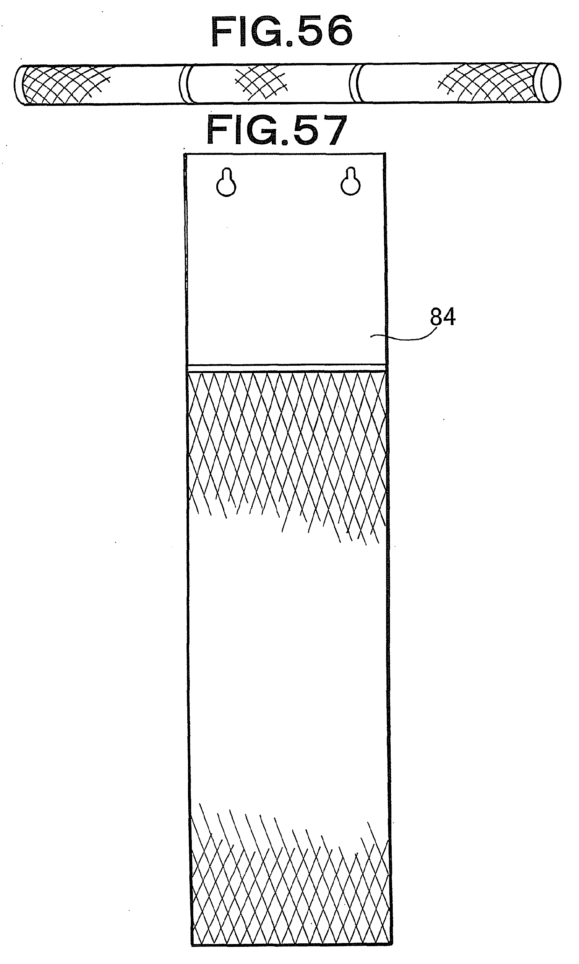

FIG. 54 through FIG. 55 are cross sectional views showing an example of the hydrogen-based/oxygen-based mixed gas generating means. In the present embodiment, the vibrating blade 16f of the insulated vibro-stirring means 16 is used as the negative electrode member; and the cylindrical titanium web case filled with metal balls as shown in FIG. 56 is used as the positive electrode member. This web case is maintained in a horizontal position. The holding means 82 for the positive electrode member 86 may for example be a positive electrode (anode) busbar.

The positive electrode (anode) member is for example made from lath-webbed titanium (preferably with platinum deposited on the surface) . FIG. 57 is a frontal view of the lath-webbed positive electrode member 84. Two suspension holes are formed in the upper section for hanging downwards. The area from the center section to the lower section is formed in a web shape. This web shape is immersed in the processing liquid.

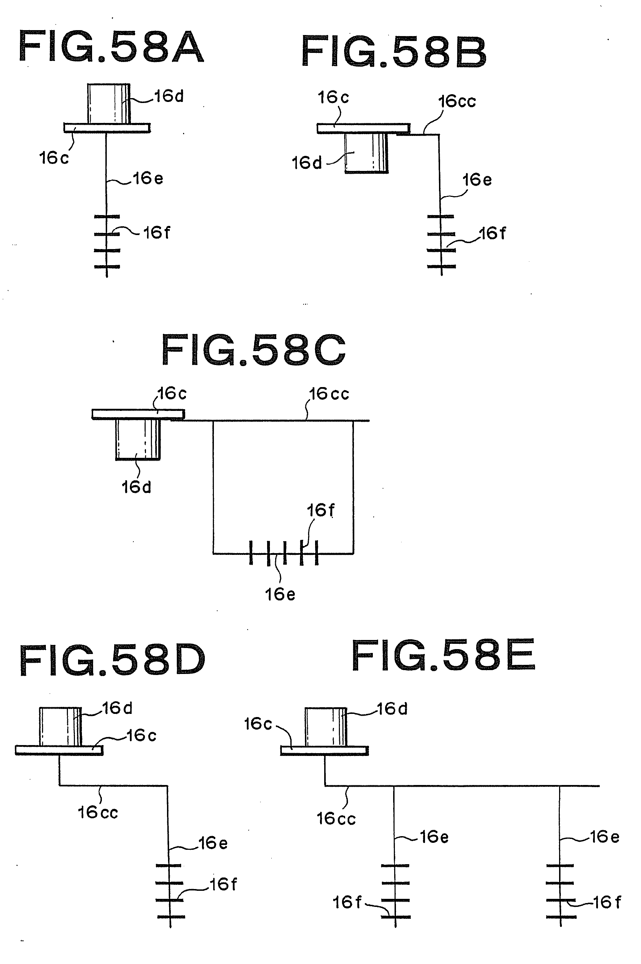

FIG.58A through FIG. 58E are pictorial drawings showing the state where the vibration generating means and the vibration stirring member are connected. In the example in FIG. 58A, the vibrating rod 16e of the vibration stirring member is directly connected to the vibration member 6c of the vibration generating means. In contrast, in the example in FIG.58B through FIG. 58E, the intermediate member 16cc is connected to the vibrating member 16c, and the vibrating rod 16e is connected to the intermediate member 16cc.

In a state where the hydrogen-based/oxygen-based mixed gas is comprised of a uniform mixture of hydrogen gas and oxygen gas generated within the electrolysis tank; the trapping means for separately trapping the hydrogen gas and oxygen gas contains a lid member for covering the upper part of the tank, and a gas extraction outlet (or port) connected to that lid member, and a gas extraction tube connected to that gas extraction port. In the drawings for describing examples of the vibro-stirring means of this invention, the lid member for efficiently trapping the emitted gas is omitted from the drawings. However, in actual use, a lid member is always attached to the electrolysis tank of the gas generating means.

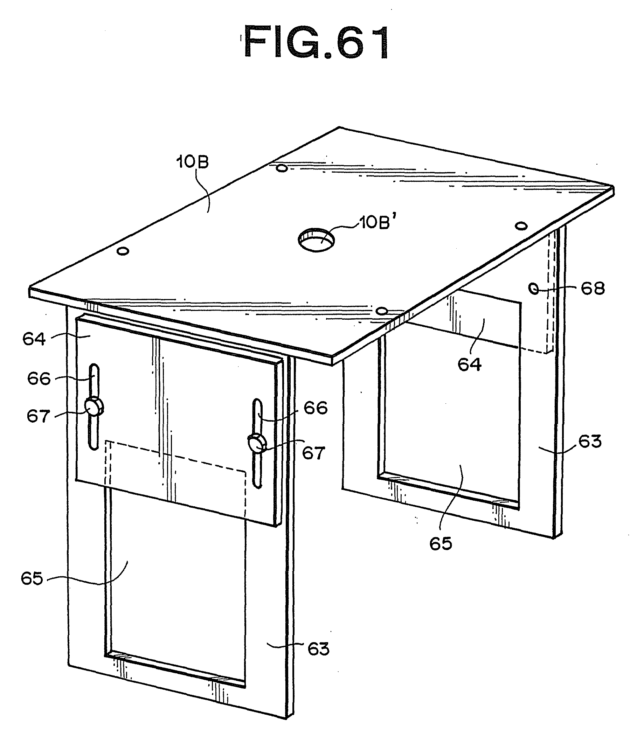

A variation of the lid member 10b is shown in FIG. 61. In this example, the lid member 10B is attached to the electrolytic tank 10A only at the upper section of the electrode groups 2x, 2y shown in FIG. 1. An enclosure member 63 is attached extending downwards on both ends of the lid member 10B. An opening 65 is formed in this enclosure member 63 to allow electrolyte fluid to flow into the lower section immersed in electrolyte fluid. A cover plate 64 can be installed to be adjustable upward or downward to cover a section of the upper area of that opening 65. To make the cover plate 64 adjustable, slots 66 oriented upwards and downwards can be formed on the cover plate 64, and bolts 67 fit into the screw holes 68 formed in the enclosure member 63 for adjustment by means of the slots 66.

The vibrating rod 16e does not pass through the lid member of the vibro-stirring means when using this type of lid member. A sealed structure as described above is preferable in this case, in order to improve the recovery efficiency of the hydrogen-based/oxygen-based mixed gas and prevent the electrolyte fluid from scattering (into the air).

Sealing in the generated hydrogen-based/oxygen-based mixed gas by means of this lid member and enclosure member allows raising the gas pressure by a corresponding amount. A certain amount of gas pressure is convenient when handling the gas pressure later on. Adjusting the vertical position of the cover plates 64 allows adjusting the fluid level in the section above the electrode groups 2x, 2y and therefore adjusts the gas pressure.

Incorporating a means for adjusting the gas pressure is even more preferable. One example of a system as a gas pressure adjusting means is shown in FIG. 59. A liquid comprised for example of 80 percent water and 20 percent methanol (colorant) is filled into the seal port. Moreover, a flame stopper tank or a flame arrestor can be installed between the hydrogen-based/oxygen-based mixed gas supply port for the fuel cell and the gas generating means or gas accumulator, in order to prevent reverse flow of a fire. The seal port is not always required when connected directly to a fuel cell. A seal port for the hydrogen-based/oxygen-based mixed gas of this invention for processing the gas for safety and so that it can be viewed by the naked eye however if safety can be ensured by another method then raw gas can be supplied to the fuel cell without processing the gas and this also proves convenient since none of the hydrogen in the electrolyte fluid will be lost.

The positive electrode member and the negative electrode member installed in the electrolysis tank are preferably both usually electrode plates. In this case, a gap of about 50 millimeters at its shortest was required between the electrodes in the related art not utilizing a vibro-stirring means. Forming a gap any larger than this caused the possibility of accidents occurring due to excess current flow. However the distance (gap) between the electrodes can be shortened to between 1 to 20 millimeters by utilizing the vibro-stirring means of this invention. The electrical current efficiency can be vastly improved in this way. Making the electrodes and closer will cause excessive electrical current flow resulting in electrical shorts. The actual gap between electrodes in this invention is preferably 5 to 400 millimeters. Detailed information can be found in WO03/000395A1 application rendered by the present inventors.

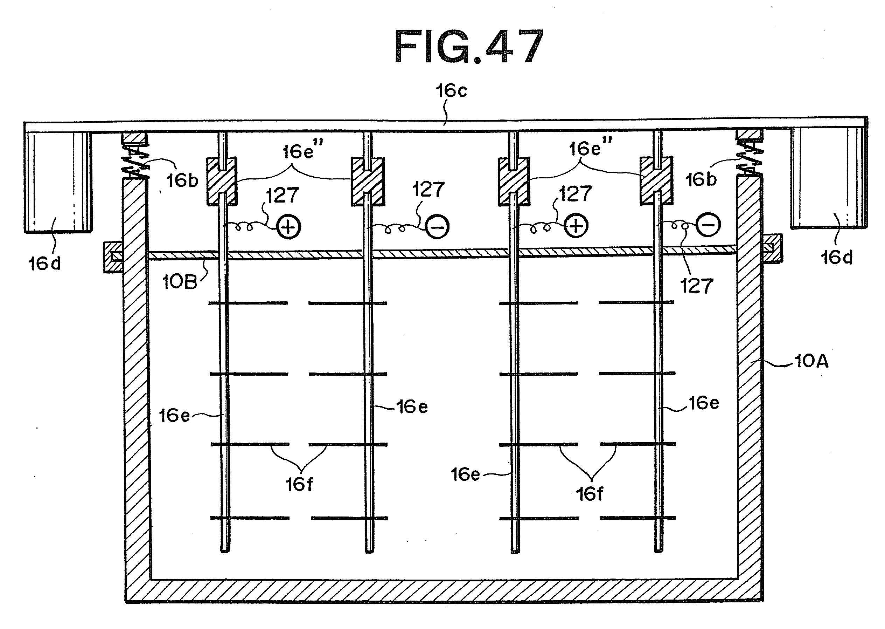

In this invention, the vibrating blades and the electrode support blades function as electrodes utilizing the insulated vibro-stirring means. This example is shown in FIG. 33, FIG. 38 through FIG. 51, FIG. 54, and FIG. 55. As shown for example in FIG. 40, in addition to the pair of electrodes (2x, 2y), this invention includes a case utilizing electrode support blades (16f) and the vibrating blades (16f) of the insulated vibro-stirring means as electrodes; and a case utilizing for example, just the electrode support blade and the vibrating blades of the insulated vibro-stirring means as electrodes as seen for example in FIG. 43 and FIG. 47. In these case, the distance (gap) between electrodes taking the form vibrating blades and/or electrode support blades is usually 3 to 50 millimeters, and preferably is 5 to 20 millimeters.

The present invention is capable of generating hydrogen-based/oxygen-based mixed gas by electrolysis of electrolyte fluid consisting of 5 to 50 percent and preferably 50 to 30 percent weight by volume of electrolytic material at pH7 to 10 at a temperature of 20 to 100 degrees centigrade, and preferably 20 to 90 degrees centigrade to reach an electrical current density of 5 to 100A/dm² and preferably 5 to 50A/dm².

Soluble alkali metal hydroxide or alkali rare-earth metal hydroxide or ammonium alkyl 4 (tetra-alkylammonium), or inorganic acids such as sulfuric acid, phosphoric acid or organic acids may be utilized as the electrolytic material.

The water utilized as the electrolyte fluid is preferably distilled water however well water, industrial use water, tap water, river water or lake water may also be used.

The basic structure of the vibro-stirring means of this invention is: an insulated vibro-stirring means including at least one vibration generating means; and at least one vibrating rod for vibrating while linked to the vibration generating means; and an insulated vibration stirring member comprised of an electrical insulation area installed at a section linking at least one vibrating blade installed on the vibrating rod and the vibration rod and vibration generating means, or installed on a section nearer the linking section than where the vibrating blade is installed on the vibrating rod. In this embodiment, the stirring means is preferably an insulated vibro-stirring means.

On the insulated vibro-stirring means, the electrode support blades can be electrically connected with an electrical line to the vibrating blade on the vibrating rod of the insulated vibration stirring member. The electrode support blades are preferably installed on the vibrating rod so that the electrode support blade positions mutually alternate with the vibrating blade positions. The surface area of the electrode support blades is preferably larger than the surface area of the vibrating blades, moreover, the tips of the electrode support blades preferably protrude farther than the tips of the vibrating blades.

The generating means for the vibro-stirring means or the insulated vibro-stirring means includes a vibration motor. The vibration motor of the vibro-stirring means vibrates at 10 to 500 Hertz. The motor preferably vibrates at a frequency 10 to 200 Hertz and even more preferably is made to vibrate at 20 to 60 Hertz under the control of an inverter.

On the insulated vibro-stirring means, the electrode or in other words the positive electrode member or the negative electrode member can be utilized as the electrode for performing electrolysis by connecting an electrical wire to a position on the vibrating blade side from the electrical insulation area of the vibrating rod.

In this case, the vibrating blade can combine the function for vibration stirring the fluid, with the function of an electrode as shown for example in FIG.50. However, the electrode support blade never or almost never possesses a function for vibration stirring the fluid and mainly functions as an electrode.

The insulated vibro-stirring means can for example be used with the electrode pair in FIG. 52, however the insulated vibro-stirring means can also be made to serve the function of the electrode pair. In this case, as shown in FIG. 47, one insulated vibro-stirring means is utilized as the positive electrode, and the other insulated vibro-stirring means is utilized as the negative electrode. Also, even in the case of a single unit insulated vibro-stirring means as shown for example in FIG. 48, if this unit includes two vibration stirring rods then one vibration rod can serve as the positive electrode, and the other vibration rod can serve as the negative electrode.

In the present invention as described above, the vibrating blades of the vibro-stirring means cause a powerful vibrating flow movement in the electrolyte fluid so that the electrolyte fluid can make contact with the electrodes with ample, satisfactory uniformity and also an adequate supply quantity. Therefore even if the gap between the positive electrode member (anode) and the negative electrode member (cathode) is drastically reduced to a distance (gap) even smaller than in the related art, the ions that are required can still be supplied in an adequate quantity needed for electrolysis, and the electrolytic heat generated in the electrodes can be quickly dissipated. Electrolysis can therefore be performed at a high electrical current density so that hydrogen-based/oxygen-based mixed gas can be collected with high efficiency. Further, by reducing the distance between the positive and negative electrodes (cathode and anode) as described above, the effective surface area of the electrodes can be sufficiently increased per volumetric unit so that ample quantities of hydrogen-based/oxygen-based mixed gas can be generated even if the size is made more compact.

In particular, when performing electrolysis by vibrating and agitating the electrolyte fluid using the vibro-stirring means, the hydrogen and oxygen generated in the vicinity of the electrodes at an atomic level do not form bubbles between the electrodes and disperse within the fluid so there is no problem with the hydrogen and oxygen generated in the electrolyte fluid forming bubbles and adhering to the surface of the electrodes and increasing the electrical resistance. Therefore hydrogen-based/oxygen-based mixed gas can be generated in large quantities compared to the method of the related art.

In other words, in order to achieve the above objects, the present invention provides a hydrogen-based/oxygen-based mixed gas generated by a hydrogen-based/oxygen-based mixed gas generating means characterized in containing H and, H₂ and, H₃ and/or HD and, OH and, ¹⁶O, and O₂. According to an aspect of the present invention, and the hydrogen-based/oxygen-based mixed gas in particular contains:
H₂: 55 to 70 mole%
H: 0.12 to 0.45 mole%
H₃ and HD totaling: 0.03 to 0.14 mole%
OH: 0.3 to 1.2 mole%
¹⁶O: 1.0 to 4.2 mole%
O₂: 5 to 27 mole%.

This hydrogen-based/oxygen-based mixed gas differs from the so-called Brown's gas in the following points. Namely, satisfactory electrolysis can be achieved when utilized with the vibro-stirring means even if the gap between the negative electrode member and the positive electrode member is made smaller. Contact by the positive and negative electrode flow members with the electrolyte fluid is in particular made at a high uniform flow speed so that there is a satisfactory supply of ions required for electrolysis. Moreover, no bubbles are formed in the hydrogen-oxygen gas in the electrolyte fluid so that the electrical resistance will not become high. The hydrogen-based/oxygen-based mixed gas of this invention possesses a particularly high content of activized elements (activized hydrogen, activized oxygen) in a state near that of oxygen and hydrogen in the period prior to generation of H₂ and O₂.

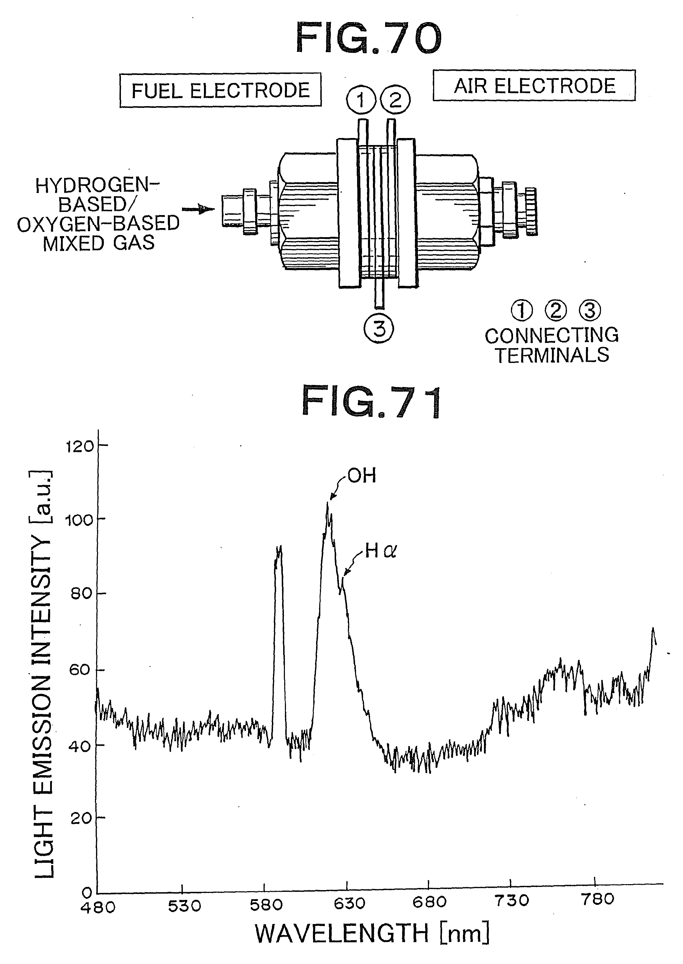

In other words, when the hydrogen-based/oxygen-based mixed gas obtained by utilizing the vibro-stirung means was combusted and the spectrum measured on a spectrum analyzer, a peak indicating the presence of an OH radical as the activized element was observed in the vicinity of 620 nanometers as shown in FIG.71. Moreover, a peak indicating the presence of hydrogen H*α* in the atomic state constituting the activized element was observed in the vicinity of 30 nanometers. In contrast to gas of this type of the related art where absolutely no OH or hydrogen in an atomic state was observed, a surprising fact was that OH or hydrogen in an atomic state was observed in the hydrogen-based gas or the hydrogen-based/oxygen-based mixed gas of this invention, when the flame luminance spectrum of this gas (of the invention) was observed (A peak was observed on the same wavelength even when measured at a location 15 millimeters and a location 20 millimeters from the flame.).

Moreover, when measurements checking for the presence of this OH or hydrogen in an atomic state made immediately after the hydrogen-based/oxygen-based mixed gas was generated by the vibro-stirring means of this invention were compared with measurements made 12 hours after the hydrogen-based/oxygen-based mixed gas had been stored in a gas accumulator, the results were found to be nearly the same. Therefore, this OH or hydrogen in an atomic state was present not just momentarily in the gas obtained by manufacturing. Also, when this hydrogen-based/oxygen-based mixed gas was combusted, it was observed to generate a high temperature.

No peak of this type was observed in the Brown's gas of the related art. The reason for this is still not clearly known however based on this type of difference, when the hydrogen-based gas or the hydrogen-based/oxygen-based mixed gas of this invention is utilized as fuel in fuel cells, a high level of electrical generating efficiency is probable that could not be obtained from other fuel cells up to now.

The present inventors analyzed the gas (In these specifications, this gas is named hydrogen-based/oxygen-based mixed gas.) obtained by the electrolysis of water utilizing this vibro-stirring means utilizing the mass spectrometer (dual-convergence) [product brand name EMD-O5SK] under the following conditions.
Ion acceleration speed: 1200 volts
Ion bombardment method: Voltage accelerated impact type
Resolution: 500
Ion flight distance: 26 cm
Vacuum intensity: 5X100⁻⁷ Torr
Full scale: 5 volts

The hydrogen-based/oxygen-based mixed gas supplied for this analysis that was generated from the electrolysis tank where the vibro-stirring means was installed, is stored in a gas accumulator of FIG.72. Processed gas is obtained from one of the seal ports in FIG. 72, and raw gas is obtained without passing it through a seal port. Coloring the gas will make it easier to handle via the seal port. The seal port is filled with an alcohol solution comprised of 30 percent methanol and 70 percent water. When raw gas is supplied to the seal port, the raw gas passes through after attaining a bubble state within the methanol solution. The elements in the processed gas obtained in this way differ slightly from the raw gas data.

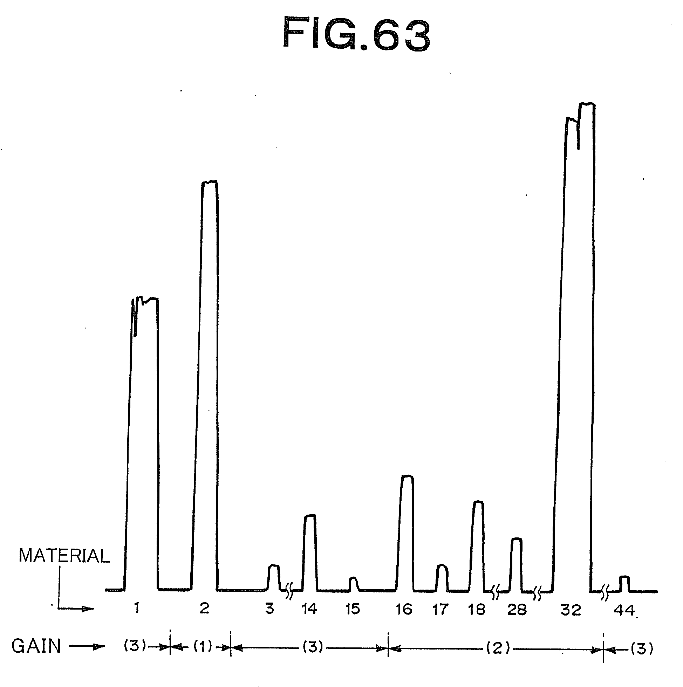

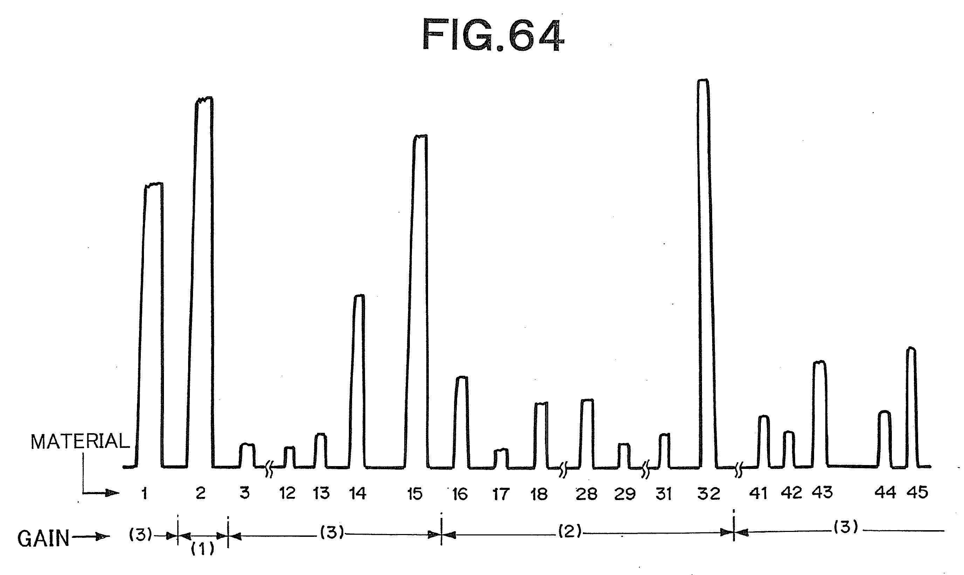

A portion of the data (chart) obtained by mass spectrometry is shown in FIG. 63 (raw gas) and FIG. 64 (processed gas). Besides containing raw gas elements, the processed gas also contains elements with a high mass assumed to occur in methanol. In any case, the gas of this invention as seen in this chart is characterized in differing from the gas of the related art in containing H, H₃ and/or HD and, OH and, ¹⁶O.

However the heights shown in FIG. 63 and FIG. 64 were not all measured under identical conditions. The gain shown for the mass (1) is 100 times higher than the actual measured height. The gain shown for the mass (2) is 10 times higher than the actual measured height. The gain shown for the mass (3) is the actual measured height. In other words, the quantity of the gas elements corresponding to the mass gain (2) and gain (3) is too small and therefore is an amplified and measured quantity.
Gas elements found from these figure are shown in Table 1 as follows.

**[Table 1]**

| Gas Elements | Raw Gas (mole %) | | | Processed Gas (mole %) | | |
|---|---|---|---|---|---|---|
| | (A) | (B) | (C) | (a) | (b) | (c) |
| H₂ | 60 | 55 | 57 | 58 | 54 | 55 |
| H | 0.2 | 0.28 | 0.42 | 0.2 | 0.2 | 0.42 |
| H₃, HD | 0.05 | 0.07 | 0.04 | 0.05 | 0.045 | 0.03 |
| OH | 0.8 | 0.9 | 0.35 | 0.9 | 0.9 | 0.3 |
| ¹⁶O | 2.5 | 3.5 | 1.6 | 3.9 | 3.9 | 1.4 |
| H₂O | 3.0 | 3.5 | 1.3 | 3.3 | 3.3 | 0.8 |
| N₂, CO | 2.8 | 4.8 | 0.7 | 6.7 | 6.7 | 1.0 |
| O₂ | 18 | 21 | 6.8 | 23 | 23 | 5.8 |
| CO₂ | 0.12 | 0.12 | 0.02 | 0.13 | 0.13 | 0.08 |
| Organic compounds | | | | | | 2.0 |

| | | | | | | |
|---|---|---|---|---|---|---|
| (A), (a): Sampled in rubber container; measured vacuum intensity 8X10⁻⁷ Torr; measured 0.5 hours after gas sampling | | | | | | |
| (B), (b): Sampled in rubber container; measured vacuum intensity 8X10⁻⁷Torr; measured 24 hours after gas sampling | | | | | | |
| (C), (c): Sampled in gas barrier container; measured vacuum intensity 5X10⁻⁷Torr; measured 1 hour after gas sampling. | | | | | | |

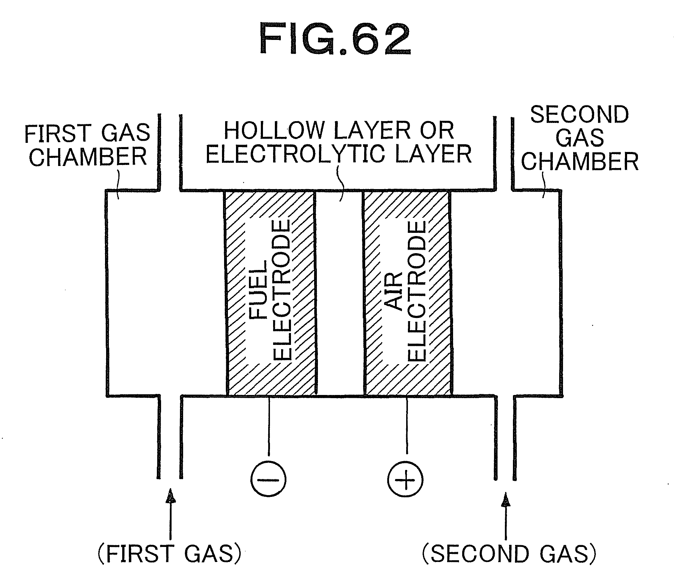

FIG. 62 shows a diagram of the fuel cell attained by the gas generating method of this invention. A hollow layer or an electrolytic layer are interposed between the fuel electrode or the air electrode the same as in the related art. A first gas is supplied from the gas supply port to the first gas chamber on the fuel electrode side. A second gas is supplied from the gas supply port to the second gas chamber on the air electrode side.

The hollow layer or the electrolytic layer may utilize the same electrolytic layer as used in the fuel cells of the related art. For example, potassium hydroxide is the electrolytic material in alkali (soluble) fuel cells (AFC). Phosphoric acid is used as the electrolytic material in phosphoric acid fuel cells (PAFC). Lithium carbonate or potassium carbonate is used as the electrolytic material in molten carbonate fuel cells (MCFC). Stabilized zirconium is used as the electrolytic material in solid oxygen fuel cells (SOFC). Ion exchange film (cation exchange film) is used as the electrolytic material in polymer electrolyte fuel cells (PEFC).

The hollow layer or the electrolytic layer may also utilize for example, air-gap layers comprised only of air or may also there utilize metal mesh, glass mesh, carbon mesh, filter paper, precision filter membrane, limit excess filter membrane, NF film, reverse penetration film, gas separator film, polymer gel, inorganic gel, polymer film, or multi-porous hollow film filled with graphite, (In other words, a layer containing a function for allowing gas flow through woven layers or gas permeable ceramic layers) etc.

The surface on the side bordering the fuel electrode and air electrode is preferably a surface with irregular shapes arrayed in numerous parallel grooves for enlarging the glass contact surface area.

Hydrogen-based gas or the hydrogen-based/oxygen-based mixed gas of this invention may be utilized as the first gas. Air, oxygen gas, the oxygen-based gas, or the hydrogen-based/oxygen-based mixed gas of this invention may be utilized as the second gas.

In fuel cells utilizing hydrogen gas of the related art as the fuel, an electrolytic layer is indispensable for forming protons in the fuel electrode and for making these protons react with the oxygen at the air electrode. In this invention, a hollow layer can be utilized in place of the electrolytic layer, by using hydrogen-based/oxygen-based mixed gas or hydrogen-based gas as the first gas. In this case, the fuel electrode must be gas-permeable. It is essential that the hollow layer not allow shorts to occur between the fuel electrode and the air electrode. In this invention, the hydrogen-based/oxygen-based mixed gas can be utilized as both the first gas and the second gas. In that case, the air electrode must also be gas-permeable. An important characteristic of these fuel cells of this invention is that an electrolytic layer is not required. Not requiring an electrolytic layer provides the benefit that the cell structure can be simplified and no maintenance of the electrolytic layer is required. In all other points, the structure and the material of the fuel cell of the related art can be utilized.

When supplying the hydrogen-based/oxygen-based mixed gas from the gas supply port formed on the fuel electrode side of the fuel cell, the hydrogen passes through the gas-permeable fuel electrode and enters the electrolytic layer or hollow layer while supplying electrons to the fuel electrode. The fuel electrode may for example possess a porous structure in order to be gas-permeable.

Since this invention does not require an electrolytic layer, that section may form a hollow state (May be a multi-porous plastic layer or a multi-porous ceramic layer.) to serve as the hollow layer. This section need only be capable of separating the fuel electrode and the air electrode. The thickness of the hollow layer is usually in a range from one micrometer to 10 centimeters.

For example, when using a solid polymer electrolytic material as the electrolytic material, and the cation exchange film serves as the electrolytic material, then the following battery reaction occurs.
Air electrode (positive electrode):

1/2 O₂+2H⁺+2e⁻→H₂O (1)

Fuel electrode (negative electrode):

H2→2H⁺2e⁻ (2)

Total reaction:

1/2 O₂+H₂→H₂O (3)

The following battery reaction occurs when anion exchange film serves as the electrolytic material.
Air electrode (positive electrode):

1/2 O₂+H₂O+2e⁻→20H⁻ (4)

Fuel electrode (negative electrode):

H2+20H⁻→2H₂O+2e⁻ (5)

Total reaction:

1/2 O₂+H₂→H₂O (6)

Therefore, water which is a reactive substance must be drained from specified locations in the electrolytic layer or hollow layer. Since the gas must also flow smoothly in the case of non-reactive gas, a gas drainage port is preferably formed in the electrolytic layer or hollow layer. The non-reactive gas and the water from a reactive substance can both be simultaneously removed from one drainage port to outside the system.

Fuel cells are classified into various types according to the electrolytic material they utilize. These types for example include alkali fuel cells, solid oxygen fuel cells (SOFC), molten fuel cells, phosphoric acid fuel cells (PAFC), polymer electrolyte fuel cells (PEFC/PEM), and molten carbonate fuel cells, etc. The present invention can utilize any of these fuel cell types. However phosphoric acid fuel cells, solid polymer electrolyte fuel cells, solid oxygen fuel cells or methanol direct-type fuel cells (Of course, in this invention the hydrogen-based/oxygen-based mixed gas of the present invention is utilized rather than methanol as a fuel.) are preferably used, and solid polymer electrolyte fuel cells and solid oxygen fuel cells are particularly preferable.

In the present invention, a hollow layer may be utilized instead of the electrolytic layer. Needless to say, the hollow layer is more advantageous in terms of cost.

Solid polymer electrolyte fuel cells use solid polymer electrolytic material, and polymer ion exchange films of different types can be used as this solid polymer electrolytic material. Examples of these ion exchange films are described in page No. 100 - 103 and particularly on page No.101 Table 1 of "Fuel Cell Generating Systems" published by Ohm Inc. on March 15, 1993. These examples utilize "phenylsulfonate resin", "polystyrene sulfonate", "polytrifluorostyrenesulfonate", and "(poly)perfluorocarbon sulfonate" in the following formulas. 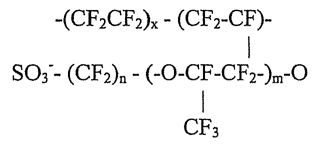 (Here, x is the change due the degree of polymerization.). Items where M ≥ 1, n = 2 are marketed under the product name Nafion. Items where m = 0, n = 2 marketed under the product name DOW. These substances are described on Pages 116 - 128, and in particular on page 120 Table 6, 1 of "Fuel Cell Electrical Power Generation" published by Corona Inc. on January 30, 2001.

The structures of solid state polymer electrolyte fuel cells are described on page 102, Fig. 2 and FIG. 3 of "Fuel Cell Design Technology" published by Science Forum Inc. on September 30, 1987, and on pages 118, and pages 122 of "Fuel Cell Electrical Power Generation" on June 29, 2001; and on pages 46-47 of "Nikkei Mechanical Supplemental Issue) published by Nikkei Business Publications Inc.

The embodiments of this invention are described next. However the present invention is not limited in any way by these embodiments.

### First Embodiment

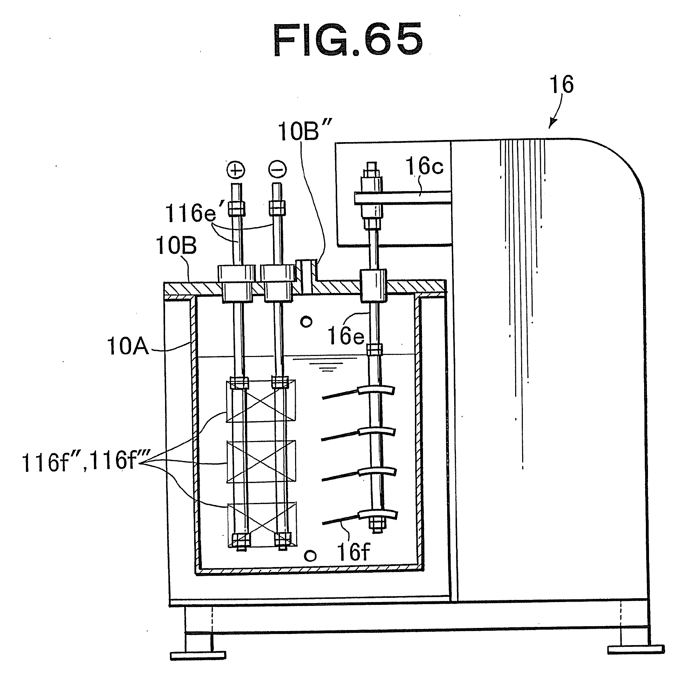

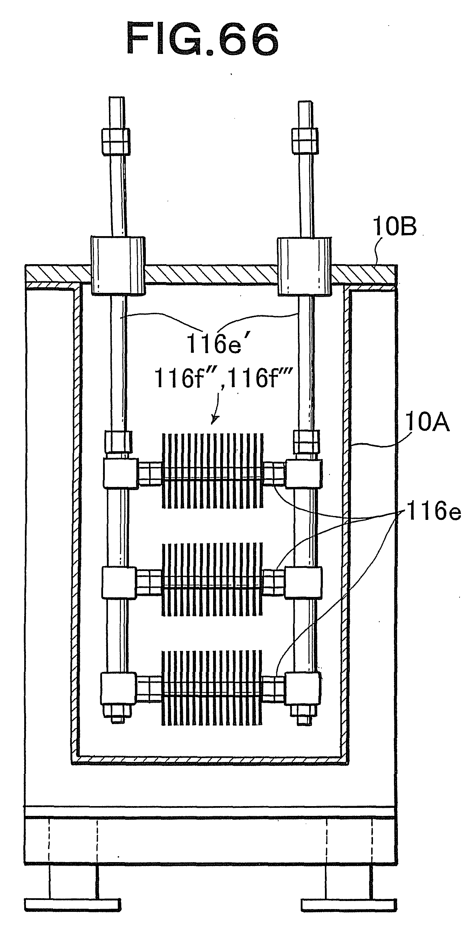

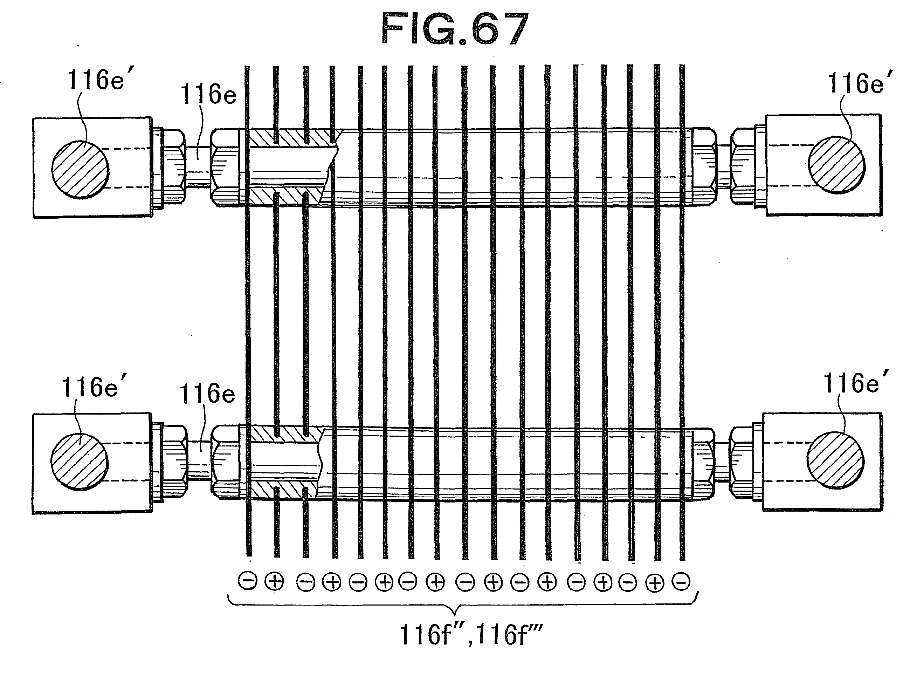

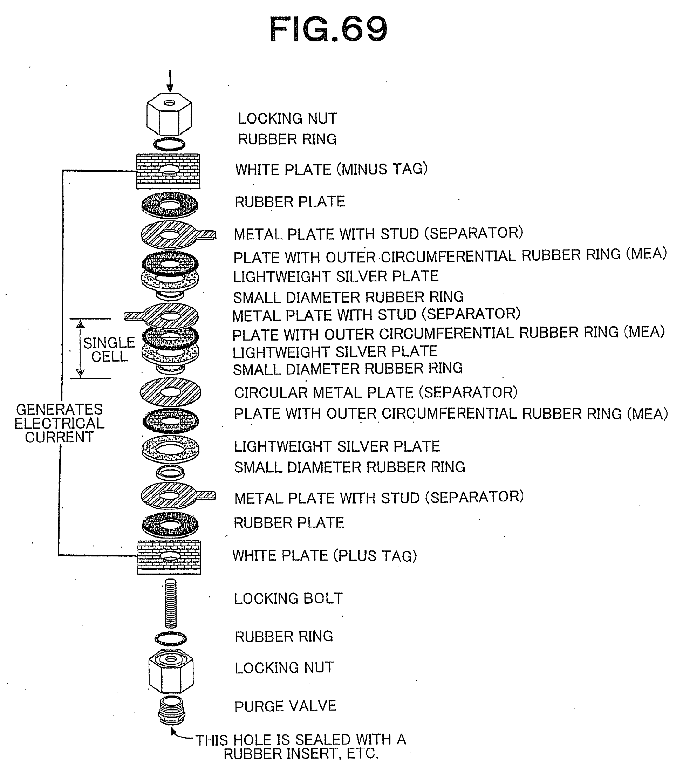

The hydrogen-based/oxygen-based mixed gas of Fig. 65 through FIG.67 of the present embodiment utilizes the following.
(a) Vibro-stirring means
   Japan Techno Co., Ltd. Product name: Ultravibration Alpha- Agitator Model Alpha-1(An insulated vibro-stirring means designed so that electrical current flowing in the electrolyte fluid does not flow to the vibration motor.)
   Vibration motor: 75 watt × 200 volts × 3-phase
   Low-frequency vibration motor made by Murakami Seiki Seisakusho (Corp.)
   Product name: Uras Vibrator
   Vibrating rod: Two rods, 16 millimeters in diameter, SUS304
   Vibrating blade: Four blades, 6 millimeters long, SUS304
   Stationary member: SUS304
   Resilient sheet: Product name: Teflon (Registered trademark) sheet
(b) Stationary electrodes
   Plus electrode: 27 titanium blades covered with platinum plating
   Minus electrode: 24 titanium blades
(c) Inverter: Fuji Electric (Inc.) Product name FVR-E11S used after adjusted to 45 Hertz
(d) Rectifier (for vibration motor): Power Master made by Chuo Seisakusho (Corp.)) [Registered trademark], 200 volts
(e) Electrolytic tank: Manufactured from (SUS304) stainless steel (inner surface of heat-resistant polyvinyl plastic)
   Inner diameter 220 mm × 320 mm × 400 mm (H)
   Lid member is made of SUS304.
(f) Seal between lid member and vibrating rod (See FIG. 68)
   Gap is filled with silicon to form a complete seal so that no gas leaks occur even from vibration from the vibration motor shaft.
(h) To convey the hydrogen-based/oxygen-based mixed gas from the electrolysis tank to the fuel cell, the safety devices in FIG. 59 and FIG. 60 were used, however this embodiment utilizes the system in FIG. 72 that is jointly used with the safety device in FIG. 59 and FIG. 60.
(i) Electrolyte fluid: Water required for electrolysis was added to a solution of distilled water added with KOH at 20 percent by weight at a temperature 55°C and pH of 10.
   In this embodiment, the hydrogen-based/oxygen-based mixed gas was manufactured at approximately 1,000 liters per minute at approximately three volts and 100 amperes.
(j) Fuel cell structure and usage method: Electrical power was generated utilizing a commercially available compact solid polymer electrolyte fuel cell and the hydrogen-based/oxygen-based mixed gas of this invention. The structure of this cell was the same as that shown in FIG. 69. A cross sectional view of this assemble fuel cell is shown in FIG.70. The hydrogen-based/oxygen-based mixed gas is supplied from an opening (In the commercially available device, hydrogen gas is supplied from this opening.) on the left side in FIG.70, and the opening (In the commercially available device, gas containing oxygen such as air is supplied from this right side.) on the right side is sealed.

The structure of the commercially available compact solid polymer electrolyte fuel cell of FIG. 69 utilizes a film/electrode-coupled on a plate with a circumferential rubber ring or in other words an MEA possessing the functions of a single cell as described in pages 146 through 147 of "All About Fuel Cells" published by Nihon Jigyo Shuppansha on August 20, 2001 Konosuke Ikeda (editor). This structure utilizes solid polymer electrolytic with the product name Nafion enclosed between a minus electrode and a plus electrode and covered on the external circumference by a rubber ring. In this invention, the hydrogen-based/oxygen-based mixed gas is supplied from holes in the center of the upper section as shown in the drawing on FIG.69. The holes in the center on the lower section in the drawing in FIG.69 are sealed by rubber inserts.

When this battery as a single cell was used to generate electricity with the method essentially used for the commercially available compact solid polymer electrolyte fuel cell (example of the related art), the outputs were 0.6 to 0.7 volts, 0.15 to 0.2 watts. However the output was 2.5 times higher in the case of the first embodiment at 0.6 volts and 0.5 watts.

When electricity was generated with the method of the related art, heat of nearly 100°C was generated during long term use that made long term operation impossible. However in the case of this embodiment not much heat was generated so long term operation is possible.

As shown in FIG. 70, when utilizing this structure as a single cell, the fuel electrode is used as the connection terminal 1 and the air electrode is used as the connection terminal 3. When utilizing this structure as a double cell, the fuel electrode is used as the connection terminal 3, and the air electrode as the connection terminal 2. When utilizing this structure as a triple cell, the fuel electrode is used as the connection terminal 1, and the air electrode as the connection terminal 2.

The electrolytic layer of this cell is equivalent to the plate with outer circumferential rubber ring in FIG. 69. This layer is multi-porous polymer (Usually, plasticized triethylphosphate comprising a multi-porous film of polyperfluorocarbon sulfonate: product name Nafion made by the Dupont Corporation) immersed in water. The reaction water generated by the reaction of hydrogen and oxygen seeps outward, draining externally.

When the electrolytic layer was removed, and a hollow layer or in other words and air layer was formed in that section, and the hydrogen-based/oxygen-based mixed gas of this invention was supplied via a gas-permeable electrode, the moisture (H₂0) contained within the mixed gas perhaps functioned as the electrolytic layer or in any case, the surprising fact was discovered that even without an electrolytic layer, electricity was generated absolutely the same as when an electrolytic layer was present. When a hollow layer was utilized, then platinum or palladium may also be used as well as nickel

When the hydrogen-based/oxygen-based mixed gas obtained in the first embodiment was subjected to analysis by the previously described analysis methods, the results were nearly identical to data for the processed gas in Table 1. A unique feature was the H, H₃, HD and OH contained in the gas. The presence of these elements is assumed to be a factor in the high activation and high energy generation. Another unique feature was the rich hydrogen and that the ratio of hydrogen to oxygen was not 2-to-1,

The hydrogen-based/oxygen-based mixed gas or hydrogen-based gas possessing these type of elements was found only when utilizing the vibro-stirring means, and could not be found in hydrogen-based gas, oxygen gas, or hydrogen-based/oxygen-based mixed gas obtained by any other method.

The elements contained in the gas are considered extremely unstable. However, these elements in the hydrogen-based/oxygen-based mixed gas or hydrogen-based gas utilizing the vibro-stirring means of this invention were found to be present for a one to two month period in sealed containers or pressurized containers.

### Second Embodiment

The gas generated in the second embodiment was not passed through a safety device and sent directly to a fuel cell as in the first embodiment, rather after storage in a gas accumulator for one day, the hydrogen-based/oxygen-based mixed (raw) gas was directly supplied to the hydrogen gas supply port of the fuel cell of the first embodiment without passing through the seal port of FIG. 59 or the flame stopper tank of FIG. 60. However effects identical to the first embodiment were obtained. Moreover, when the raw gas was analyzed in the same way as previously, nearly the same data and analysis results as for the previous raw gas were obtained. Another point common with the above gas is that is contained about the same the H, H₃, HD and OH content.

### Third Embodiment

In the present embodiment, the hydrogen-based/oxygen-based mixed gas generating means utilizing the vibro-stirring means of Fig. 50 was comprised of the following.
(a) Vibro-stirring means
   Japan Techno Co., Ltd. Product name: Ultravibration Alpha- Agitator Model Alpha-2
   Vibration motor: 150 watt × 200 volts × 3-phase
   Vibrating rod: Two rods, 16 millimeters in diameter, SUS304
   Vibrating blade: Five blades, 6 millimeters long, SUS304
   Electrode support blades:
   Minus electrode: 3 sheets, SUS304
   Plus electrode: Two sheets covered with platinum plating, (10 µm thick) SUS304
(b) Inverter: Fuji Electric (Inc.) Product name FVR-E11S used after adjusted to 55 Hertz
(c) Rectifier: Hi-Mini made by Chuo Seisakusho (Corp.)), 200 volts
(d) Electrolytic tank: Manufactured from (SUS304) stainless steel (inner surface of heat-resistant polyvinyl plastic)
   Inner diameter 220 mm × 320 mm × 400 mm (H)
   Lid member is made of SUS304.
(e) Seal between lid member and vibrating rod (See FIG. 68)
   Gap is filled with silicon to form a complete seal so that no gas leaks occur even from vibration from the vibration motor shaft.
(f) To convey the hydrogen-based/oxygen-based mixed gas from the electrolysis tank to the fuel cell, the safety device in FIG. 59 and FIG. 60 is used. However this embodiment utilizes the system in FIG. 72 that is jointly used with the safety device in FIG. 59 and FIG. 60.
(g) Electrolyte fluid: Water required for electrolysis was added to a solution of distilled water added with KOH at 20 percent by weight at a temperature 55°C and pH of 10.

In this embodiment, the hydrogen-based/oxygen-based mixed gas was manufactured at approximately 1,000 liters per minute at approximately three volts and 100 amperes.

When the hydrogen-based/oxygen-based mixed gas obtained by the above described means was subjected to analysis by the previously described analysis methods, the results were nearly identical to data for the processed gas in Table 1, and another point in common (with the previous embodiment) is that the content of H, H₃, HD, H₂O, and, OH was confirmed as approximately the same. This hydrogen-based/oxygen-based mixed gas was supplied to the solid polymer electrolyte fuel cell shown in FIG. 73. However, this hydrogen-based/oxygen-based mixed gas supplied to the fuel cell and the non-reactive gas elements and moisture from reactive substances were drained to outside the air electrode.

Both the air electrode and the fuel electrode were gas-permeable platinum catalytic single electrodes. The solid polymer electrolytic film was air-conductive material of polyperfluorocarbon sulfonate under the product name Nafion made by the Dupont Corporation) and immersed in water.

Results from generating electricity were the same as obtained for the first embodiment.

Other than the fact that the polymer electrolytic layer was removed from the solid polymer electrolytic type fuel cell, and a hollow layer (air layer) was formed in that section, the electrical power generating results were the same when tests were performed.

### Fourth Embodiment

This embodiment is the same as the first embodiment, with the exception that the fuel cell shown in FIG. 41 was utilized as the fuel cell.

The solid electrolytic layer was a gas-permeable ion conducting thin film (less than 500 nm) interposed between a platinum gas-permeable minus electrode and a platinum plus electrode. The minus electrode was gas-permeable.

Polyperfluorocarbon sulfonate material with the product name Nafion was utilized as the gas-permeable ion conducting thin film. The gas-permeable minus electrode utilized powdered platinum shaken and attached to multi-porous, thin, conductive carbon paper.

In this embodiment, the surprising fact was revealed that approximately the same electrical power was obtained when compared to a fuel cell utilizing hydrogen gas in a commercially available hydrogen gas tank. This (electrical power) is characteristic of the hydrogen-based/oxygen-based mixed gas utilizing the vibro-stirring means.

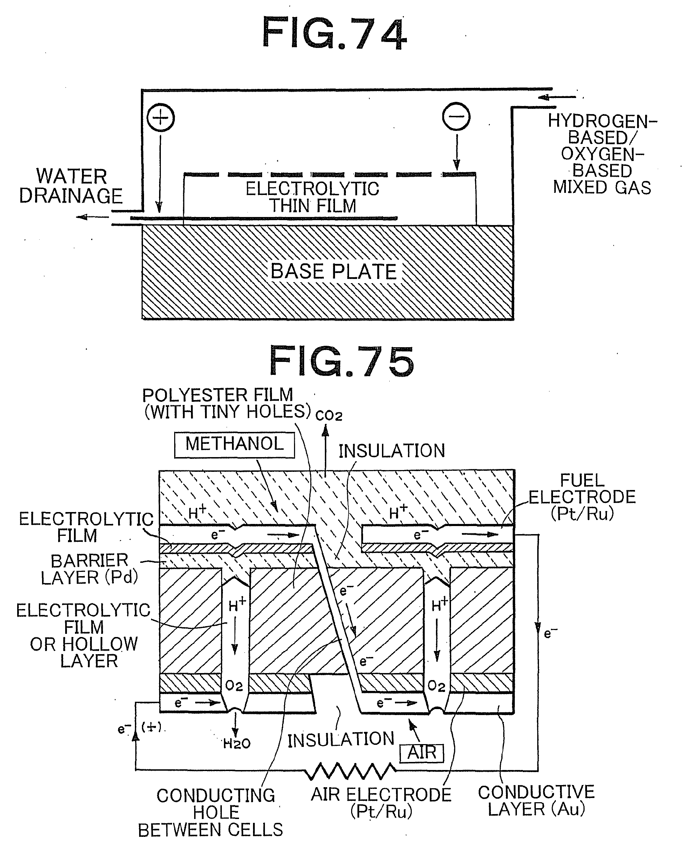

Except for the utilization of the polymer electrolytic film as the hollow layer in the fuel cell shown in FIG. 74, under the same conditions, the same electrical power effect was obtained in the fourth embodiment.

### Fifth Embodiment

The vibration motor in the first embodiment was changed to an RF vibration motor under the product name of Hi-FLURAS KHE2-2T, and except for the fact that the inverter was oscillated at 120 Hertz, nearly the same effects as in the first embodiment were obtained under the same conditions.

### Sixth Embodiment

This embodiment utilized the hydrogen-based/oxygen-based mixed gas generating means of FIG.35 and the following items were used. The state with the vibrating blades installed onto the vibrating rod are shown in FIG. 48 though the number of blades such as vibrating blades is different; and a cross sectional view of that state is shown in FIG. 50. The number of electrode support blades (negative electrode member) and the vibrating blades are related in item (a) shown next.
(a) Vibro-stirring means
   Japan Techno Co., Ltd. Product name: Ultravibration Alpha- Agitator Model Alpha-2
   Vibration motor: 150 watt × 200 volts × 3-phase
   Low-frequency vibration motor made by Murakami Seiki Seisakusho (Corp.) Product name:
   Uras Vibrator
   Vibrating rod: Two rods, 16 millimeters in diameter, SUS304
   Vibrating blade: Five blades, 6 millimeters long, SUS304
   Electrode support blades:
   Minus electrode: 3 sheets, SUS304
   Plus electrode: Two sheets covered with platinum plating, (10 µm thick) SUS304
   Stationary member: Made of SUS304
   Resilient sheet: Product name: Teflon (Registered trademark) sheet
(b) Inverter: Fuji Electric (Inc.) Product name FVR-E11S used after adjusted to 55 Hertz
(c) Rectifier: Rectifier (for vibration motor): Power Master made by Chuo Seisakusho (Corp.)) [Registered trademark], 200 volts
(d) Electrolytic tank: Manufactured from SUS304stainless steel (inner surface of heat-resistant polyvinyl plastic)
   Inner diameter 220 mm × 320 mm × 400 mm (H)
   Lid member is made of SUS304.
(e) Seal between lid member and vibrating rod (See FIG. 68)
   Gap is filled with silicon to form a complete seal so that no gas leaks occur even from vibration from the vibration motor shaft.
(f) To convey the hydrogen-based/oxygen-based mixed gas from the electrolysis tank to the fuel cell, the safety device in FIG. 59 and FIG. 60 was used. However this embodiment utilizes the system in FIG. 72 that is jointly used with the safety device in FIG. 59 and FIG. 60.
(g) Electrolyte fluid: Water required for electrolysis was added to a solution of distilled water added with KOH at 20 percent by weight at a temperature 55°C and pH of 10 (There is no need to cool the electrolytic fluid since it is never heated to more than about 55°C.).
   In this embodiment, the hydrogen-based/oxygen-based mixed gas was manufactured at approximately 1,000 liters per minute at approximately three volts and 100 amperes.
(h) Composition of hydrogen-based/oxygen-based mixed gas
   Nearly the same gas data as for the processed gas data in Table 1 was obtained when analyzed by the same previously described methods the same as the previous embodiment.
(i) Fuel cell structure and usage method:
   A fuel cell structure shown in FIG. 73 was utilized (See FIG. 3-1-1 and FIG. 3-1-2 "Latest Advances in Fuel Cell Development" on June 29, 2001 of "Nikkei Mechanical Supplemental Issue published by Nikkei Business Publications Inc.).

The product with the commercial name Nafion was utilized as polymer solid electrolytic material film shown in FIG. 73.In the electrode, platinum catalyst in tiny particles of carbon black was employed as the supporting catalyst. Electrolytic material polymer was dispersed into the platinum catalyst, and after screen printing this on carbon paper the electrode was obtained. Nafion was interposed between these electrodes, and a single cell made by heat crimping of the film/electrode-coupled piece. These were stacked in a 20 sheet lamination shown on the lower section of FIG. 73.

The hydrogen-based/oxygen-based mixed gas of this invention was supplied from the fuel electrode (negative electrode) side and the waste from the reaction drained from the drainage port. In this embodiment, the air vent on the air electrode side is sealed (In the basic usage method in the structure in FIG. 73, the hydrogen is supplied to the fuel electrode, and the air is supplied to the air electrode so that supply ports are respectively available on the fuel electrode side and the air electrode side so that there is no need to provide air or in other words, oxygen to the air electrode side in order to provide the hydrogen-based/oxygen-based mixed gas of this invention.)

In this embodiment, electrical power can be generated continuously for a two day period while maintained below 80°C even without water cooling. However, when used with the basic method in FIG.73, the polymer film will be destroyed if the cell rises above 100°C without cooling. The electrical power generating rate in the case of this invention was a 30 to 40 percent improvement compared to the basic usage method.

### Seventh Embodiment

As shown in the sixth embodiment, installing the support blade on the side opposite the vibrating blade renders the advantage that contact will not occur, even if the distance between the electrodes is shortened.

Utilizing this type of support blade and vibration blade allows eliminating the space for installing the stationary electrodes of the first and second embodiments so that vibration stirring electrodes can be set on both ends of the electrode tank of the sixth embodiment.

Electrical power generation was performed by utilizing the fuel cell of the sixth embodiment that makes use of the hydrogen-based/oxygen-based mixed gas generating means.

The hydrogen-based/oxygen-based mixed gas of this embodiment also possessed the same composition and characteristics as the processed gas shown in Table 1.

### First Comparative Example

Hydrogen-based gas was supplied to the fuel cell of the sixth embodiment from a commercially available hydrogen gas tank, and air was supplied from the air port of the fuel cell and electricity was generated.

Electrical generation in the sixth and seventh embodiments as well as the first comparative example is shown below in Table 2.

**[Table 2]**

| | Fuel gas pressurization (liters per minute) | Voltage (V) | Electrical current generated (A) |
|---|---|---|---|
| First comparative example | 1.2 ~ 1.3 | 24 | 2 ~ 3 |
| Sixth embodiment | 1.2 ~ 1.3 | 24 | 2.5 ~ 4.5 |
| Seventh embodiment | 2.0 ~ 2.5 | 24 | 5.0 ~ 9.0 |

### Eighth Embodiment

The eighth embodiment utilized the fuel cell shown in FIG. 74 as the fuel cell. However all other conditions were the same as the first embodiment.

The structure of the fuel cell shown in FIG. 74 is described in the Vol. 343 issue of "Nature" on pages 547 through 548 in the February 8, 1990.

The solid state electrolytic film is a gas-permeable ion-conductive thin film (500 nanometers or less) interposed between a platinum gas-permeable fuel electrode and a platinum air electrode and the fuel electrode is gas-permeable.

An inorganic material (γ-A100H) of low density Bohmite was utilized as the gas-permeable ion-conductive thin film. The gas-permeable fuel electrode was powdered platinum affixed by sprinkling onto multi-porous, thin, conductive carbon paper.
The surprising fact was revealed that the present embodiment yielded 3 to 3.5 times the electrical power compared to the fuel cell described in "Nature". This results is characteristic of the hydrogen-based/oxygen-based mixed gas obtained utilizing a vibro-stirring means.

Also, an experiment was performed where the ceramic electrolytic material was replaced with a hollow layer (air layer) and approximately the same generated electrical power was obtained.

### Ninth Embodiment

This embodiment utilized the "Micro Fuel Cell" of the Manhattan Scientific Corporation shown on pages 68 and 69 and in particular in FIG. 44 of "Innovation in Cars, Cell Phones and Home Power Supply" in "Cutting Edge of Fuel Cell R&D" in the "Nikkei Mechanical Supplemental Issue) published by Nikkei Business Publications Inc. The structure of this cell is shown in FIG. 75. The fuel cell functioned such that the hydrogen-based/oxygen-based mixed gas (for both cases of raw gas and processed gas) of this invention was supplied instead of methanol, to the methanol supply port of this cell, and the air supply port was sealed.
More favorable electrical generating results were obtained than when utilizing methanol as the fuel.
An experiment was made where the ceramic electrolytic material was replaced with a hollow layer (air layer) however approximately the same generated electrical power was obtained.

### Tenth Embodiment

In this embodiment, the hydrogen-based/oxygen-based mixed gas (for both cases of raw gas and processed gas) of this invention was supplied instead of hydrocarbon and air mixed gas to the single-chamber solid electrolytic fuel cell disclosed in JP-A No. 280015/2002 and 0.5 watts per centimeter of electrical power was obtained.

The structure of this single-chamber solid electrolytic fuel cell is disclosed in JP-A No. 280015/2002 however a description is given next.

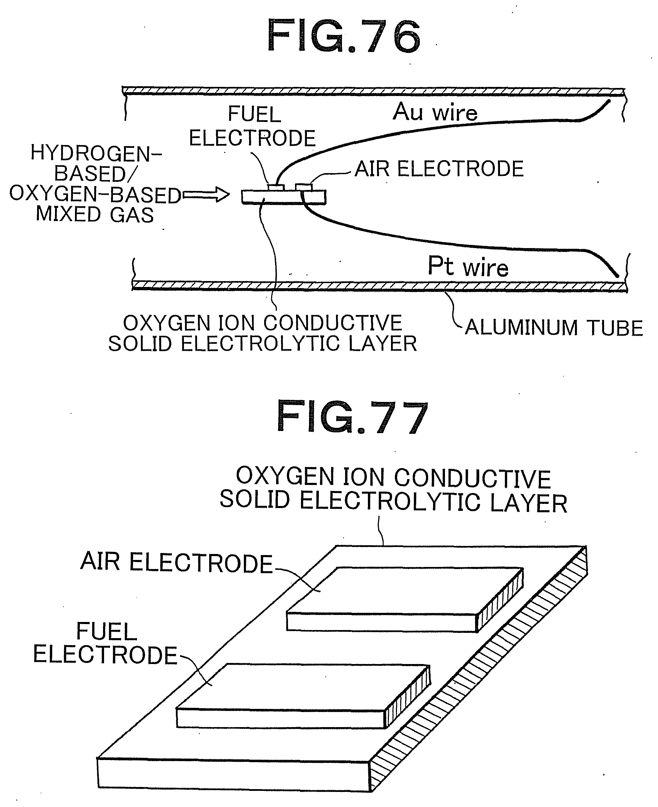

This single-chamber solid electrolytic fuel cell is made up of respectively of an air electrode and fuel electrode on the same surface of a disk-shaped oxygen ion conductive solid electrolytic material as shown in FIG.76 and FIG. 77. This single-chamber solid electrolytic fuel cell is housed in an aluminum tube and used in a state where a gaseous mixture of methane and air flows through this aluminum tube.

Here, La_{1-z}Sr_{z}Ga_{1-W}M_{gW}O_{3-δ} or Ce_{1-y}Ln_{y}O_{2-δ} is utilized as the oxygen ion-conductive solid electrolytic material. The air electrode utilizes Ln₁₋ₓSrₓCoO_{3±δ} (Here, Ln: rare earth elements, in particular La, Sm, Gd or Yb) and particularly Sm_{0.5}Sr_{0.5}CoO_{3± δ} doped with strontium. The fuel electrode is made from nickel, and a mixed compound (Ce₁₋⁻_{y}Sm_{y}O_{2-δ}) of cerium oxide doped with samarium along with a 1 percent mass additive of palladium. The mixed compound of cerium oxide doped with samarium utilizes Ce_{0.8}Sm_{0.2}O_{1.9} (SDC). The mixture ofNi to SDC is a weight ratio of 7 to 3. The air electrode and the fuel electrode are formed with a gap so as to form a specified air gap as shown in FIG. 77.

This single-chamber solid electrolytic fuel cell was fabricated as follows. A fuel electrode is first of all formed on the surface of the oxygen ion-conductive solid electrolytic material. Nickel oxide powder and SDC powder are weighed to specified amounts, and mix-pulverized using a suitable organic solution. Then a specified amount of palladium oxide powder is mix-pulverized to adjust the paste-shaped electrode material. This is then screen printed onto the oxygen ion-conductive solid electrolytic material and heat-treated at 1400°C.

An air electrode is next formed at a specified gap with the fuel electrode on the same side as the surface where the fuel electrode was formed on the oxygen ion-conductive solid electrolytic material. The Ln₁₋ₓSrₓCoO_{3±} (Here, Sm_{0.5}Sr_{0.5}CoO_{3± δ} was used.) was liquefied, pulverized to adjust the paste-shaped electrode material. This was then screen printed onto the oxygen ion-conductive solid electrolytic material on the same surface as the fuel electrode and heat-treated at 900°C.

The gap between the electrodes was 3×10⁻³m. Also, the Pd additive for the fuel electrode was set to 5 percent by weight, and the oxygen ion-conductive solid electrolytic material that was used was 7×10⁻³m, 0.3×10⁻³m thick, and possessed a surface roughness of Ra0.06×10⁻⁶m.

### Eleventh Embodiment

In this embodiment, electricity was generated by utilizing the hydrogen-based/oxygen-based mixed gas generating means utilized in the first embodiment, the hydrogen-based/oxygen-based mixed gas that was generated was separated into hydrogen-based gas and oxygen-based gas by using an oxygen separator apparatus, and supplying hydrogen-based gas from the fuel electrode side, and supplying oxygen-based gas from the air electrode side of the fuel cell used in the sixth embodiment. A film divider was formed between the minus electrode and the plus electrode within the electrolysis tanks, and gas elements mainly comprised of hydrogen generated by the minus electrode or in other words hydrogen-based gas; and gas elements mainly constituted of oxygen generated by the plus electrode or in other words oxygen-based gas were separated at their generation step, trapped, and the hydrogen-based gas supplied to the fuel electrode of the fuel battery, and the oxygen-based gas supplied to the air electrode of the fuel cell, and electrical generation yielded exactly the same results. These results showed that the electrical generation rate was increased approximately five times compared to when generating electricity by utilizing the commercially available oxygen tank and the hydrogen tank. There is little room for doubt that the gas components comprising the main elements of the hydrogen-based gas, or in other words, the H and, H₂ and, H₃ and/or HD and, OH contributed to this result.

### Twelfth Embodiment

In the present embodiment, the hydrogen-based/oxygen-based mixed gas generating means of Fig. 65 through FIG. 67 was comprised of the following.
(a) Vibro-stirring means
   Japan Techno Co., Ltd. Product name: Insulated Ultravibration Alpha- Agitator Model Alpha-3
   Two units installed with the vibrating blades respectively facing each other in the electrolytic tank (shown in FIG.49.)
   Vibration motor: 250 watts × 200 volts × 3-phase
   Low-frequency vibration motor made by Murakami Seiki Seisakusho (Corp.) Product name:Uras Vibrator
   Vibrating rod:Two rods, 16 millimeters in diameter, made from SUS304
   Vibrating blade: Seven blades, 6 millimeters long, made from SUS304
   Stationary member: Made from SUS304
   Resilient sheet: Product name: Teflon (Registered trademark) sheet
   One of the Insulated Ultravibration Alpha- Agitators was used as the plus electrode, and the other was used as the minus electrode. A divider film was installed between these two units and gas elements comprised mainly of hydrogen gas or in other words, hydrogen-based gas, and gas elements comprised mainly of oxygen gas or in other words oxygen-based gas are separately sampled. The vibrating blades are made of SUS plate covered with platinum plating only in cases when the vibrating blades are used as the plus electrode.
(b) Inverter: Chuo Seisakusho (Corp.) used after adjusted to 50 Hertz.
(c) Rectifier (for vibration motor): Fuji Electric (Inc.) Product name FVR-C9S 200 volts
(d) Electrolytic tank: Manufactured from SUS304 stainless steel (inner surface of heat-resistant polyvinyl plastic)
   Inner diameter 700 mm × 500 mm × 500 mm (H)
   Lid member is made of SUS304.
(e) Seal between lid member and vibrating rod (See FIG. 68)
   Gap is filled with silicon to form a complete seal so that no gas leaks occur even from vibration from the vibration motor shaft.
(f) To convey the hydrogen-based/oxygen-based mixed gas from the electrolysis tank to the fuel cell, gas elements comprised mainly of hydrogen gas or in other words, hydrogen-based gas, and gas elements comprised mainly of oxygen gas or in other words oxygen-based gas were separated and both of the gases are passed through the safety device in FIG. 59. Gas elements comprised mainly of hydrogen gas or in other words, hydrogen-based gas were supplied to the fuel electrode on the fuel cell of the sixth embodiment; gas elements comprised mainly of oxygen gas or in other words oxygen-based gas were supplied to the air electrode on the fuel cell of the sixth embodiment, and electricity was generated.

For purposes of comparison, electrical power was generated by supplying hydrogen gas from the commercially available hydrogen gas tank to the fuel electrode side of the fuel cell of the sixth embodiment, and supplying air to the air electrode side.
This embodiment achieved a 50 percent increase in generated electrical power compared to the comparative example.

The reason for this improved electrical power generation is probably that elements comprised mainly of hydrogen gas or in other words, hydrogen-based gas of this embodiment included tiny amounts of H, H₃ and HD and OH and is a characteristic feature (as viewed from analysis results) of the gas of this invention.

The respective electrolytic layers in the single cells were replaced with a hollow layer however approximately the same generated electrical power was obtained.

### Thirteenth Embodiment

In the present embodiment, the hydrogen-based/oxygen-based mixed gas generating means of Fig. 52 through FIG. 53 was comprised of the following.
(a) Vibro-stirring means
   Vibration motor: 75 watt × 200 volts × 3-phase
   Made by Murakami Seiki Seisakusho Corp.
   Product name: Uras Vibrator Dual electrode, KEE-1-2B
   Vibrating rod: Two rods, 16 millimeters in diameter, made from SUS304.
   Vibrating blade: Four blades, 6 millimeters long, made from SUS304.
   The blade angle points obliquely downwards 15°C from the horizontal plane.
(b) Stationary electrodes
   Plus electrode: Eight pieces of stainless steel plate covered with platinum plating
   Minus electrode: Nine pieces of stainless steel plate.
(c) Inverter: Fuji Electric (Inc.) Product name FVR-C9S operates at 42 Hertz
(d) Rectifier (for vibration motor): Power Master made by Chuo Seisakusho, 200 volts
(e) Electrolytic tank: Manufactured from SUS304 stainless steel (inner surface of heat-resistant polyvinyl plastic)
   Inner diameter 320 mm × 220 mm × 400 mm (H) (used with sealed lid)
(f) Seal between lid member and vibrating rod (See FIG. 68)
   Synthetic rubber packing is affixed at top and bottom, and silicon is inserted into gap to form a seal.
(g) The system of FIG. 72 was utilized to convey the hydrogen-based/oxygen-based mixed gas from the electrolysis tank to the fuel cell. In order to measure the generated gas, a portion of the raw gas was recovered without passing through the system of FIG. 72, and other portion was recovered as processed gas added to the system of FIG. 72, and supplied for measurement.
(h) Electrolyte fluid: A solution of KOH added to distilled water to obtain a solution of 20 percent by weight was utilized. Electrolysis was performed at 40°C and the water that was consumed was replaced at intervals.
   The analysis results obtained from the gas are shown in Table. 1.
(i) Fuel cell structure and usage method:
   The fuel cell of the first embodiment was utilized unchanged. The results obtained were approximately the same as for the first embodiment.

### Fourteenth Embodiment

In the present embodiment, the hydrogen-based/oxygen-based mixed gas generating means of Fig. 65 through FIG. 67 was utilized to produce the hydrogen-based/oxygen-based mixed gas of the present invention. The results from analyzing the mixed gas that was obtained were approximately the same as the composition in Table 1.

## Claims

1. A hydrogen-based/oxygen-based mixed gas containing H and, H₂ and, H₃ and/or HD and, OH and, ¹⁶O and, and O₂.

2. A hydrogen-based/oxygen-based mixed gas according to claim 1, wherein H₂, is 55 to 70 percent mole, and H is 0.12 to 0.45 percent mole, and H₃, and HD total 0.03 to 0.14 percent mole, OH is 0.3 to 1.2 percent mole, ¹⁶O is 1.0 to 4.2 percent mole, and 02 is 5 to 27 percent mole

3. A hydrogen-based/oxygen-based mixed gas according to claim 1, wherein the hydrogen-based/oxygen-based mixed gas is obtained by a gas generating means including:
(A) an electrolysis tank for containing the electrolyte fluid;
(B) an electrolysis means including a pair of electrode comprised of a positive electrode member and a negative electrode member installed to make contact with the electrolyte fluid stored inside the electrolysis tank and, a power supply for applying a voltage across the positive electrode member and the negative electrode member;
(C) a vibro-stirring means for vibrating and stirring the electrolyte fluid stored inside the electrolysis tank;
(D) a gas trapping means for trapping the hydrogen-based gas and the oxygen-based gas.

4. Fuel for a fuel cell comprised of hydrogen-based/oxygen-based mixed gas according to any of claims 1 through 3.

5. A hydrogen-based gas including H and, H₂ and, H₃, and/or HD and,OH.

6. A hydrogen-based gas according to claim 5, obtained by a gas generating means including:
(A) an electrolysis tank for containing the electrolyte fluid;
(B) an electrolysis means including a pair of electrodes comprised of a positive electrode member and a negative electrode member installed to make contact with the electrolyte fluid stored inside the electrolysis tank and, a power supply for applying a voltage across the positive electrode member and the negative electrode member;
(C) a vibro-stirring means for vibrating and stirring the electrolyte fluid stored inside the electrolysis tank;
(D) a gas trapping means for trapping the hydrogen-based gas.

7. A fuel for a fuel cell comprised of the hydrogen-based gas of claim 5 or claim 6.

8. A fuel cell comprising: a single cell or a stack of single cells containing a fuel electrode, an air electrode, and a hollow layer or electrolytic layer interposed between that fuel electrode and air electrode.

9. A fuel cell including a single cell or a stack of single cells containing a fuel electrode, an air electrode, and a hollow layer or electrolytic layer interposed between the fuel electrode and air electrode, wherein, a supply port is formed on the fuel electrode side for supplying hydrogen-based gas, and the fuel electrode to which the hydrogen-based gas is supplied is gas-permeable, with the hydrogen-based gas generating means including:
(A) an electrolysis tank for storing the electrolyte fluid;
(B) an electrolysis means including a pair of electrodes made from a negative electrode member and a positive electrode member installed so as to make contact with the electrolyte fluid stored inside the electrolysis tank, and a power supply for applying a voltage across the negative electrode member and the positive electrode member;
(C) a vibro-stirring means for vibration-stirring the electrolyte fluid stored inside the electrolysis tank; and
(D) a gas trapping means for trapping hydrogen-based gas generated by the electrolyzing means for electrolyzing the electrolyte fluid stored inside the electrolysis tank.

10. A fuel cell including a single cell or a stack of single cells containing a fuel electrode, an air electrode, and a hollow layer or electrolytic layer interposed between the fuel electrode and air electrode, wherein the electrode on the side supplied with the hydrogen-based/oxygen-based mixed gas is gas-permeable, and a supply port is formed on the fuel electrode side or on both the fuel electrode side and the air electrode side for supplying hydrogen-based/oxygen-based mixed gas obtained by utilizing a hydrogen-based/oxygen-based mixed gas generating means including:
(A) an electrolysis tank for storing the electrolyte fluid;
(B) an electrolyzing means including a pair of electrodes made from a negative electrode member and a positive electrode member installed so as to make contact with the electrolyte fluid stored inside the electrolysis tank, and a power supply for applying a voltage across the negative electrode member and the positive electrode member;
(C) a vibro-stirring means for vibration-stirring of the electrolyte fluid stored inside the electrolysis tank; and
(D) a gas trapping means for trapping hydrogen-based gas and oxygen-based gas generated by the electrolyzing means for electrolyzing the electrolyte fluid stored inside the electrolysis tank.

11. A fuel cell according to claim 9 or claim 10, wherein the vibro-stirring means is comprised of at least one vibration generating means, and a vibration-stirring member made up of at least one vibrating rod linked to the vibration generating means and at least one vibrating blade installed on the vibrating rod.

12. An electrical generating method utilizing a fuel cell, wherein a vibrating motor is vibrated at 10 to 500 Hertz by utilizing an inverter, and that vibration is conveyed to a vibration adaptive absorbing means via a vibrating rod, and by oscillating the vibrating blades in one or multiple stages on the vibrating rod at an amplitude of 0.01 to 30.0 millimeters as well as a frequency of 500 to 30,000 revolutions per minute, a hydrogen-based gas obtained by electrolysis during vibration-stirring of the electrolyte fluid is supplied to the fuel cell.

13. An electrical generating method utilizing a fuel cell according to claim 12 wherein the hydrogen-based gas contains H and, H₂ and, H₃ and/or HD and, OH.

14. An electrical generating method utilizing a fuel cell, wherein a vibrating motor is vibrated at 10 to 500 Hertz by utilizing an inverter, and that vibration is conveyed to a vibration adaptive absorbing means via a vibrating rod, and by oscillating the vibrating blades in one or multiple stages on the vibrating rod at an amplitude of 0.01 to 30.0 millimeters as well as a frequency of 500 to 30,000 revolutions per minute, a hydrogen-based/oxygen-based mixed gas obtained by electrolysis during vibration-stirring of the electrolyte fluid is supplied to the fuel cell.

15. An electrical generating method utilizing a fuel cell, wherein the hydrogen-based/oxygen-based mixed gas contains H and, H₂ and, H₃ and/or HD and, OH and, ¹⁶O, and O₂.

16. An electrical generating method utilizing a fuel cell according to claim 15, wherein the hydrogen-based/oxygen-based mixed gas contains:
H₂: 55 to 70 mole%
H: 0.12 to 0.45 mole%
H₃ and HD totaling: 0.03 to 0.14 mole%
OH: 0.3 to 1.2 mole%
¹⁶O: 1.0 to 4.2 mole%
O₂: 5 to 27 mole%.

17. An electrical generating method utilizing a fuel cell for supplying electricity wherein, by oscillating a vibrating motor at 10 to 500 Hertz by utilizing an inverter, and transmitting that oscillation to a vibration adaptive absorbing means via a vibrating rod, and by oscillating the vibrating blades in one or multiple stages on the vibrating rod at an amplitude of 0.01 to 30.0 millimeters as well as a frequency of 500 to 30,000 revolutions per minute, a hydrogen-based/oxygen-based mixed gas obtained by electrolysis during vibration-stirring of the electrolyte fluid, is supplied as a fuel to the gas permeable fuel electrode side or both the gas permeable fuel electrode side and the gas-permeable air electrode side of a single cell or a stack of laminated single cells containing a fuel electrode, and an air electrode, and a hollow layer interposed between the fuel electrode and the air electrode; and generates electricity.

18. An electrical generating method utilizing a fuel cell according to claim 17, wherein the hydrogen-based/oxygen-based mixed gas contains H and, H₂ and, H₃ and/or HD and, OH and, ¹⁶O, and O₂.

19. An electrical generating method utilizing a fuel cell according to claim 18, wherein the hydrogen-based/oxygen-based mixed gas contains:
H₂: 55 to 70 mole%
H: 0.12 to 0.45 mole%
H₃ and HD totaling: 0.03 to 0.14 mole%
OH: 0.3 to 1.2 mole%
¹⁶O: 1.0 to 4.2 mole%
O₂: 5 to 27 mole%.
